# EUROPEAN PATENT SPECIFICATION

(11) **EP 3 434 750 B1**
(45) Date of publication and mention of the grant of the patent: **18.11.2020**
(21) Application number: 17769710.9
(22) Date of filing: 13.02.2017
(51) Int. Cl.: C09K 19/34, C09K 19/12, C09K 19/20, C09K 19/30, C09K 19/42, G02F 1/13, C09K 19/14, C09K 19/04

(54) **LIQUID-CRYSTAL COMPOSITION AND LIQUID-CRYSTAL DISPLAY ELEMENT**
FLÜSSIGKRISTALLZUSAMMENSETZUNG UND FLÜSSIGKRISTALLANZEIGEELEMENT
COMPOSITION DE CRISTAUX LIQUIDES ET ÉLÉMENT D'AFFICHAGE À CRISTAUX LIQUIDES

(30) Priority: 25.03.2016 JP 2016061531
(43) Date of publication of application: 30.01.2019
(73) Proprietor: JNC Corporation, Chiyoda-ku Tokyo 100-8105 (JP); JNC Petrochemical Corporation, Tokyo 100-0004 (JP)
(72) Inventor: MATSUDA, Naoko, Ichihara-shi Chiba 290-8551 (JP); SAITO, Masayuki, Ichihara-shi Chiba 290-8551 (JP)
(74) Representative: TBK
(86) International application number: PCT/JP2017/005107
(87) International publication number: WO 2017/163663

(56) References cited:
- WO-A1-2014/141365
- WO-A1-2014/155473
- WO-A1-2014/155491
- WO-A1-2015/029876
- DE-T5-112013 005 035
- JP-A- H0 977 692
- JP-A- 2011 153 202
- KR-A- 20150 124 977

## Description

### Technical Field

The invention relates to a liquid crystal composition, a liquid crystal display device including the composition, and so forth. In particular, the invention relates to a liquid crystal composition having positive dielectric anisotropy, and an active matrix (AM) device that includes the composition and has a mode such as a TN mode, an OCB mode, an IPS mode, an FFS mode or an FPA mode.

### Background Art

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type based on a production process. A classification based on a light source includes a reflective type utilizing natural light, a transmissive type utilizing backlight and a transflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship in two characteristics. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, small viscosity in the composition is preferred. Small viscosity at low temperature is further preferred. An elastic constant of the composition relates to a contrast of the device. In order to increase the contrast in the device, a large elastic constant in the composition is further preferred.

**Table 1. Characteristics of composition and AM device**

| No. | Characteristics of composition | Characteristics of AM device |
|---|---|---|
| 1 | Wide temperature range of a nematic phase | Wide usable temperature range |
| 2 | Small viscosity | Short response time |
| 3 | Suitable optical anisotropy | Large contrast ratio |
| 4 | Large positive or negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |

Optical anisotropy of the composition relates to a contrast ratio in the device. According to a mode of the device, large optical anisotropy or small optical anisotropy, more specifically, suitable optical anisotropy is required. A product (Δn × d) of the optical anisotropy (Δn) of the composition and a cell gap (d) in the device is designed so as to maximize the contrast ratio. A suitable value of the product depends on a type of the operating mode. In a device having a mode such as TN mode a suitable value is about 0.45 micrometer. In the above case, a composition having large optical anisotropy is preferred for a device having a small cell gap. Large dielectric anisotropy in the composition contributes to low threshold voltage, small electric power consumption and a large contrast ratio in the device. Accordingly, the large dielectric anisotropy is preferred. Large specific resistance in the composition contributes to a large voltage holding ratio and the large contrast ratio in the device. Accordingly, a composition having large specific resistance at room temperature and also at a temperature close to the maximum temperature of the nematic phase in an initial stage is preferred. The composition having large specific resistance at room temperature and also at a temperature close to the maximum temperature of the nematic phase even after the device has been used for a long period of time is preferred. Stability of the composition to ultraviolet light and heat relates to a service life of the liquid crystal display device. In the case where the stability is high, the device has a long service life. Such characteristics are preferred for an AM device use in a liquid crystal projector, a liquid crystal television and so forth.

A composition having positive dielectric anisotropy is used in an AM device having the TN mode. A composition having negative dielectric anisotropy is used in an AM device having the VA mode. In an AM device having the IPS mode or the FFS mode, a composition having positive or negative dielectric anisotropy is used. In an AM device having a polymer sustained alignment (PSA) mode, a composition having positive or negative dielectric anisotropy is used. Compounds contained in a first component in the invention are disclosed in Patent literature Nos. 1 to 2 described below. Compounds contained in a second component in the invention are disclosed in Patent literature Nos. 3 to 6 described below. Liquid crystal compositions comprising compounds of the first component and compounds of the second component in the invention are disclosed in Patent literature Nos. 7 to 12.

### Citation List

### Patent Literature

Patent literature No. 1: WO 2004/48501 A.
Patent literature No. 2: WO 1996/11897 A.
Patent literature No. 3: JP H09-077692 A.
Patent literature No. 4: JP H10-114690 A.
Patent literature No. 5: JP 2010-275390 A.
Patent literature No. 6: WO 2010/131594 A.
Patent literature No. 7: WO 2015/029876 A1
Patent literature No. 8: DE 11 2013 005035 T5.
Patent literature No. 9: KR 2015 0124977 A.
Patent literature No. 10: WO 2014/141365 A1.
Patent literature No. 11: WO 2014/155491 A1.
Patent literature No. 12: WO 2014/155473 A1.

### Summary of Invention

### Technical Problem

One of aims of the invention is to provide a liquid crystal composition satisfying at least one of characteristics such as high maximum temperature of a nematic phase, low minimum temperature of the nematic phase, small viscosity, suitable optical anisotropy, large dielectric anisotropy, large specific resistance, high stability to ultraviolet light, high stability to heat and a large elastic constant. Another aim is to provide a liquid crystal composition having a suitable balance regarding at least two of the characteristics. Another aim is to provide a liquid crystal display device including such a composition. Another aim is to provide an AM device having characteristics such as a short response time, a large voltage holding ratio, low threshold voltage, a large contrast ratio and a long service life.

### Solution to Problem

The invention concerns a liquid crystal composition that has positive dielectric anisotropy, and contains at least one compound selected from the group of compounds represented by formula (1) as a first component and at least one compound selected from the group of compounds represented by formula (2) as a second component, wherein a proportion of the second component is 15% by weight to 50% by weight, and a liquid crystal display device including the composition: 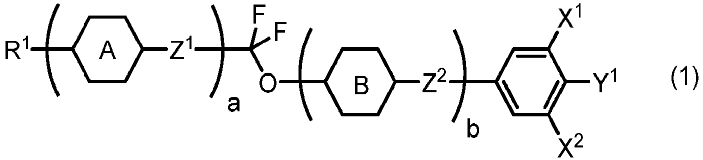 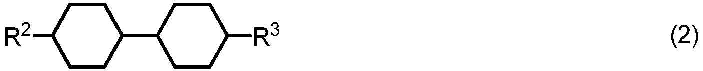 wherein, in formula (1) and formula (2), R¹ is alkyl having 1 to 12 carbons, alkoxy having 1 to 12 carbons or alkenyl having 2 to 12 carbons; R² and R³ are independently alkenyl having 2 to 12 carbons; ring A and ring B are independently 1,4-cyclohexylene, 1,4-cyclohexenylene, 1,4-phenylene, 1,4-phenylene in which at least one hydrogen is replaced by fluorine or chlorine, tetrahydropyran-2,5-diyl, 1,3-dioxane-2,5-diyl, pyrimidine-2,5-diyl, or pyridine-2,5-diyl, and at least one ring A is tetrahydropyran-2,5-diyl or 1,3-dioxane-2,5-diyl; Z¹ and Z² are independently a single bond, ethylene, vinylene, methyleneoxy, carbonyloxy or difluoromethyleneoxy; X¹ and X² are independently hydrogen or fluorine; Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; a is 1, 2, 3 or 4; b is 0, 1, 2 or 3; and a sum of a and b is 4 or less.

### Advantageous Effects of Invention

An advantage of the invention is a liquid crystal composition satisfying at least one of characteristics such as high maximum temperature of a nematic phase, low minimum temperature of the nematic phase, small viscosity, suitable optical anisotropy, large dielectric anisotropy, large specific resistance, high stability to ultraviolet light, high stability to heat and a large elastic constant. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, low threshold voltage, a large contrast ratio and a long service life.

### Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1,4-cyclohexylene or 1,4-phenylene, and has rod-like molecular structure. "Polymerizable compound" is a compound to be added for the purpose of forming a polymer in the composition. At least one compound selected from the group of compounds represented by formula (1) may be occasionally abbreviated as "compound (1)." "Compound (1)" means one compound or two or more compounds represented by formula (1). A same rule applies also to any other compound represented by any other formula. An expression "at least one piece of" in the context of "replaced by" means that not only a position but also the number thereof may be selected without restriction.

The liquid crystal composition is prepared by mixing a plurality of liquid crystal compounds. An additive is added to the composition for the purpose of further adjusting the physical properties. The additive such as an optically active compound, an antioxidant, an ultraviolet light absorber, a dye, an antifoaming agent, the polymerizable compound, a polymerization initiator, a polymerization inhibitor and a polar compound is added when necessary. The liquid crystal compound and the additive are mixed in such a procedure. A proportion (content) of the liquid crystal compound is expressed in terms of weight percent (% by weight) based on the weight of the liquid crystal composition containing no additive, even after the additive has been added. A proportion (amount of addition) of the additive is expressed in terms of weight percent (% by weight) based on the weight of the liquid crystal composition containing no additive in a manner similar to the proportion of the liquid crystal compound. Weight parts per million (ppm) may be occasionally used. A proportion of the polymerization initiator and the polymerization inhibitor is exceptionally expressed based on the weight of the polymerizable compound.

"Maximum temperature of the nematic phase" may be occasionally abbreviated as "maximum temperature." "Minimum temperature of the nematic phase" may be occasionally abbreviated as "minimum temperature." An expression "having large specific resistance" means that the composition has large specific resistance at room temperature and also at a temperature close to the maximum temperature of the nematic phase in an initial stage, and the composition has the large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and the device has the large voltage holding ratio at room temperature and also at a temperature close to the maximum temperature of the nematic phase even after the device has been used for a long period of time.

An expression "at least one piece of 'A' may be replaced by 'B'" means that the number of 'A' is arbitrary. When the number of 'A' is 1, a position of 'A' is arbitrary, and also when the number of 'A' is 2 or more, positions thereof can be selected without restriction. A same rule applies also to an expression "at least one piece of 'A' is replaced by 'B'."

A symbol of terminal group R¹ is used in a plurality of compounds in chemical formulas of component compounds. In the compounds, two groups represented by two pieces of arbitrary R¹ may be identical or different. For example, in one case, R¹ of compound (1) is ethyl and R¹ of compound (1-1) is ethyl. In another case, R¹ of compound (1) is ethyl and R¹ of compound (1-1) is propyl. A same rule applies also to a symbol of R³ or the like. In formula (1), when a is 2, two of ring A exists. In the compound, two rings represented by two of ring A may be identical or different. A same rule applies also to two of arbitrary ring A when a is larger than 2. A same rule applies also to Z¹, ring C or the like.

Then, 2-fluoro-1,4-phenylene means two divalent groups described below. In a chemical formula, fluorine may be leftward (L) or rightward (R). A same rule applies also to a divalent group of asymmetrical ring such as tetrahydropyran-2,5-diyl.

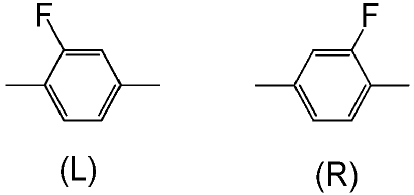

Embodiments of the invention are set forth in the items described below.
Item 1. A liquid crystal composition that has positive dielectric anisotropy, and contains at least one compound selected from the group of compounds represented by formula (1) as a first component and at least one compound selected from the group of compounds represented by formula (2) as a second component, wherein a proportion of the second component is 15% by weight to 50% by weight: 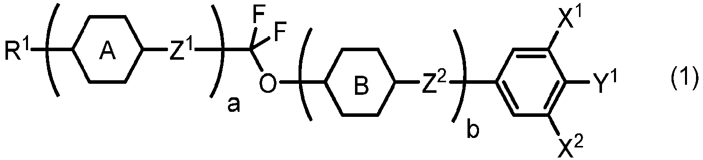 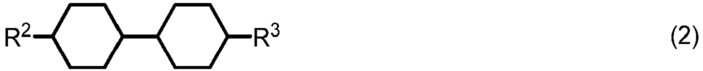 wherein, in formula (1) and formula (2), R¹ is alkyl having 1 to 12 carbons, alkoxy having 1 to 12 carbons or alkenyl having 2 to 12 carbons; R² and R³ are independently alkenyl having 2 to 12 carbons; ring A and ring B are independently 1,4-cyclohexylene, 1,4-cyclohexenylene, 1,4-phenylene, 1,4-phenylene in which at least one hydrogen is replaced by fluorine or chlorine, tetrahydropyran-2,5-diyl, 1,3-dioxane-2,5-diyl, pyrimidine-2,5-diyl, or pyridine-2,5-diyl, and at least one ring A is tetrahydropyran-2,5-diyl or 1,3-dioxane-2,5-diyl; Z¹ and Z² are independently a single bond, ethylene, vinylene, methyleneoxy, carbonyloxy or difluoromethyleneoxy; X¹ and X² are independently hydrogen or fluorine; Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; a is 1, 2, 3 or 4; b is 0, 1, 2 or 3; and a sum of a and b is 4 or less.
Item 2. The liquid crystal composition according to item 1, containing at least one compound selected from the group of compounds represented by formula (1-1) to formula (1-12) as the first component: 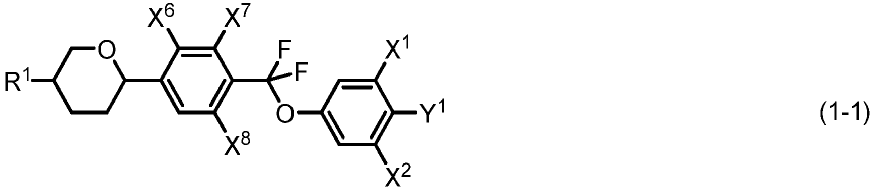 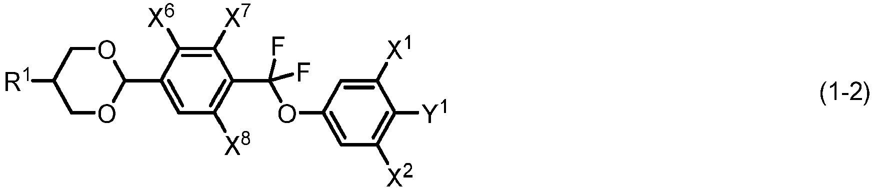 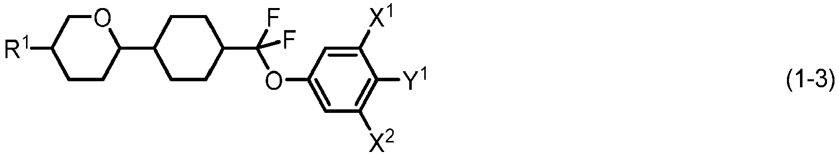 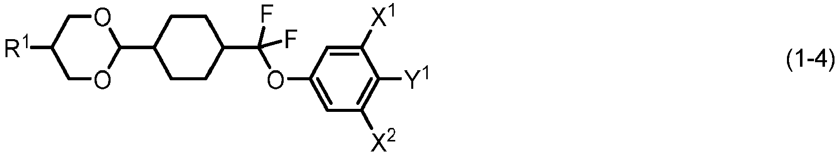 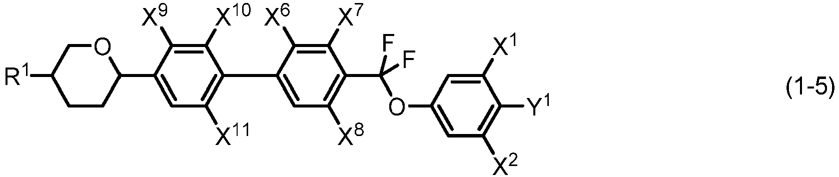 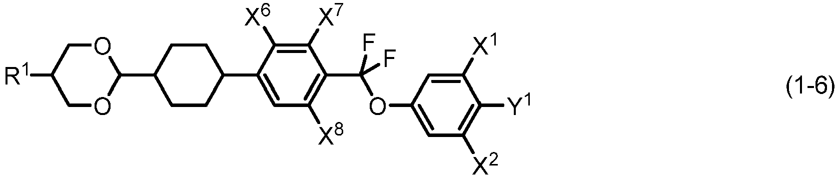 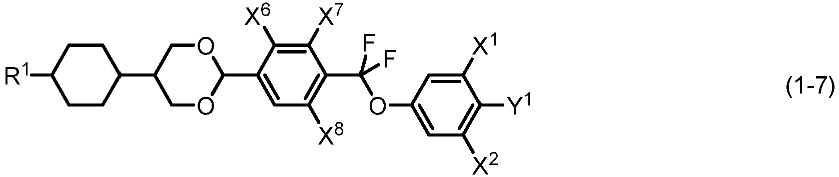 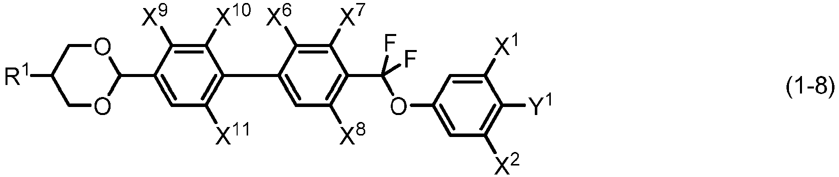 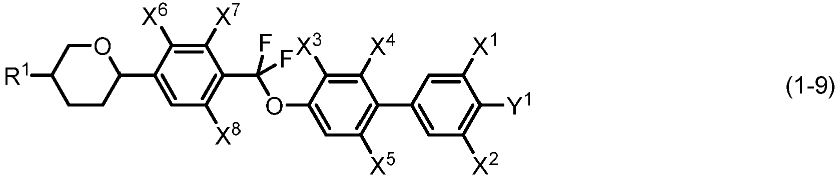 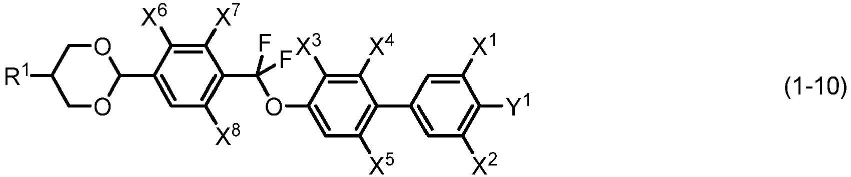 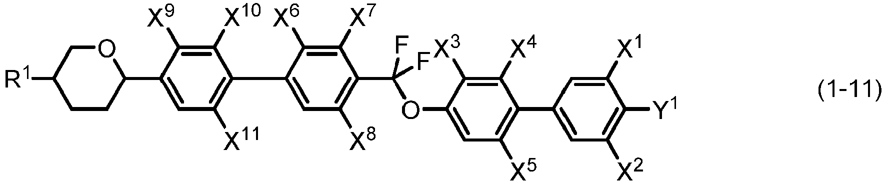 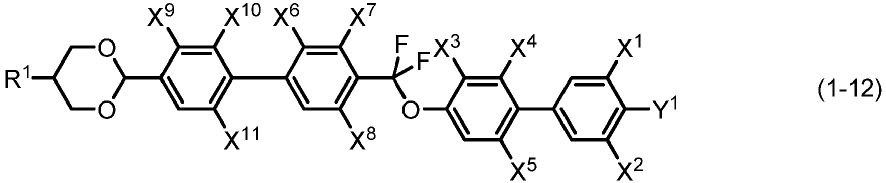 wherein, in formula (1-1) to formula (1-12), R¹ is alkyl having 1 to 12 carbons, alkoxy having 1 to 12 carbons or alkenyl having 2 to 12 carbons; X¹, X², X³, X⁴, X⁵, X⁶, X⁷, X⁸, X⁹, X¹⁰ and X¹¹ are independently hydrogen or fluorine; and Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine.
Item 3. The liquid crystal composition according to item 1 or 2, wherein a proportion of the first component is in the range of 5% by weight to 40% by weight, based on the weight of the liquid crystal composition.
Item 4. The liquid crystal composition according to any one of items 1 to 3, containing at least one compound selected from the group of compounds represented by formula (3) as a third component: 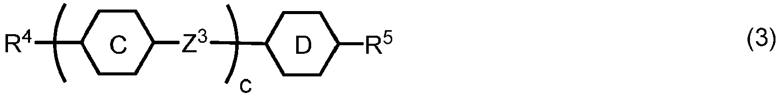 wherein, in formula (3), R⁴ is alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; R⁵ is alkyl having 1 to 12 carbons or alkoxy having 1 to 12 carbons; ring C and ring D are independently 1,4-cyclohexylene, 1,4-phenylene, 2-fluoro-1,4-phenylene or 2,5-difluoro-1,4-phenylene; Z³ is a single bond, ethylene carbonyloxy or methyleneoxy; and c is 1, 2 or 3.
Item 5. The liquid crystal composition according to any one of items 1 to 4, containing at least one compound selected from the group of compounds represented by formula (3-1) to formula (3-13) as the third component: 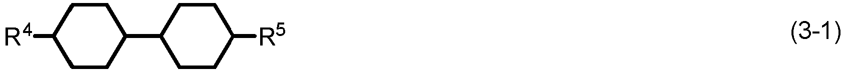 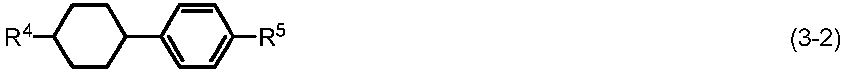 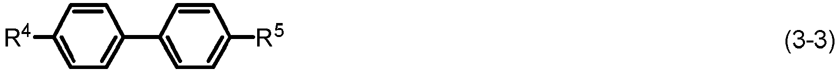 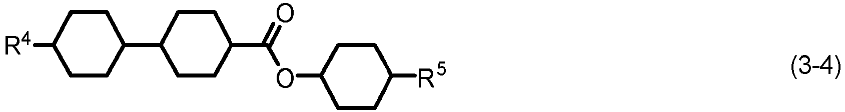 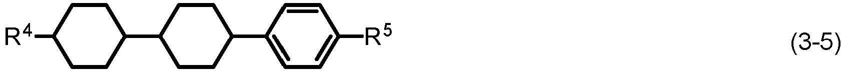 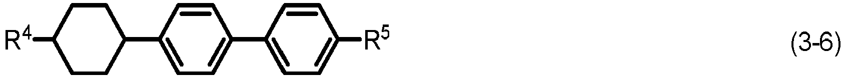 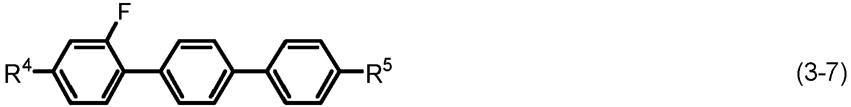 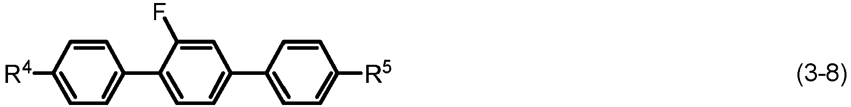 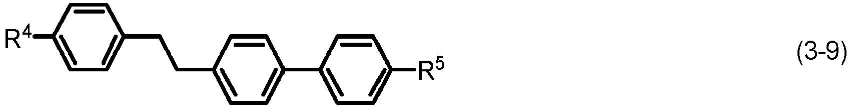 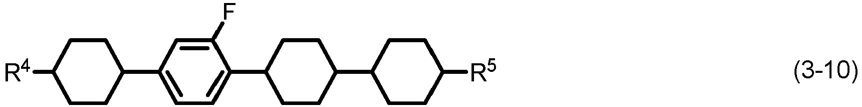 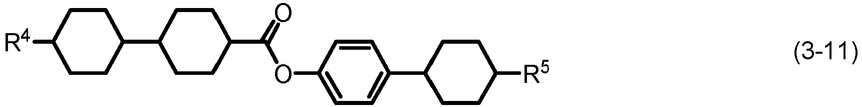 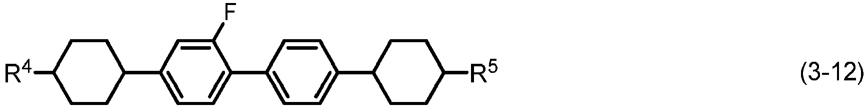 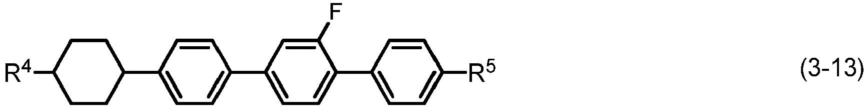 wherein, in formula (3-1) to formula (3-13), R⁴ is alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; and R⁵ is alkyl having 1 to 12 carbons or alkoxy having 1 to 12 carbons.
Item 6. The liquid crystal composition according to item 4 or 5, wherein a proportion of the third component is in the range of 10% by weight to 80% by weight based on the weight of the liquid crystal composition.
Item 7. The liquid crystal composition according to any one of items 1 to 6, further containing at least one compound selected from the group of compounds represented by formula (4) as a fourth component: 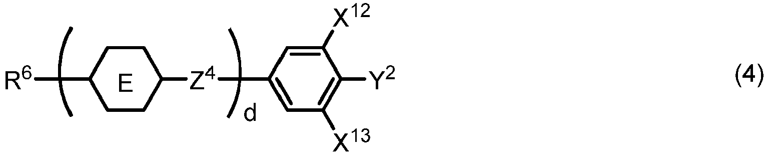 wherein, in formula (4), R⁶ is alkyl having 1 to 12 carbons, alkoxy having 1 to 12 carbons or alkenyl having 2 to 12 carbons; ring E is 1,4-cyclohexylene, 1,4-phenylene, 2-fluoro-1,4-phenylene, 2,3-difluoro-1,4-phenylene, 2,6-difluoro-1,4-phenylene, tetrahydropyran-2,5-diyl, 1,3-dioxane-2,5-diyl or pyrimidine-2,5-diyl; Z⁴ is a single bond, ethylene, carbonyloxy or difluoromethyleneoxy; X¹² and X¹³ are independently hydrogen or fluorine; Y² is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; d is 1, 2, 3 or 4; and in which, when Z⁴ is difluoromethyleneoxy, ring E is 1,4-cyclohexylene, 1,4-phenylene, 2-fluoro-1,4-phenylene, 2,3-difluoro-1,4-phenylene, 2,6-difluoro-1,4-phenylene or pyrimidine-2,5-diyl.
Item 8. The liquid crystal composition according to any one of items 1 to 7, containing at least one compound selected from the group of compounds represented by formula (4-1) to formula (4-30) as the fourth component: 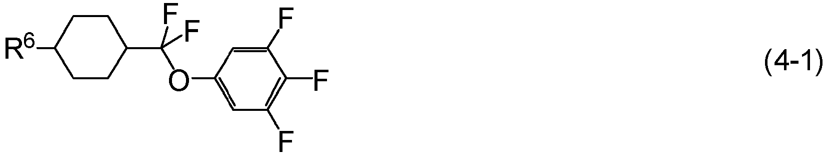 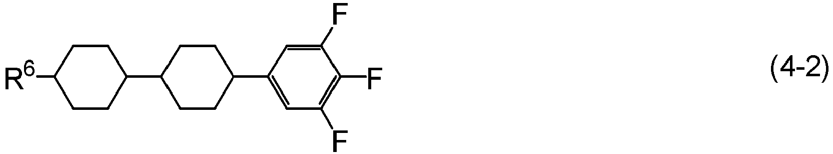 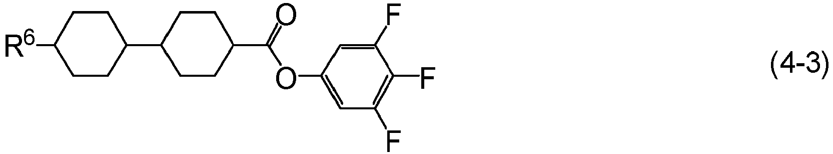 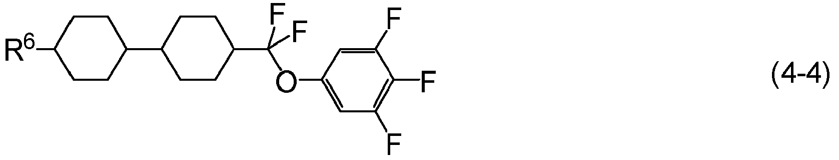 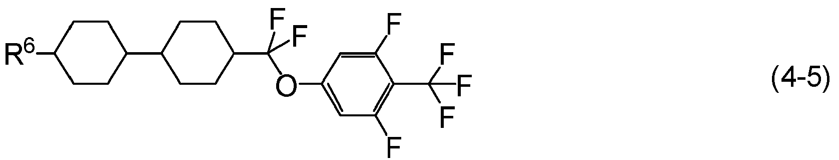 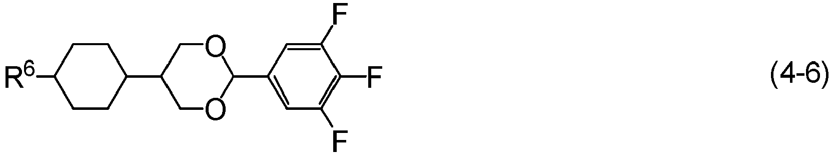 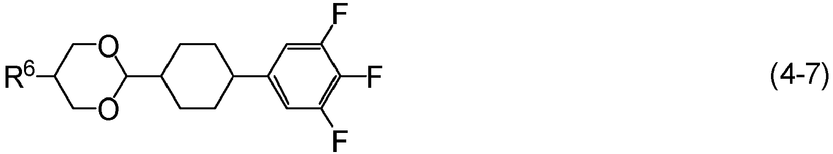 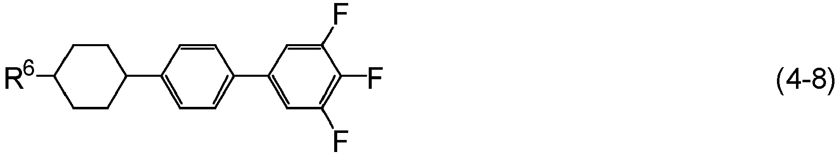 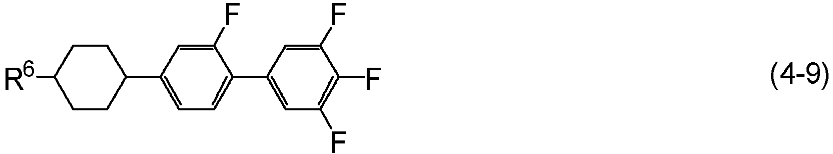 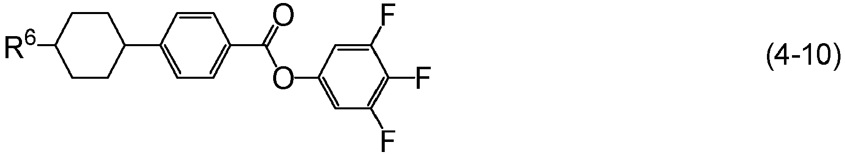 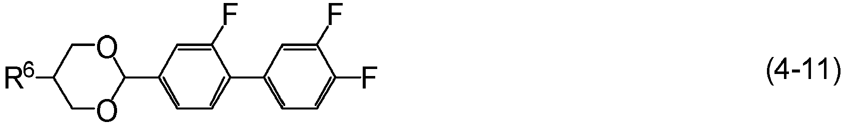 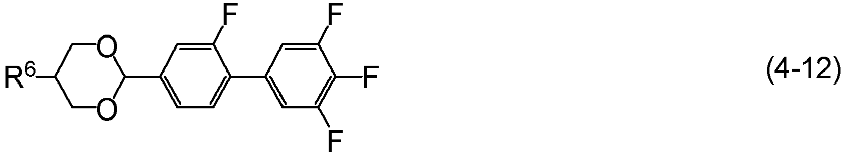 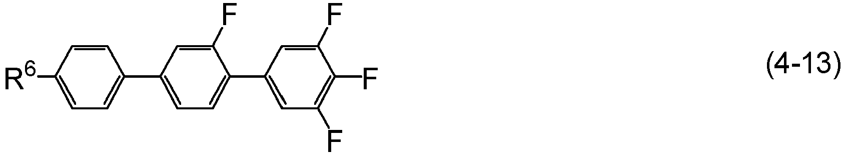 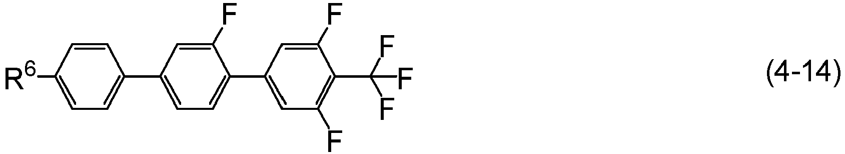 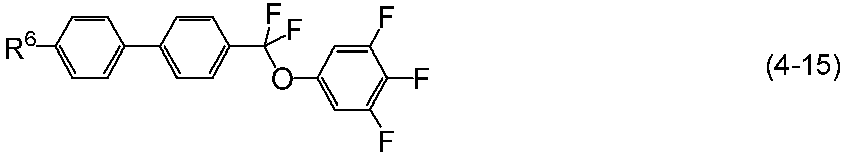 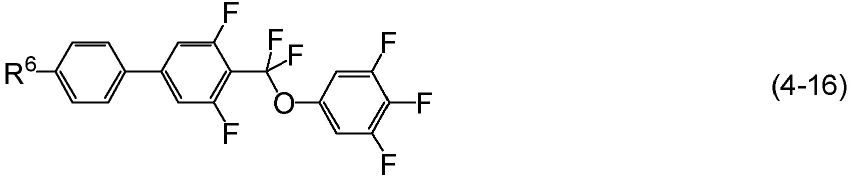 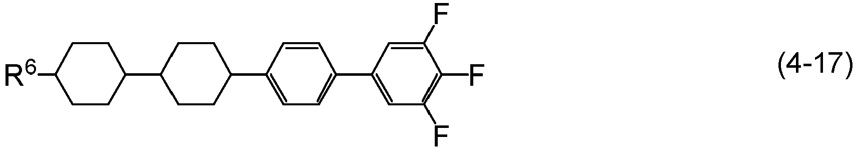 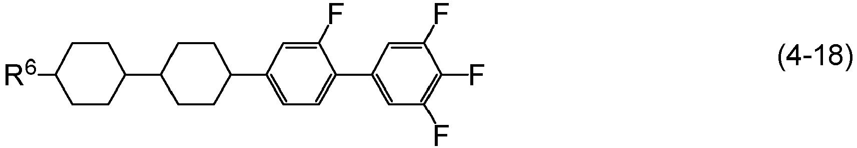 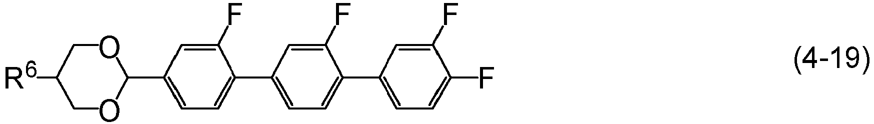 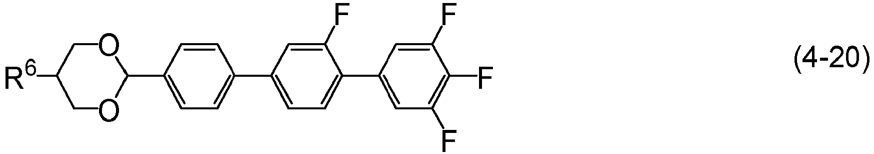 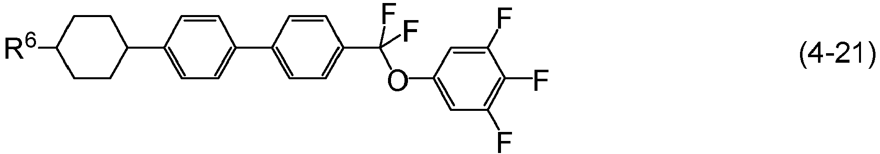 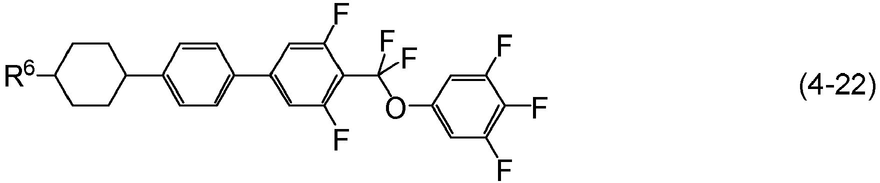 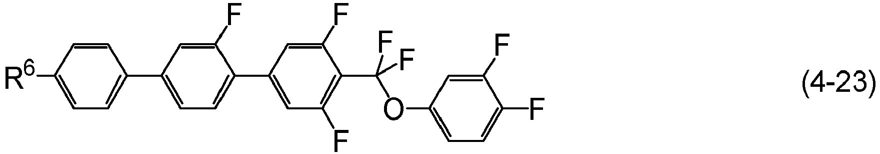 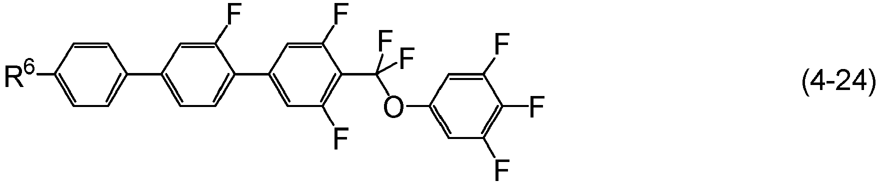 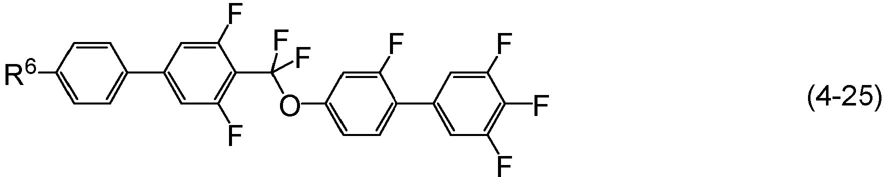 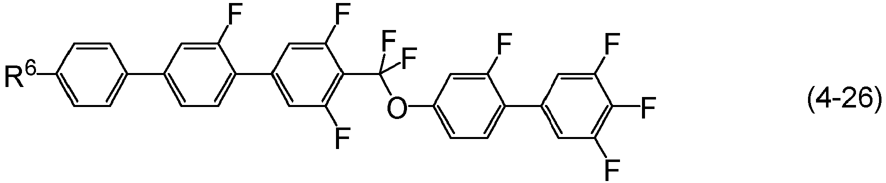 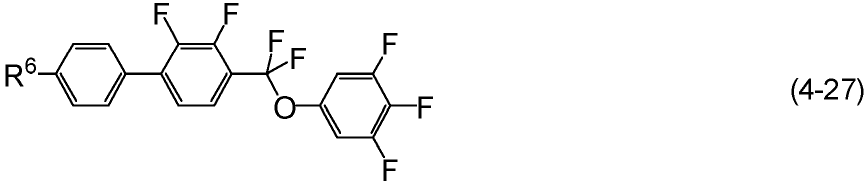 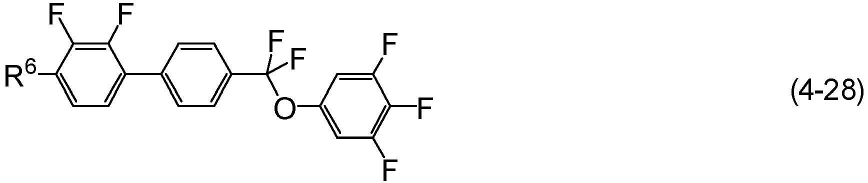 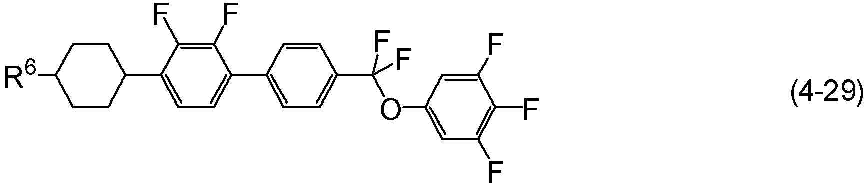 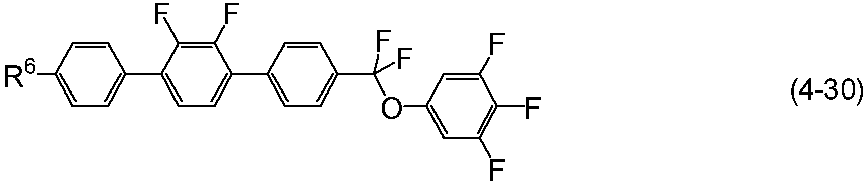 wherein, in formula (4-1) to formula (4-30), R⁶ is alkyl having 1 to 12 carbons, alkoxy having 1 to 12 carbons or alkenyl having 2 to 12 carbons.
Item 9. The liquid crystal composition according to item 7 or 8, wherein a proportion of the fourth component is in the range of 2% by weight to 45% by weight based on the weight of the liquid crystal composition.
Item 10. The liquid crystal composition according to any one of items 1 to 9, containing at least one compound selected from the group of compounds represented by formula (5) as a fifth component: 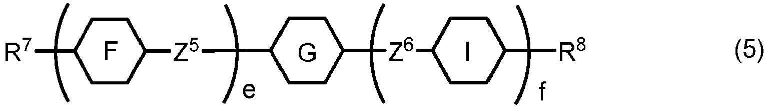 wherein, in formula (5), R⁷ and R⁸ are independently alkyl having 1 to 12 carbons, alkoxy having 1 to 12 carbons, alkenyl having 2 to 12 carbons, or alkenyloxy having 2 to 12 carbons; ring F and ring I are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl, or 7,8-difluorochroman-2,6-diyl; Z⁵ and Z⁶ are independently a single bond, ethylene, carbonyloxy or methyleneoxy; e is 1, 2 or 3, f is 0 or 1; and a sum of e and f is 3 or less.
Item 11. The liquid crystal composition according to any one of items 1 to 10, containing at least one compound selected from the group of compounds represented by formula (5-1) to formula (5-22) as the fifth component: 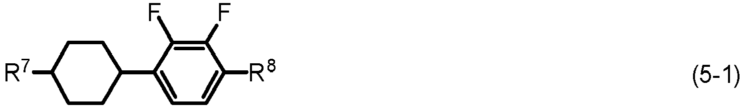 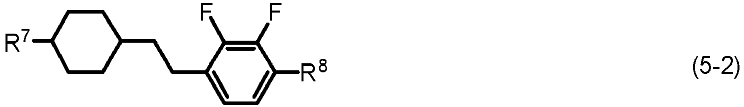 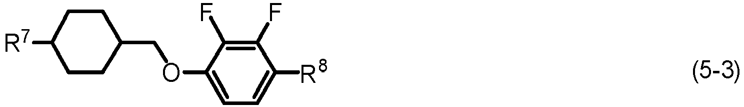 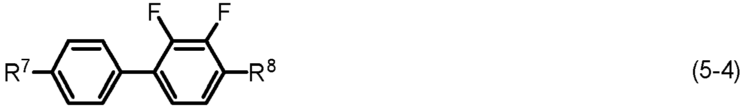 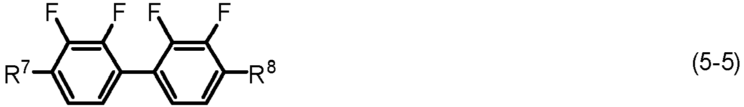 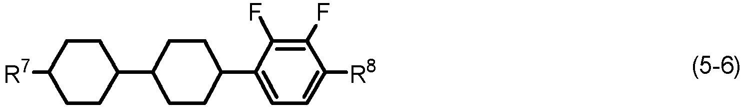 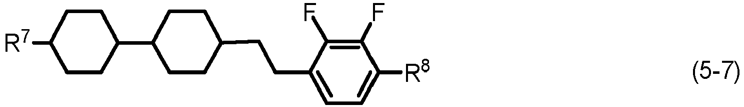 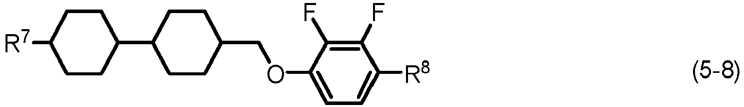 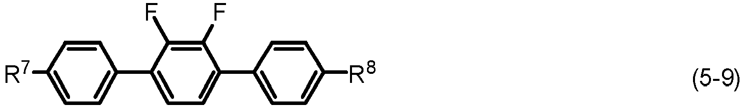 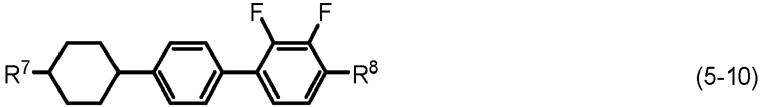 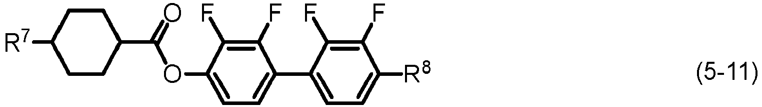 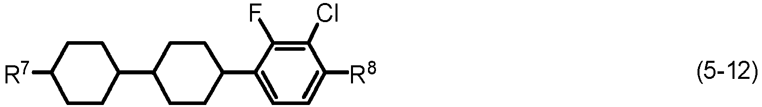 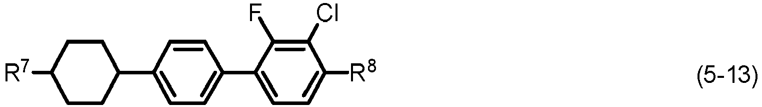 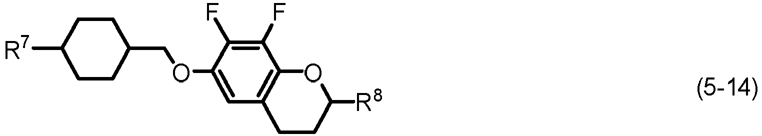 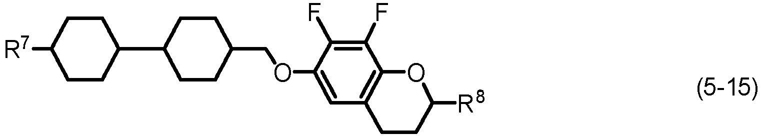 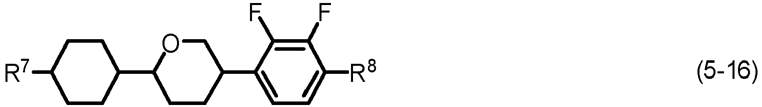 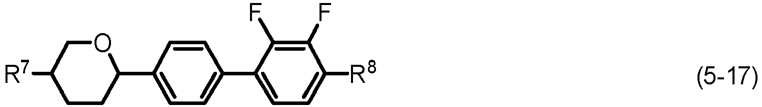 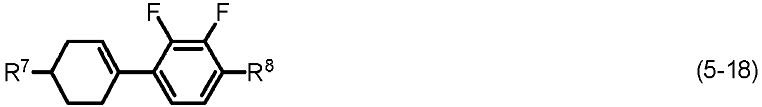 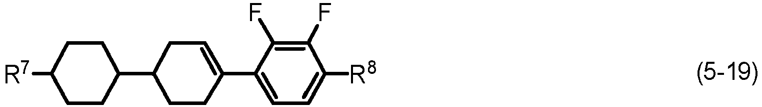 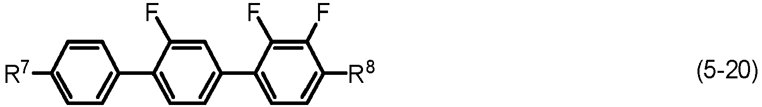 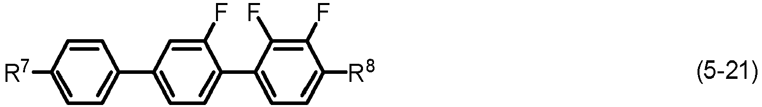 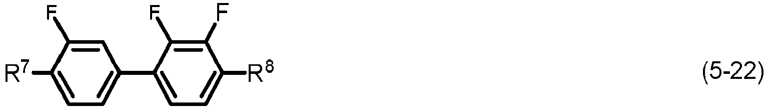 wherein, in formula (5-1) to formula (5-22), R⁷ and R⁸ are independently alkyl having 1 to 12 carbons, alkoxy having 1 to 12 carbons, alkenyl having 2 to 12 carbons or alkenyloxy having 2 to 12 carbons.
Item 12. The liquid crystal composition according to item 10 or 11, wherein a proportion of the fifth component is in the range of 3% by weight to 30% by weight based on the weight of the liquid crystal composition.
Item 13. The liquid crystal composition according to any one of items 1 to 12, wherein a maximum temperature of a nematic phase is 70°C or higher, optical anisotropy (measured at 25°C) at a wavelength of 589 nanometers is 0.07 or more and dielectric anisotropy (measured at 25°C) at a frequency of 1 kHz is 2 or more.
Item 14. A liquid crystal display device, including the liquid crystal composition according to any one of items 1 to 13.
Item 15. The liquid crystal display device according to item 14, wherein an operating mode in the liquid crystal display device is a TN mode, an ECB mode, an OCB mode, an IPS mode, an FFS mode or an FPA mode, and a driving mode in the liquid crystal display device is an active matrix mode.
Item 16. Use of the liquid crystal composition according to any one of items 1 to 13 in a liquid crystal display device.

An embodiment further includes the following items: (a) the composition, further containing at least one of additives such as an optically active compound, an antioxidant, an ultraviolet light absorber, a dye, an antifoaming agent, a polymerizable compound, a polymerization initiator, a polymerization inhibitor and a polar compound; (b) an AM device including the composition; (c) the composition further containing a polymerizable compound, and a polymer sustained alignment (PSA) mode AM device including the composition; (d) the polymer sustained alignment (PSA) mode AM device, wherein the device includes the composition, and the polymerizable compound in the composition is polymerized; (e) a device including the composition and having a PC mode, a TN mode, an STN mode, an ECB mode, an OCB mode, an IPS mode, a VA mode, an FFS mode or an FPA mode; (f) a transmissive device including the composition; (g) use of the composition as the composition having the nematic phase; and (h) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred proportion of the components and the basis thereof will be described. Fourth, a preferred embodiment of the component compounds will be described. Fifth, a preferred component compound will be described. Sixth, an additive that may be added to the composition will be described. Seventh, methods for synthesizing the component compounds will be described. Last, an application of the composition will be described.

First, the constitution of the component compounds in the composition will be described. The composition of the invention is classified into composition A and composition B. Composition A may further contain any other liquid crystal compound, an additive or the like in addition to the liquid crystal compound selected from compound (1), compound (2), compound (3), compound (4) and compound (5). An expression "any other liquid crystal compound" means a liquid crystal compound different from compound (1), compound (2), compound (3), compound (4) and compound (5). Such a compound is mixed with the composition for the purpose of further adjusting the characteristics. The additive is the optically active compound, the antioxidant, the ultraviolet light absorber, the dye, the antifoaming agent, the polymerizable compound, the polymerization initiator, the polymerization inhibitor, the polar compound or the like.

Composition B consists essentially of liquid crystal compounds selected from compound (1), compound (2), compound (3), compound (4) and compound (5). An expression "essentially" means that the composition may contain the additive, but contains no any other liquid crystal compound. Composition B has a smaller number of components than composition A has. Composition B is preferred to composition A from a viewpoint of cost reduction. Composition A is preferred to composition B from a viewpoint of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium" and a symbol S stands for "small" or "low." The symbols L, M and S represent a classification based on a qualitative comparison among the component compounds, and 0 (zero) means that "a value is zero" or "a value is nearly zero."

**Table 2. Characteristics of compounds**

| Compounds | Compound (1) | Compound (2) | Compound (3) | Compound (4) | Compound (5) |
|---|---|---|---|---|---|
| Maximum temperature | StoL | M | StoL | S to L | S to L |
| Viscosity | MtoL | S | S to M | M to L | M to L |
| Optical anisotropy | MtoL | S | StoL | M to L | M to L |
| Dielectric anisotropy | L | 0 | 0 | S to L | M to L¹⁾ |
| Specific resistance | L | L | L | L | L |

| | | | | | |
|---|---|---|---|---|---|
| 1) A value of dielectric anisotropy is negative, and the symbol shows magnitude of an absolute value. | | | | | |

Upon mixing the component compounds with the composition, the main effects of the component compounds on the characteristics of the composition are as described below. Compound (1) increases the dielectric anisotropy. Compound (2) decreases the viscosity. Compound (3) increases the maximum temperature or decreases the minimum temperature. Compound (4) decreases the minimum temperature and increases the dielectric anisotropy. Compound (5) increases the dielectric anisotropy in a minor axis direction.

Third, the combination of components in the composition, the preferred proportion of the component compounds and the basis thereof will be described. A preferred combination of the components in the composition includes a combination of the first component and the second component, a combination of the first component, the second component and the third component, a combination of the first component, the second component and the fourth component, a combination of the first component, the second component and the fifth component, a combination of the first component, the second component, the third component and the fourth component, a combination of the first component, the second component, the third component and the fifth component, a combination of the first component, the second component, the fourth component and the fifth component, or a combination of the first component, the second component, the third component, the fourth component and the fifth component. A further preferred combination includes a combination of the first component, the second component, the third component and the fourth component.

A preferred proportion of the first component is about 5% by weight or more for increasing the dielectric anisotropy, and about 40% by weight or less for decreasing the minimum temperature. A further preferred proportion is in the range of about 5% by weight to about 35% by weight. A particularly preferred proportion is in the range of about 5% by weight to about 30% by weight.

According to the present invention, the proportion of the second component is in the range of 15% by weight to 50% by weight for decreasing the viscosity and for increasing the dielectric anisotropy.

A preferred proportion of the third component is about 10% by weight or more for increasing the maximum temperature or decreasing the viscosity, and about 80% by weight or less for increasing the dielectric anisotropy. A further preferred proportion is in the range of about 15% by weight to about 75% by weight. A particularly preferred proportion is in the range of about 20% by weight to about 70% by weight.

A preferred proportion of the fourth component is about 2% by weight or more for increasing the dielectric anisotropy, and about 45% by weight or less for decreasing the minimum temperature. A further preferred proportion is in the range of about 2% by weight to about 40% by weight. A particularly preferred proportion is in the range of about 2% by weight to about 35% by weight.

A preferred proportion of the fifth component is about 3% by weight or more for increasing the dielectric anisotropy in a minor axis direction, and about 30% by weight for decreasing the minimum temperature. A further preferred proportion is in the range of about 3% by weight to about 20% by weight. A particularly preferred proportion is in the range of about 3% by weight to about 10% by weight.

Fourth, the preferred embodiment of the component compounds will be described. In formula (1), formula (2), formula (3), formula (4) and formula (5), R¹ and R⁶ are independently alkyl having 1 to 12 carbons, alkoxy having 1 to 12 carbons or alkenyl having 2 to 12 carbons. Preferred R¹ or R⁶ is alkyl having 1 to 12 carbons for increasing stability to ultraviolet light or heat. R² and R³ are independently alkenyl having 2 to 12 carbons. R⁴ is alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine. Preferred R⁴ is alkyl having 1 to 12 carbons for increasing the stability to ultraviolet light or heat, and alkenyl having 2 to 12 carbons for decreasing the minimum temperature. R⁵ is alkyl having 1 to 12 carbons or alkoxy having 1 to 12 carbons. Preferred R⁵ is alkyl having 1 to 12 carbons for increasing the stability to ultraviolet light or heat, and so forth. R⁷ and R⁸ are independently alkyl having 1 to 12 carbons, alkoxy having 1 to 12 carbons, alkenyl having 2 to 12 carbons or alkenyloxy having 2 to 12 carbons. Preferred R⁷ or R⁸ is alkyl having 1 to 12 carbons for increasing the stability to ultraviolet light or heat, and alkoxy having 1 to 12 carbons for increasing the dielectric anisotropy.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl. In the alkenyl, straight-chain alkenyl is preferred to branched-chain alkenyl.

Preferred alkenyloxy is vinyloxy, allyloxy, 3-butenyloxy, 3-pentenyloxy or 4-pentenyloxy. Further preferred alkenyloxy is allyloxy or 3-butenyloxy for decreasing the viscosity.

Preferred examples of alkyl in which at least one hydrogen is replaced by fluorine or chlorine include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples are 2-fluoroethyl, 3-fluoropropyl, 4-fluorobutyl or 5-fluoropentyl for increasing the dielectric anisotropy.

Preferred examples of alkenyl in which at least one hydrogen is replaced by fluorine or chlorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples are 2,2-difluorovinyl or 4,4-difluoro-3-butenyl for decreasing the viscosity.

Ring A and ring B are independently 1,4-cyclohexylene, 1,4-cyclohexenylene, 1,4-phenylene, 1,4-phenylene in which at least one hydrogen is replaced by fluorine or chlorine, tetrahydropyran-2,5-diyl, 1,3-dioxane-2,5-diyl, pyrimidine-2,5-diyl or pyridine-2,5-diyl, and in which at least one ring A is tetrahydropyran-2,5-diyl or 1,3-dioxane-2,5-diyl. Preferred ring A or ring B is 1,4-phenylene, 2-fluoro-1,4-phenylene or 2,6-difluoro-1,4-phenylene for increasing the optical anisotropy, and tetrahydropyran-2,5-diyl or 1,3-dioxane-2,5-diyl for increasing the dielectric anisotropy. Ring C and ring D are independently 1,4-cyclohexylene, 1,4-phenylene, 2-fluoro-1,4-phenylene or 2,5-difluoro-1,4-phenylene. Preferred ring C or ring D is 1,4-cyclohexylene for decreasing the viscosity or increasing the maximum temperature, and 1,4-phenylene for increasing the optical anisotropy. Ring E is 1,4-cyclohexylene, 1,4-phenylene, 2-fluoro-1,4-phenylene, 2,3-difluoro-1,4-phenylene, 2,6-difluoro-1,4-phenylene, tetrahydropyran-2,5-diyl, 1,3-dioxane-2,5-diyl or pyrimidine-2,5-diyl, and in which, when Z⁴ is difluoromethyleneoxy, ring E is 1,4-cyclohexylene, 1,4-phenylene, 2-fluoro-1,4-phenylene, 2,3-difluoro-1,4-phenylene, 2,6-difluoro-1,4-phenylene or pyrimidine-2,5-diyl. Preferred ring E is 1,4-phenylene or 2-fluoro-1,4-phenylene for increasing the optical anisotropy.

Ring F and ring I are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl. In which, preferred examples of 1,4-phenylene in which at least one hydrogen is replaced by fluorine or chlorine include 2-fluoro-1,4-phenylene, 2,3-difluoro-1,4-phenylene or 2-chloro-3-fluoro-1,4-phenylene. Preferred ring F or ring I is 1,4-cyclohexylene for decreasing the viscosity, tetrahydropyran-2,5-diyl for increasing the dielectric anisotropy, and 1,4-phenylene for increasing the optical anisotropy. Ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl, or 7,8-difluorochroman-2,6-diyl. Preferred ring G is 2,3-difluoro-1,4-phenylene for increasing the dielectric anisotropy. With regard to a configuration of 1,4-cyclohexylene, trans is preferred to cis for increasing the maximum temperature. Tetrahydropyran-2,5-diyl includes: 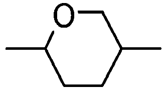 or 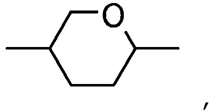 and preferably

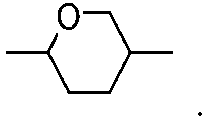

Z¹ and Z² are independently a single bond, ethylene, vinylene, methyleneoxy, carbonyloxy or difluoromethyleneoxy. Preferred Z¹ or Z² is a single bond for decreasing the viscosity. Z³ is a single bond, ethylene, carbonyloxy or methyleneoxy. Preferred Z³ is a single bond for decreasing the viscosity, ethylene for decreasing the minimum temperature, and carbonyloxy for increasing maximum temperature. Z⁴ is a single bond, ethylene, carbonyloxy or difluoromethyleneoxy. Preferred Z⁴ is a single bond for decreasing the viscosity and difluoromethyleneoxy for increasing the dielectric anisotropy. Z⁵ and Z⁶ are independently a single bond, ethylene, carbonyloxy or methyleneoxy. Preferred Z⁵ or Z⁶ is a single bond for decreasing the viscosity, ethylene for decreasing the minimum temperature, and methyleneoxy for increasing the dielectric anisotropy.

X¹, X², X³, X⁴, X⁵, X⁶, X⁷, X⁸, X⁹, X¹⁰, X¹¹, X¹² and X¹³ are independently hydrogen or fluorine. Preferred X¹, X², X³, X⁴, X⁵, X⁶, X⁷, X⁸, X⁹, X¹⁰, X¹¹, X¹² or X¹³ is fluorine for increasing the dielectric anisotropy.

Y¹ and Y² are fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine. Preferred Y¹ or Y² is fluorine for decreasing the minimum temperature.

Then, a is 1, 2, 3 or 4, b is 0, 1, 2 or 3, and a sum of a and b is 4 or less. Preferred a is 2 or 3 for increasing the dielectric anisotropy. Preferred b is 0 or 1 for decreasing the minimum temperature. Then, c is 1, 2 or 3. Preferred c is 1 for decreasing the viscosity, and 2 or 3 for increasing the maximum temperature. Then, d is 1, 2, 3 or 4. Preferred d is 2 for decreasing the minimum temperature, and 3 for increasing the dielectric anisotropy. Then, e is 1, 2 or 3, f is 0 or 1, and a sum of e and f is 3 or less. Preferred e is 1 for decreasing the viscosity, and 2 or 3 for increasing the maximum temperature. Preferred f is 0 for decreasing the viscosity, and 1 for decreasing the minimum temperature.

Preferred compound (1) includes compound (1-1) to compound (1-12) described in the claims. In the compounds, at least one of the first components preferably includes compound (1-2), compound (1-5), compound (1-7), compound (1-8) or compound (1-11). At least two of the first components preferably includes a combination of compound (1-2) and compound (1-5), a combination of compound (1-2) and compound (1-7), a combination of compound (1-2) and compound (1-8), a combination of compound (1-5) and compound (1-7), a combination of compound (1-5) and compound (1-8), or a combination of compound (1-7) and compound (1-8).

Preferred compound (3) includes compound (3-1) to compound (3-13) described in the claims. In the compounds, at least one of the third components preferably includes compound (3-1), compound (3-3), compound (3-5), compound (3-6), compound (3-8) or compound (3-13). At least two of the third components preferably includes a combination of compound (3-1) and compound (3-3), a combination of compound (3-1) and compound (3-5), a combination of compound (3-1) and compound (3-8), or a combination of compound (3-3) and compound (3-5).

Preferred compound (4) includes compound (4-1) to compound (4-30) described in the claims. In the compounds, at least one of the fourth components preferably includes compound (4-2), compound (4-8), compound (4-9), compound (4-11), compound (4-13), compound (4-14), compound (4-15), compound (4-16), compound (4-20), compound (4-21), compound (4-22), compound (4-24), compound (4-25) or compound (4-26). At least two of the fourth components preferably includes a combination of compound (4-9) and compound (4-13), a combination of compound (4-11) and compound (4-13), a combination of compound (4-13) and compound (4-14), a combination of compound (4-13) and compound (4-20), a combination of compound (4-21) and compound (4-24), or a combination of compound (4-22) and compound (4-24).

Preferred compound (5) includes compound (5-1) to compound (5-22) described in the claims. In the compounds, at least one of the fifth components preferably includes compound (5-1), compound (5-3), compound (5-4), compound (5-6), compound (5-8) or compound (5-10). At least two of the fifth components preferably includes a combination of compound (5-1) and compound (5-6), a combination of compound (5-1) and compound (5-10), a combination of compound (5-3) and compound (5-8), a combination of compound (5-4) and compound (5-6), a combination of compound (5-4) and compound (5-8), or a combination of compound (5-4) and compound (5-10).

Sixth, the additive that may be added to the composition will be described. Such an additive includes the optically active compound, the antioxidant, the ultraviolet light absorber, the dye, the antifoaming agent, the polymerizable compound, the polymerization initiator, the polymerization inhibitor and the polar compound. The optically active compound is added to the composition for the purpose of inducing helical structure in a liquid crystal to give a twist angle. Examples of such a compound include compound (6-1) to compound (6-5). A preferred proportion of the optically active compound is about 5% by weight or less. A further preferred proportion is in the range of about 0.01% by weight to about 2% by weight.

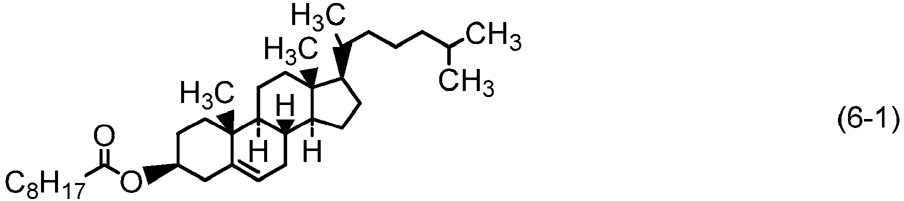

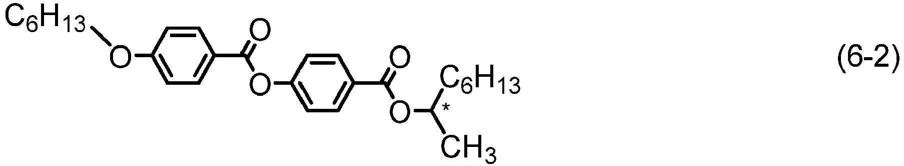

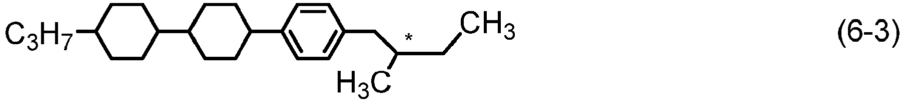

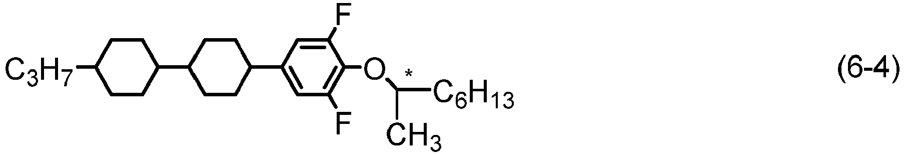

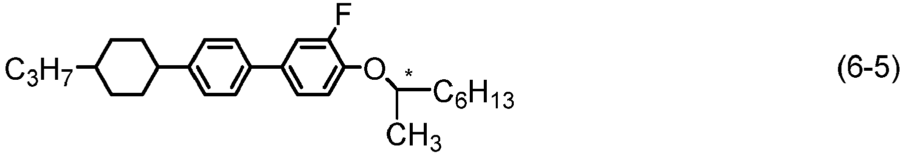

The antioxidant is added to the composition for preventing a decrease in the specific resistance caused by heating in air, or for maintaining a large voltage holding ratio at room temperature and also at a temperature close to the maximum temperature even after the device has been used for a long period of time. Preferred examples of the antioxidant include compound (7) in which t is an integer from 1 to 9.

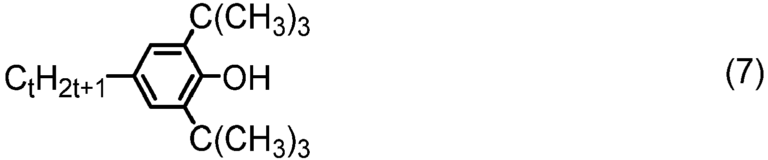

In compound (7), preferred t is 1, 3, 5, 7 or 9. Further preferred t is 7. Compound (7) in which t is 7 is effective in maintaining a large voltage holding ratio at room temperature and also at a temperature close to the maximum temperature even after the device has been used for a long period of time because such compound (7) has small volatility. A preferred proportion of the antioxidant is about 50 ppm or more for achieving an effect thereof, and about 600 ppm or less for avoiding a decrease in the maximum temperature or an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving an effect thereof, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The antifoaming agent such as dimethyl silicone oil or methylphenyl silicone oil is added to the composition for preventing foam formation. A preferred proportion of the antifoaming agent is about 1 ppm or more for achieving an effect thereof, and about 1,000 ppm or less for preventing poor display. A further preferred proportion is in the range of about 1 ppm to about 500 ppm.

The polymerizable compound is added to the composition to be adapted for a polymer sustained alignment (PSA) mode device. Preferred examples of the polymerizable compound include a compound having a polymerizable group such as acrylate, methacrylate, a vinyl compound, a vinyloxy compound, propenyl ether, an epoxy compound (oxirane, oxetane) and vinyl ketone. Further preferred examples include an acrylate derivative or a methacrylate derivative. A preferred proportion of the polymerizable compound is about 0.05% by weight or more for achieving an effect thereof, and about 10% by weight or less for preventing poor display. A further preferred proportion is in the range of about 0.1% by weight to about 2% by weight. The polymerizable compound is polymerized by irradiation with ultraviolet light. The polymerizable compound may be polymerized in the presence of an initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being the photopolymerization initiator, is suitable for radical polymerization. A preferred proportion of the photopolymerization initiator is in the range of about 0.1% by weight to about 5% by weight based on the weight of the polymerizable compound. A further preferred proportion is in the range of about 1% by weight to about 3% by weight based thereon.

Upon storing the polymerizable compound, the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-t-butylcatechol, 4-methoxyphenol and phenothiazine.

Seventh, the methods for synthesizing the component compounds will be described. The compounds can be prepared according to known methods. Examples of the synthetic methods are described. Compound (1-4) is prepared according to a method described in WO 98-17664 A. Compound (2) is prepared according to a method described in JP S59-176221 A. Compound (3-3) is prepared according to a method described in JP S52-53783 A. Compound (4-2) and compound (4-8) are prepared according to a method described in JP H2-233626 A. Compound (5-1) and compound (5-6) are prepared according to a method described in JP H2-503441 A. The antioxidant is commercially available. A compound in which t in formula (7) is 1 is available from Sigma-Aldrich Corporation. Compound (7) in which t is 7 or the like is prepared according to a method described in US 3660505 B.

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to a publicly known method using the thus obtained compounds. For example, the component compounds are mixed and dissolved in each other by heating.

Last, the application of the composition will be described. The composition of the invention mainly has a minimum temperature of about -10°C or lower, a maximum temperature of about 70°C or higher, and optical anisotropy in the range of about 0.07 to about 0.20. A device including the composition has large voltage holding ratio. The composition is suitable for use in the AM device. The composition is particularly suitable for use in a transmissive AM device. The composition having optical anisotropy in the range of about 0.08 to about 0.25 and further the composition having optical anisotropy in the range of about 0.10 to about 0.30 may be prepared by controlling the proportion of the component compounds or by mixing any other liquid crystal compound. The composition can be used as the composition having the nematic phase, or as the optically active composition by adding the optically active compound.

The composition can be used in the AM device. The composition can also be used in a PM device. The composition can also be used in an AM device and a PM device each having a mode such as the PC mode, the TN mode, the STN mode, the ECB mode, the OCB mode, the IPS mode, the FFS mode, the VA mode and the FPA mode. Use in the AM device having the TN mode, the OCB mode, the IPS mode or the FFS mode is particularly preferred. In the AM device having the IPS mode or the FFS mode, alignment of liquid crystal molecules when no voltage is applied may be parallel or perpendicular to a glass substrate. The devices may be of a reflective type, a transmissive type or a transflective type. Use in the transmissive device is preferred. The composition can also be used in an amorphous silicon-TFT device or a polycrystal silicon-TFT device. The composition can also be used in a nematic curvilinear aligned phase (NCAP) device prepared by microencapsulating the composition, or a polymer dispersed (PD) device in which a three-dimensional network-polymer is formed in the composition.

### Examples

The invention will be described in greater detail by way of Examples. However, the invention is not limited by the Examples. The invention includes a mixture of a composition in Example 1 and a composition in Example 2. The invention also includes a mixture in which at least two compositions in Examples are mixed. The thus prepared compound was identified by methods such as an NMR analysis. Characteristics of the compound and the composition were measured by methods described below.

NMR analysis: For measurement, DRX-500 made by Bruker BioSpin Corporation was used. In ¹H-NMR measurement, a sample was dissolved in a deuterated solvent such as CDCl₃, and measurement was carried out under conditions of room temperature, 500 MHz and 16 times of accumulation. Tetramethylsilane was used as an internal standard. In ¹⁹F-NMR measurement, CFCl₃ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B Gas Chromatograph made by Shimadzu Corporation was used. A carrier gas was helium (2 mL per minute). A sample vaporizing chamber and a detector (FID) were set to 280°C and 300°C, respectively. A capillary column DB-1 (length 30 m, bore 0.32 mm, film thickness 0.25 µm; dimethylpolysiloxane as a stationary liquid phase; non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample vaporizing chamber. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 µm) made by Agilent Technologies, Inc., Rtx-1 (length 30 m, bore 0.32 mm, film thickness 0.25 µm) made by Restek Corporation and BP-1 (length 30 m, bore 0.32 mm, film thickness 0.25 µm) made by SGE International Pty. Ltd. A capillary column CBP1-M50-025 (length 50 m, bore 0.25 mm, film thickness 0.25 µm) made by Shimadzu Corporation may also be used for the purpose of preventing an overlap of peaks of the compounds.

A proportion of liquid crystal compounds contained in the composition may be calculated by the method as described below. A mixture of the liquid crystal compounds is detected by gas chromatograph (FID). An area ratio of each peak in the gas chromatogram corresponds to the ratio (weight ratio) of the liquid crystal compounds. When the capillary columns described above were used, a correction coefficient of each of the liquid crystal compounds may be regarded as 1 (one). Accordingly, the proportion (% by weight) of the liquid crystal compounds can be calculated from the area ratio of each peak.

Sample for measurement: When characteristics of the composition were measured, the composition was used as a sample as was. Upon measuring characteristics of a compound, a sample for measurement was prepared by mixing the compound (15% by weight) with a base liquid crystal (85% by weight). Values of characteristics of the compound were calculated, according to an extrapolation method, using values obtained by measurement. (Extrapolated value) = {(measured value of a sample) - 0.85 × (measured value of a base liquid crystal)} / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

A base liquid crystal described below was used. A proportion of the component compound was expressed in terms of weight percent (% by weight).

| | |
|---|---|
| 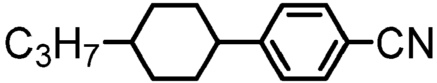 | 24% |
| 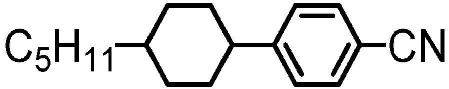 | 36% |
| 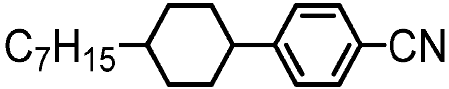 | 25% |
| 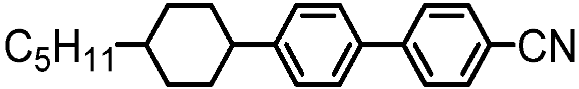 | 15% |

Measuring method: Characteristics were measured according to methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a TN device used for measurement.
(1) Maximum temperature of nematic phase (NI; °C): A sample was placed on a hot plate in a melting point apparatus equipped with a polarizing microscope, and heated at a rate of 1°C per minute. Temperature when part of the sample began to change from a nematic phase to an isotropic liquid was measured.
(2) Minimum temperature of nematic phase (Tc; °C): Samples each having a nematic phase were put in glass vials and kept in freezers at temperatures of 0°C, -10°C, -20°C, -30°C and - 40°C for 10 days, and then liquid crystal phases were observed. For example, when the sample was maintained in the nematic phase at -20°C and changed to crystals or a smectic phase at -30°C, T_{c} was expressed as T_{c} < -20°C.
(3) Viscosity (bulk viscosity; η; measured at 20°C; mPa·s): For measurement, a cone-plate (E type) rotational viscometer made by Tokyo Keiki Inc. was used.
(4) Viscosity (rotational viscosity; γ1; measured at 25°C; mPa·s): Measurement was carried out according to a method described in M. Imai et al., Molecular Crystals and Liquid Crystals, Vol. 259, p. 37 (1995). A sample was put in a TN device in which a twist angle was 0 degrees and a distance (cell gap) between two glass substrates was 5 micrometers. Voltage was applied stepwise to the device in the range of 16 V to 19.5 V at an increment of 0.5 V. After a period of 0.2 second with no voltage application, voltage was repeatedly applied under conditions of only one rectangular wave (rectangular pulse; 0.2 second) and no voltage application (2 seconds). A peak current and a peak time of transient current generated by the applied voltage were measured. A value of rotational viscosity was obtained from the measured values and calculation equation (8) described on page 40 of the paper presented by M. Imai et al. A value of dielectric anisotropy required for the calculation was determined using the device by which the rotational viscosity was measured and by a method described below.
(5) Optical anisotropy (refractive index anisotropy; Δn; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index (n∥) was measured when a direction of polarized light was parallel to a direction of rubbing. A refractive index (n⊥) was measured when the direction of polarized light was perpendicular to the direction of rubbing. A value of optical anisotropy was calculated from an equation: Δn = n∥ - n⊥.
(6) Dielectric anisotropy (Δε; measured at 25°C): A sample was put in a TN device in which a distance (cell gap) between two glass substrates was 9 micrometers and a twist angle was 80 degrees. Sine waves (10 V, 1 kHz) were applied to the device, and after 2 seconds, dielectric constant (ε∥) of liquid crystal molecules in a major axis direction was measured. Sine waves (0.5 V, 1 kHz) were applied to the device, and after 2 seconds, dielectric constant (ε⊥) of liquid crystal molecules in a minor axis direction was measured. A value of dielectric anisotropy was calculated from an equation: Δε = ε∥ - ε⊥.
(7) Threshold voltage (Vth; measured at 25°C; V): For measurement, an LCD-5100 luminance meter made by Otsuka Electronics Co., Ltd. was used. A light source was a halogen lamp. A sample was put in a normally white mode TN device in which a distance (cell gap) between two glass substrates was 0.45/Δn (µm) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of voltage at 90% transmittance.
(8) Voltage holding ratio (VHR-1; measured at 25°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.
(9) Voltage holding ratio (VHR-2; measured at 80°C; %): A voltage holding ratio was measured according to procedures identical with the procedures described above except that measurement was carried out at 80°C in place of 25°C. The thus obtained value was expressed in terms of VHR-2.
(10) Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has large stability to ultraviolet light. A value of VHR-3 is preferably 90% or more, and further preferably 95% or more.
(11) Voltage holding ratio (VHR-4; measured at 25°C; %): Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has large stability to heat.
(12) Response time (τ; measured at 25°C; ms): For measurement, an LCD-5100 luminance meter made by Otsuka Electronics Co., Ltd. was used. A light source was a halogen lamp. A low-pass filter was set to 5 kHz. A sample was put in a normally white mode TN device in which a distance (cell gap) between two glass substrates was 5.0 micrometers and a twist angle was 80 degrees. A voltage (rectangular waves; 60 Hz, 5 V, 0.5 second) was applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time (τr; millisecond) was expressed in terms of time required for a change from 90% transmittance to 10% transmittance. A fall time (τf; millisecond) was expressed in terms of time required for a change from 10% transmittance to 90% transmittance. A response time was expressed by a sum of the rise time and the fall time thus determined.
(13) Elastic constant (K; measured at 25°C; pN): For measurement, HP4284A LCR Meter made by Yokogawa-Hewlett-Packard Co. was used. A sample was put in a horizontal alignment device in which a distance (cell gap) between two glass substrates was 20 micrometers. An electric charge of 0 V to 20 V was applied to the device, and electrostatic capacity and applied voltage were measured. The measured values of electrostatic capacity (C) and applied voltage (V) were fitted to equation (2.98) and equation (2.101) on page 75 of "Liquid Crystal Device Handbook (Ekisho Debaisu Handobukku in Japanese; Nikkan Kogyo Shimbun, Ltd.)," and values of K11 and K33 were obtained from equation (2.99). Next, K22 was calculated using the previously determined values of K11 and K33 in equation (3.18) on page 171. Elastic constant K was expressed in terms of a mean value of the thus determined K11, K22 and K33.
(14) Specific resistance (ρ; measured at 25°C; Ωcm): Into a vessel equipped with electrodes, 1.0 milliliter of sample was injected. A direct current voltage (10 V) was applied to the vessel, and a direct current after 10 seconds was measured. Specific resistance was calculated from the following equation: (specific resistance) = {(voltage) × (electric capacity of a vessel)} / {(direct current) × (dielectric constant of vacuum)}.
(15) Helical pitch (P; measured at room temperature; µm): A helical pitch was measured according to a wedge method. Refer to page 196 in "Handbook of Liquid Crystals (Ekisho Binran in Japanese)" (issued in 2000, Maruzen Co., Ltd.). A sample was injected into a wedge cell and left to stand at room temperature for 2 hours, and then a gap (d2 - d1) between disclination lines was observed by a polarizing microscope (trade name: MM40/60 Series, Nikon Corporation). A helical pitch (P) was calculated according to the following equation in which an angle of the wedge cell was expressed as θ: P = 2 × (d2 - d1) × tanθ.
(16) Dielectric constant (ε⊥; measured at 25°C) in minor axis (cell gap) between two glass substrates was 9 micrometers and a twist angle was 80 degrees. Sine waves (0.5 V, 1 kHz) were applied to the device, and after 2 seconds, a dielectric constant (ε⊥) of liquid crystal molecules in the minor axis direction was measured.

The compounds in Examples were represented using symbols according to definitions in Table 3 described below. In Table 3, a configuration of 1,4-cyclohexylene is trans. A parenthesized number next to a symbolized compound corresponds to the number of the compound. A symbol (-) means any other liquid crystal compound. A proportion (percentage) of the liquid crystal compound is expressed in terms of weight percent (% by weight) based on the weight of the liquid crystal composition. Values of the characteristics of the composition are summarized in a last part.

| Table 3 Method for description of compounds using symbols | | | |
|---|---|---|---|
| R-(A₁)-Z₁-·····-Zₙ-(Aₙ) -R' | | | |
| 1) Left-terminal group R- | Symbol | 4) Ring structure -Aₙ- | Symbol |
| CₙH₂ₙ₊₁- | n- | 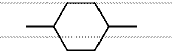 | H |
| CₙH₂ₙ₊₁O- | nO- | | |
| CₘH₂ₘ₊₁OCₙH₂ₙ- | mOn- | | |
| CH₂=CH- | V- | 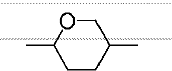 | Dh |
| CₙH₂ₙ₊₁-CH=CH- | nV- | | |
| CH₂=CH-CₙH₂ₙ- | Vn- | 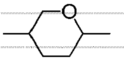 | dh |
| CₘH₂ₘ₊₁-CH=CH-CₙH₂ₙ- | mVn- | | |
| CF₂=CH- | VFF- | | |
| CF₂=CH-CₙH₂ₙ- | VFFn- | 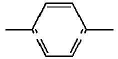 | B |
| 2) Right-terminal group -R' | Symbol | | |
| -CₙH₂ₙ₊₁ | -n | 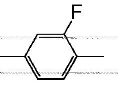 | B(F) |
| -OCₙH₂ₙ₊₁ | -On | | |
| -CH=CH₂ | -V | | |
| -CH=CH-CₙH₂ₙ₊₁ | -Vn | 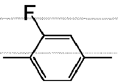 | B(2F) |
| -CₙH₂ₙ-CH=CH₂ | -nV | | |
| -CₙH₂ₙ-CH=CH-CₘH₂ₘ₊₁ | -nVm | 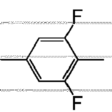 | B(F,F) |
| -CH=CF₂ | -VFF | | |
| -COOCH₃ | -EMe | | |
| -F | -F | | |
| -Cl | -CL | 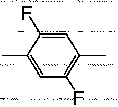 | B(2F,5F) |
| -OCF₃ | -OCF3 | | |
| -CF₃ | -CF3 | | |
| -CN | -C | 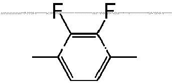 | B(2F,3F) |
| -CF=CH-CF₃ | -FVCF3 | | |
| 3) Bonding group -Zₙ- | Symbol | | |
| -C₂H₄- | 2 | 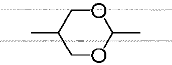 | G |
| -COO- | E | | |
| -CH=CH- | V | | |
| -C≡C- | T | 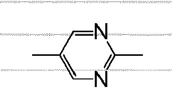 | Py |
| -CF₂O- | X | | |
| -OCF₂- | x | | |
| -CH₂O- | 1O | | |
| 5) Examples of description | | | |

| Example 1 3-dhBB(F,F)XB(F,F)-F | | Example 2 V-HH-V1 | |
|---|---|---|---|
| 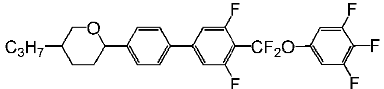 | | 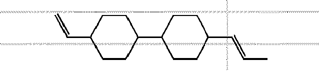 | |

| Example 3 3-HB(F)B(F,F)-F | | Example 4 3-HBB(2F,3F)-O2 | |
|---|---|---|---|
| 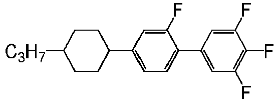 | | 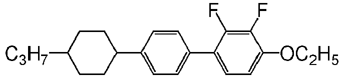 | |

### Comparative Example 1

Composition Example 30 was selected from the compositions disclosed in WO 2004-48501 A. The basis thereof is that the composition contains compound (1-5), and has the smallest rotational viscosity. Components and characteristics of the composition are as described below.

| | | |
|---|---|---|
| 2-dhBB(F,F)XB(F,F)-F | (1-5) | 7% |
| 1V-HH-3 | (3-1) | 13% |
| V-HH-4 | (3-1) | 14% |
| V-HH-5 | (3-1) | 9% |
| 3-HB-O2 | (3-2) | 3.5% |
| V-HHB-1 | (3-5) | 13% |
| V2-HHB-1 | (3-5) | 9.5% |
| 3-HHB-OCF3 | (4) | 3.5% |
| 2-HGB(F,F)-F | (4-6) | 5% |
| 2-BB(F)B(F,F)-F | (4-13) | 6.5% |
| 2-BB(F,F)XB(F,F)-F | (4-16) | 8% |
| 3-BB(F,F)XB(F,F)-F | (4-16) | 8% |

NI = 75.5°C; Tc < -20°C; Δn = 0.0975; Δε = 8.4; Vth = 1.28 V; γ1 = 67.0 mPa·s.

### Example 1

For comparison, a composition in which compound (2) of a second component was used in place of compound (3-1) of a fourth component being a compound similar to compound (2) in Comparative Example 1 was taken as Example 1.

| | | |
|---|---|---|
| 2-dhBB(F,F)XB(F,F)-F | (1-5) | 7% |
| V-HH-V1 | (2) | 36% |
| 3-HB-O2 | (3-2) | 3.5% |
| V-HHB-1 | (3-5) | 13% |
| V2-HHB-1 | (3-5) | 9.5% |
| 3-HHB-OCF3 | (4) | 3.5% |
| 2-HGB(F,F)-F | (4-6) | 5% |
| 2-BB(F)B(F,F)-F | (4-13) | 6.5% |
| 2-BB(F,F)XB(F,F)-F | (4-16) | 8% |
| 3-BB(F,F)XB(F,F)-F | (4-16) | 8% |

NI = 72.0°C; Tc < -20°C; Δn = 0.101; Δε = 6.5; Vth = 1.46 V; η = 11.6 mPa·s; γ1 = 56.8 mPa·s.

### Comparative Example 2

Composition Example 2 was selected from the compositions disclosed in JP 2010-275390 A. The basis thereof is that the composition contains compound (2), and has the largest dielectric anisotropy. Components and characteristics of the composition are as described below.

| | | |
|---|---|---|
| V-HH-2V | (2) | 20% |
| V2-HH-2V | (2) | 10% |
| 1V2-HH-V | (2) | 5% |
| V-HH-3 | (3-1) | 15% |
| V-HH-5 | (3-1) | 6% |
| V2-HHB-1 | (3-5) | 6% |
| 1V-HBB-2 | (3-6) | 3% |
| V2-BB(2F)B-3 | (3-8) | 5% |
| 3-HHEBH-5 | (3-11) | 3% |
| 3-HHB (F, F) -F | (4-2) | 3% |
| 3-BB(F,F)XB(F,F)-F | (4-16) | 10% |
| 3-HBB(F,F)XB(F,F)-F | (4-22) | 7% |
| 3-HB(F)B(F,F)XB(F,F)-F | (4) | 7% |

NI = 75.1°C; Tc < -20°C; Δn = 0.091; Δε = 3.2; Vth = 2.38 V; η = 11.8 mPa·s; γ1 = 46.8 mPa·s.

### Example 2

For comparison, a composition in which compound (1-1) and (1-5) of the first component were used in place of compound (4-16), (4-22) and (4) of the fourth component being a compound similar to compound (1) in Comparative Example 2 was taken as Example 2.

| | | |
|---|---|---|
| 3-dhB(F,F)XB(F,F)-F | (1-1) | 10% |
| 3-dhBB(F,F)XB(F,F)-F | (1-5) | 7% |
| 3-dhB(F)B(F,F)XB(F,F)-F | (1-5) | 7% |
| V-HH-2V | (2) | 20% |
| V2-HH-2V | (2) | 10% |
| 1V2-HH-V | (2) | 5% |
| V-HH-3 | (3-1) | 15% |
| V-HH-5 | (3-1) | 6% |
| V2-HHB-1 | (3-5) | 6% |
| 1V-HBB-2 | (3-6) | 3% |
| V2-BB(2F)B-3 | (3-8) | 5% |
| 3-HHEBH-5 | (3-11) | 3% |
| 3-HHB(F,F)-F | (4-2) | 3% |

NI = 73.4°C; Tc < -20°C; Δn = 0.086; Δε = 3.9; Vth = 2.04 V; η = 14.1 mPa·s; γ1 = 52.0 mPa·s.

### Example 3

For comparison, a composition in which compound (1-2) and (1-8) of the first component were used in place of compound (4-16), (4-22) and (4) of the fourth component being the compound similar to compound (1) in Comparative Example 2 was taken as Example 3.

| | | |
|---|---|---|
| 3-GB(F,F)XB(F,F)-F | (1-2) | 10% |
| 3-GBB(F,F)XB(F,F)-F | (1-8) | 7% |
| 3-GB(F)B(F,F)XB(F,F)-F | (1-8) | 7% |
| V-HH-2V | (2) | 20% |
| V2-HH-2V | (2) | 10% |
| 1V2-HH-V | (2) | 5% |
| V-HH-3 | (3-1) | 15% |
| V-HH-5 | (3-1) | 6% |
| V2-HHB-1 | (3-5) | 6% |
| 1V-HBB-2 | (3-6) | 3% |
| V2-BB(2F)B-3 | (3-8) | 5% |
| 3-HHEBH-5 | (3-11) | 3% |
| 3-HHB(F,F)-F | (4-2) | 3% |

NI = 73.3°C; Tc < -20°C; Δn = 0.089; Δε = 6.0; Vth = 1.57 V; η = 14.1 mPa·s; γ1 = 55.7 mPa·s.

### Comparative Example 3

Composition Example 10 was selected from the compositions disclosed in WO 2010-131594 A. The basis thereof is that the composition contains compound (2), and has the largest dielectric anisotropy. Components and characteristics of the composition are as described below.

| | | |
|---|---|---|
| V-HH-V | (2) | 10% |
| V-HH-2V | (2) | 10% |
| V-HH-3 | (3-1) | 15% |
| V2-HHB-1 | (3-5) | 5% |
| V2-BB(2F)B-1 | (3-8) | 5% |
| 5-HBB(F)B-3 | (3-13) | 4% |
| 3-HBB(F,F)-F | (4-8) | 20% |
| 3-BB(F)B(F,F)-F | (4-13) | 8% |
| 3-HHB(F)B(F,F)-F | (4-18) | 4% |
| 3-H2HB(F,F)-F | (4) | 6% |
| 3-BB(F,F)B-F | (4) | 4% |
| 3-B2BB(F,F)-F | (4) | 5% |
| 3-HH2BB(F,F)-F | (4) | 4% |

NI = 80.3°C; Tc < -20°C; Δn = 0.118; Δε = 6.0; Vth = 1.60 V; η = 14.3 mPa·s; γ1 = 67.9 mPa·s.

### Example 4

For comparison, a composition in which compound (1-1) of the first component was used in place of compound (4-8) of the fourth component in Comparative Example 3 was taken as Example 4.

| | | |
|---|---|---|
| 3-dhBXB(F,F)-F | (1-1) | 20% |
| V-HH-V | (2) | 10% |
| V-HH-2V | (2) | 10% |
| V-HH-3 | (3-1) | 15% |
| V2-HHB-1 | (3-5) | 5% |
| V2-BB(2F)B-1 | (3-8) | 5% |
| 5-HBB(F)B-3 | (3-13) | 4% |
| 3-BB(F)B(F,F)-F | (4-13) | 8% |
| 3-HHB(F)B(F,F)-F | (4-18) | 4% |
| 3-H2HB(F,F)-F | (4) | 6% |
| 3-BB(F,F)B-F | (4) | 4% |
| 3-B2BB(F,F)-F | (4) | 5% |
| 3-HH2BB(F,F)-F | (4) | 4% |

NI = 74.6°C; Tc < -20°C; Δn = 0.110; Δε = 7.1; Vth = 1.42 V; η = 12.4 mPa·s; γ1 = 58.0 mPa·s.

### Example 5

For comparison, a composition in which compound (1-2) of the first component was used in place of compound (4-8) of the fourth component in Comparative Example 3 was taken as Example 5.

| | | |
|---|---|---|
| 3-GBXB(F,F)-F | (1-2) | 20% |
| V-HH-V | (2) | 10% |
| V-HH-2V | (2) | 10% |
| V-HH-3 | (3-1) | 15% |
| V2-HHB-1 | (3-5) | 5% |
| V2-BB(2F)B-1 | (3-8) | 5% |
| 5-HBB(F)B-3 | (3-13) | 4% |
| 3-BB(F)B(F,F)-F | (4-13) | 8% |
| 3-HHB(F)B(F,F)-F | (4-18) | 4% |
| 3-H2HB(F,F)-F | (4) | 6% |
| 3-BB(F,F)B-F | (4) | 4% |
| 3-B2BB(F,F)-F | (4) | 5% |
| 3-HH2BB(F,F)-F | (4) | 4% |

NI = 75.4°C; Tc < -20°C; Δn = 0.111; Δε = 9.3; Vth = 1.30 V; η = 12.3 mPa·s; γ1 = 57.6 mPa·s.

### Example 6

| | | |
|---|---|---|
| 2-GB(F,F)XB(F,F)-F | (1-2) | 5% |
| 3-GB(F,F)XB(F,F)-F | (1-2) | 5% |
| 5-GB(F,F)XB(F,F)-F | (1-2) | 5% |
| 5-GHB (F,F)XB(F,F) -F | (1-6) | 4% |
| V-HH-V | (2) | 17% |
| V-HH-V1 | (2) | 10% |
| 2-HH-3 | (3-1) | 3% |
| 2-HH-5 | (3-1) | 3% |
| 1-BB-3 | (3-3) | 5% |
| V-HHB-1 | (3-5) | 8% |
| V2-HHB-1 | (3-5) | 5% |
| 3-HBB-2 | (3-6) | 3% |
| V-HBB-2 | (3-6) | 4% |
| V2-BB(2F)B-3 | (3-8) | 5% |
| 3-HHXB(F,F)-F | (4-4) | 5% |
| 2-HBB(F,F)-F | (4-8) | 4% |
| 2-HHBB(F,F)-F | (4-17) | 3% |
| 3-HHBB(F,F)-F | (4-17) | 3% |
| 3-HB(2F,3F)BXB(F,F)-F | (4-29) | 3% |

NI = 71.2°C; Tc < -20°C; Δn = 0.111; Δε = 5.6; Vth = 1.54 V; η = 13.4 mPa·s; γ1 = 64.7 mPa·s.

### Example 7

| | | |
|---|---|---|
| 3-GHXB(F,F)-F | (1-4) | 3% |
| 5-GHXB(F,F)-F | (1-4) | 3% |
| 3-HGB(F,F)XB(F)-OCF3 | (1-7) | 3% |
| 3-GBB(F,F)XB(F,F)-F | (1-8) | 3% |
| V-HH-V1 | (2) | 20% |
| 1V-HH-2V1 | (2) | 5% |
| 3-HH-4 | (3-1) | 7% |
| 1-BB-5 | (3-3) | 9% |
| 3-HHB-O1 | (3-5) | 3% |
| 3-HHB-3 | (3-5) | 3% |
| V2-HHB-1 | (3-5) | 7% |
| 3-BB(2F)B-2 | (3-8) | 4% |
| V2-BB(2F)B-1 | (3-8) | 3% |
| V2-BB(2F)B-2 | (3-8) | 5% |
| V2-BB(2F)B-3 | (3-8) | 5% |
| 5-HXB(F,F)-F | (4-1) | 5% |
| 3-BB(F,F)XB(F,F)-F | (4-16) | 7% |
| 4-GBB(F)B(F,F)-F | (4-20) | 2% |
| 3-BB (2F,3F)BXB(F,F)-F | (4-30) | 3% |

NI = 80.8°C; Tc < -20°C; Δn = 0.126; Δε = 3.6; Vth = 1.87 V; η = 14.2 mPa·s; γ1 = 68.3 mPa·s.

### Example 8

| | | |
|---|---|---|
| 3-GB(F,F)XB(F,F)-F | (1-2) | 8% |
| 5-GHXB(F,F)-F | (1-4) | 3% |
| 4-GHB(F,F)XB(F,F)-F | (1-6) | 3% |
| 5-GHB(F,F)XB(F,F)-F | (1-6) | 3% |
| V-HH-V | (2) | 15% |
| V-HH-2V1 | (2) | 13% |
| 1V-HH-2V | (2) | 8% |
| 3-HH-5 | (3-1) | 5% |
| V2-HHB-1 | (3-5) | 13% |
| 5-BB(2F)B-2 | (3-8) | 4% |
| V2-BB(2F)B-2 | (3-8) | 4% |
| 3-HHEBH-3 | (3-11) | 3% |
| 1-HHB(F,F)-F | (4-2) | 3% |
| 3-HHB(F,F)-F | (4-2) | 3% |
| 5-HHB(F,F)-F | (4-2) | 3% |
| 4-HHB(F)B(F,F)-F | (4-18) | 3% |
| 3-B(2F,3F)BXB(F,F)-F | (4-28) | 3% |
| V2-B(2F,3F)BXB(F,F)-F | (4-28) | 3% |

NI = 82.8°C; Tc < -20°C; Δn = 0.097; Δε = 4.9; Vth = 1.72 V; η = 14.0 mPa·s; γ1 = 67.3 mPa·s.

### Example 9

| | | |
|---|---|---|
| 3-dhHXB(F,F)-F | (1-3) | 3% |
| 5-dhBB(F,F)XB(F,F)-F | (1-5) | 3% |
| 3-GB(F)B(F,F)XB(F,F)-F | (1-8) | 3% |
| 4-GB(F)B(F,F)XB(F,F)-F | (1-8) | 3% |
| 5-GB(F)B(F,F)XB(F,F)-F | (1-8) | 3% |
| V-HH-V | (2) | 15% |
| V-HH-V1 | (2) | 12% |
| V-HH-2V1 | (2) | 10% |
| V-HH-3 | (3-1) | 9% |
| VFF-HH-3 | (3-1) | 3% |
| V-HHB-1 | (3-5) | 6% |
| V2-HHB-1 | (3-5) | 5% |
| 5-HBB(F)B-2 | (3-13) | 3% |
| 3-HHEB(F,F)-F | (4-3) | 3% |
| 4-HHEB(F,F)-F | (4-3) | 3% |
| 5-HHEB(F,F)-F | (4-3) | 3% |
| 2-BB(F)B(F,F)-F | (4-13) | 7% |
| 5-BB(F)B(F,F)XB(F,F)-F | (4-24) | 3% |
| 3-BB(2F,3F)XB(F,F)-F | (4-27) | 3% |

NI = 77.6°C; Tc < -20°C; Δn = 0.097; Δε = 5.9; Vth = 1.52 V; η = 13.6 mPa·s; γ1 = 65.7 mPa·s.

### Example 10

| | | |
|---|---|---|
| 2-GB(F,F)XB(F,F)-F | (1-2) | 3% |
| 3-GB(F,F)XB(F,F)-F | (1-2) | 3% |
| 4-GBB(F,F)XB(F,F)-F | (1-8) | 3% |
| 3-GBXB(F)B(F,F)-F | (1-10) | 3% |
| 4-GB(F)XB(F)B(F,F)-F | (1-10) | 3% |
| V-HH-V | (2) | 17% |
| 1V-HH-V1 | (2) | 10% |
| 1V2-HH-2V1 | (2) | 3% |
| V-HH-4 | (3-1) | 7% |
| V2-BB-1 | (3-3) | 6% |
| V-HHB-1 | (3-5) | 7% |
| V2-HHB-1 | (3-5) | 5% |
| V-HBB-2 | (3-6) | 4% |
| V2-BB(2F)B-2 | (3-8) | 3% |
| V2-B2BB-1 | (3-9) | 3% |
| 3-HB(F)HH-5 | (3-10) | 2% |
| 1-HHXB(F,F)-F | (4-4) | 3% |
| 3-BB(F,F)XB(F,F)-F | (4-16) | 7% |
| 5-BB(F)B(F,F)XB(F)B(F,F)-F | (4-26) | 3% |
| 3-HBB(2F,3F)-O2 | (5-10) | 5% |

NI = 78.5°C; Tc < -20°C; Δn = 0.113; Δε = 5.4; Vth = 1.57 V; η = 13.9 mPa·s; γ1 = 66.9 mPa·s.

### Example 11

| | | |
|---|---|---|
| 3-dhBXB(F,F)-F | (1-1) | 7% |
| 3-dhHXB(F,F)-F | (1-3) | 5% |
| 5-GBB(F,F)XB(F,F)-F | (1-8) | 3% |
| 4-GB(F)B(F,F)XB(F)B(F,F)-F | (1-12) | 3% |
| V-HH-V1 | (2) | 26% |
| V-HH-2V1 | (2) | 10% |
| 5-HB-O2 | (3-2) | 5% |
| 3-HHB-3 | (3-5) | 4% |
| V2-HHB-1 | (3-5) | 9% |
| 3-BB(2F)B-2 | (3-8) | 3% |
| 5-BB(2F)B-2 | (3-8) | 4% |
| V2-BB(2F)B-2 | (3-8) | 4% |
| V2-BB(2F)B-3 | (3-8) | 3% |
| 3-HHXB(F,F)-CF3 | (4-5) | 3% |
| 3-BB(F,F)XB(F,F)-F | (4-16) | 8% |
| 3-BB(F,F)XB(F)B(F,F)-F | (4-25) | 3% |

NI = 80.0°C; Tc < -20°C; Δn = 0.116; Δε = 5.9; Vth = 1.50 V; η = 14.1 mPa·s; γ1 = 68.1 mPa·s.

### Example 12

| | | |
|---|---|---|
| 3-dhB(F,F)XB(F)B(F,F)-F | (1-9) | 5% |
| 3-dhB(F,F)B(F,F)XB(F)B(F,F)-F | (1-11) | 5% |
| 3-dhB(F,F)B(F,F)XBB(F,F)-F | (1-11) | 5% |
| V-HH-V1 | (2) | 25% |
| 1V-HH-V1 | (2) | 10% |
| V-HH-3 | (3-1) | 16% |
| 3-HHEH-3 | (3-4) | 3% |
| V-HHB-1 | (3-5) | 6% |
| V2-HHB-1 | (3-5) | 4% |
| 3-HBB-2 | (3-6) | 5% |
| V2-BB(2F)B-1 | (3-8) | 4% |
| 3-HGB(F,F)-F | (4-6) | 3% |
| 5-HGB(F,F)-F | (4-6) | 3% |
| 3-BB(F)B(F,F)XB(F,F)-F | (4-24) | 3% |
| 4-BB(F)B(F,F)XB(F,F)-F | (4-24) | 3% |

NI = 91.5°C; Tc < -20°C; Δn = 0.108; Δε = 6.3; Vth = 1.46 V; η = 13.9 mPa·s; γ1 = 67.3 mPa·s.

### Example 13

| | | |
|---|---|---|
| 3-GB(F,F)XB(F,F)-F | (1-2) | 10% |
| 5-GB(F,F)XB(F,F)-F | (1-2) | 6% |
| 3-GBB(F,F)XB(F,F)-F | (1-8) | 3% |
| V-HH-V | (2) | 25% |
| 1V-HH-V1 | (2) | 6% |
| 1V2-HH-2V1 | (2) | 5% |
| 1V2-HH-1 | (3-1) | 3% |
| V-HHB-1 | (3-5) | 7% |
| V2-HHB-1 | (3-5) | 6% |
| V-HBB-2 | (3-6) | 6% |
| 3-BB(2F)B-2 | (3-8) | 3% |
| 5-HBB(F)B-2 | (3-13) | 3% |
| V2-BB2B-1 | (3) | 3% |
| 3-GHB(F,F)-F | (4-7) | 3% |
| 5-GHB(F,F)-F | (4-7) | 3% |
| 3-BB(F,F)XB(F,F)-F | (4-16) | 5% |
| 3-BB(F)B(F,F)XB(F)-F | (4-23) | 3% |

NI = 70.3°C; Tc < -20°C; Δn = 0.103; Δε = 6.7; Vth = 1.43 V; η = 12.4 mPa·s; γ1 = 59.8 mPa·s.

### Example 14

| | | |
|---|---|---|
| 3-dhBXB(F,F)-F | (1-1) | 8% |
| 3-GB(F,F)XB(F,F)-F | (1-2) | 5% |
| 3-dhBB(F,F)XB(F,F)-F | (1-5) | 5% |
| V-HH-V1 | (2) | 16% |
| V-HH-2V1 | (2) | 14% |
| V2-HH-2V | (2) | 7% |
| V-HH-3 | (3-1) | 10% |
| V2-HHB-1 | (3-5) | 8% |
| 3-HBB-2 | (3-6) | 5% |
| 5-B(F)BB-3 | (3-7) | 3% |
| 3-HBB(F,F)-F | (4-8) | 3% |
| 5-HBB(F,F)-F | (4-8) | 3% |
| 3-BB(F,F)XB(F,F)-F | (4-16) | 5% |
| 3-GBB(F)B(F,F)-F | (4-20) | 3% |
| 3-HBB(F,F)XB(F,F)-F | (4-22) | 5% |

NI = 75.5°C; Tc < -20°C; Δn = 0.102; Δε = 5.3; Vth = 1.59 V; η = 13.5 mPa·s; γ1 = 64.9 mPa·s.

### Example 15

| | | |
|---|---|---|
| 2-dhBB(F,F)XB(F,F)-F | (1-5) | 3% |
| 3-dhBB(F,F)XB(F,F)-F | (1-5) | 3% |
| 5-dhBB(F,F)XB(F,F)-F | (1-5) | 3% |
| 3-dhB(F)B(F,F)XB(F,F)-F | (1-5) | 3% |
| 5-GB(F)B(F,F)XB(F)B(F,F)-F | (1-12) | 3% |
| V-HH-V | (2) | 10% |
| V-HH-V1 | (2) | 10% |
| V-HH-2V1 | (2) | 10% |
| 1V-HH-2V | (2) | 3% |
| V2-HH-2V1 | (2) | 3% |
| 1V-HH-3 | (3-1) | 10% |
| 3-HB-O2 | (3-2) | 5% |
| V-HHB-1 | (3-5) | 8% |
| V2-HHB-1 | (3-5) | 5% |
| V2-BB(2F)B-2 | (3-8) | 3% |
| V2-BB(2F)B-3 | (3-8) | 3% |
| 2-HHB(F,F)-F | (4-2) | 3% |
| 4-HHB(F,F)-F | (4-2) | 3% |
| 3-HB(F)B(F,F)-F | (4-9) | 3% |
| 3-HBBXB(F,F)-F | (4-21) | 3% |
| 5-HBBXB(F,F)-F | (4-21) | 3% |

NI = 90.3°C; Tc < -20°C; Δn = 0.106; Δε = 4.0; Vth = 1.80 V; η = 13.5 mPa·s; γ1 = 65.2 mPa·s.

### Example 16

| | | |
|---|---|---|
| 3-dhB(F,F)XB(F,F)-F | (1-1) | 7% |
| 3-dhB(F)B(F,F)XB(F,F)-F | (1-5) | 2% |
| 3-dhB(F,F)B(F,F)XB(F,F)-F | (1-5) | 2% |
| V-HH-V1 | (2) | 30% |
| 1V-HH-2V1 | (2) | 6% |
| 1V2-BB-1 | (3-3) | 6% |
| V-HHB-1 | (3-5) | 4% |
| V2-HHB-1 | (3-5) | 9% |
| 5-B(F)BB-2 | (3-7) | 3% |
| V2-BB(2F)B-2 | (3-8) | 4% |
| 5-HB(F)B(F,F)-F | (4-9) | 3% |
| V-HB(F)B(F,F)-F | (4-9) | 3% |
| 3-BB(F,F)XB(F,F)-F | (4-16) | 15% |
| 3-GBB(F)B(F,F)-F | (4-20) | 3% |
| 1O1-HBBH-5 | (-) | 3% |

NI = 72.9°C; Tc < -20°C; Δn = 0.118; Δε = 6.5; Vth = 1.44 V; η = 14.0 mPa·s; γ1 = 67.7 mPa·s.

### Example 17

| | | |
|---|---|---|
| 2-GB(F,F)XB(F,F)-F | (1-2) | 5% |
| 4-HGB(F,F)XB(F,F)-F | (1-7) | 5% |
| 5-HGB(F,F)XB(F,F)-F | (1-7) | 5% |
| V-HH-V | (2) | 15% |
| V-HH-V1 | (2) | 10% |
| 1V-HH-V1 | (2) | 10% |
| V-HH-3 | (3-1) | 9% |
| 7-HB-1 | (3-2) | 3% |
| 3-HHB-O1 | (3-5) | 6% |
| V2-HHB-1 | (3-5) | 7% |
| 3-HBB-2 | (3-6) | 5% |
| 3-BB(F,F)XB(F,F)-F | (4-16) | 14% |
| 3-GB(F)B(F)B(F)-F | (4-19) | 3% |
| 5-GB(F)B(F)B(F)-F | (4-19) | 3% |

NI = 74.5°C; Tc < -20°C; Δn = 0.094; Δε = 5.7; Vth = 1.53 V; η = 13.2 mPa·s; γ1 = 63.6 mPa·s.

### Example 18

| | | |
|---|---|---|
| 3-GBXB(F,F)-F | (1-2) | 10% |
| 3-GB(F)B(F,F)XB(F,F)-F | (1-8) | 3% |
| 4-GB(F,F)XB(F)B(F)-CF3 | (1-10) | 3% |
| V-HH-V | (2) | 20% |
| V-HH-V1 | (2) | 5% |
| V-HH-2V1 | (2) | 10% |
| 1V2-HH-3 | (3-1) | 4% |
| 2-HHB-1 | (3-5) | 3% |
| V-HHB-1 | (3-5) | 5% |
| VFF-HHB-1 | (3-5) | 3% |
| V-HBB-2 | (3-6) | 6% |
| 3-BB(2F)B-2 | (3-8) | 5% |
| 3-HHEBH-4 | (3-11) | 5% |
| 2-HBEB(F,F)-F | (4-10) | 3% |
| 3-HBEB(F,F)-F | (4-10) | 4% |
| 5-HBEB(F,F)-F | (4-10) | 3% |
| 3-BB(F)B(F,F)-F | (4-13) | 5% |
| 2-HHB(F)B(F,F)-F | (4-18) | 3% |

NI = 86.6°C; Tc < -20°C; Δn = 0.109; Δε = 6.2; Vth = 1.47 V; η = 13.9 mPa·s; γ1 = 66.9 mPa·s.

### Example 19

| | | |
|---|---|---|
| 3-dhHXB(F,F)-F | (1-3) | 5% |
| 3-dhB(F)B(F,F)XB(F,F)-F | (1-5) | 4% |
| 3-dhB(F,F)B(F,F)XB(F,F)-F | (1-5) | 5% |
| V-HH-V | (2) | 10% |
| V-HH-V1 | (2) | 14% |
| 1V-HH-V1 | (2) | 5% |
| 1V2-HH-2V1 | (2) | 3% |
| V-HH-3 | (3-1) | 15% |
| 3-HHB-1 | (3-5) | 3% |
| V-HHB-1 | (3-5) | 5% |
| V2-HHB-1 | (3-5) | 5% |
| 5-HB(F)BH-3 | (3-12) | 4% |
| V2-BB2B-1 | (3) | 4% |
| 3-GB(F)B(F)-F | (4-11) | 5% |
| 3-BB(F',F')XB(F',F')-F | (4-16) | 7% |
| 4-HHBB(F,F)-F | (4-17) | 3% |
| 5-HHBB(F,F)-F | (4-17) | 3% |

NI = 86.6°C; Tc < -20°C; Δn = 0.098; Δε = 5.0; Vth = 1.72 V; η = 13.0 mPa·s; γ1 = 62.4 mPa·s.

### Example 20

| | | |
|---|---|---|
| 3-GBXB(F,F)-F | (1-2) | 3% |
| 3-GB(F,F)XB(F,F)-F | (1-2) | 5% |
| 5-GHXB(F,F)-F | (1-4) | 8% |
| V-HH-V | (2) | 9% |
| V-HH-V1 | (2) | 24% |
| 1V2-HH-2V1 | (2) | 4% |
| 1V-HH-3 | (3-1) | 8% |
| V-HHB-1 | (3-5) | 4% |
| V2-HHB-1 | (3-5) | 5% |
| 3-BB(2F)B-2 | (3-8) | 3% |
| 5-BB(2F)B-2 | (3-8) | 3% |
| V2-BB(2F)B-1 | (3-8) | 3% |
| V2-BB(2F)B-2 | (3-8) | 3% |
| 3-HHEBH-5 | (3-11) | 3% |
| 4-GHB(F,F)-F | (4-7) | 3% |
| 3-GB(F)B(F,F)-F | (4-12) | 3% |
| 5-GB(F)B(F,F)-F | (4-12) | 3% |
| 3-BB(F)B(F,F)-CF3 | (4-14) | 3% |
| 3-BBXB(F,F)-F | (4-15) | 3% |

NI = 77.7°C; Tc < -20°C; Δn = 0.105; Δε = 5.0; Vth = 1.68 V; η = 10.8 mPa·s; γ1 = 53.1 mPa·s.

The composition in Example 1 had smaller rotational viscosity in comparison with the composition in Comparative Example 1. The compositions in Example 2 and 3 had larger dielectric anisotropy in comparison with the composition in Comparative Example 2, and the compositions in Example 4 and 5 had larger dielectric anisotropy in comparison with the composition in Comparative Example 3, respectively. Accordingly, the liquid crystal composition of the invention is concluded to have superb characteristics.

### Industrial Applicability

A liquid crystal composition of the invention satisfies at least one of characteristics such as high maximum temperature, low minimum temperature, small viscosity, suitable optical anisotropy, large dielectric anisotropy, large specific resistance, high stability to ultraviolet light, high stability to heat and a large elastic constant, or has a suitable balance regarding at least two of the characteristics. A liquid crystal display device including the composition has characteristics such as a short response time, a large voltage holding ratio, a large contrast ratio and a long service life, and thus can be used in a liquid crystal projector, a liquid crystal television and so forth.

## Claims

1. A liquid crystal composition that has positive dielectric anisotropy, and contains at least one compound selected from compounds represented by formula (1) as a first component and at least one compound selected from compounds represented by formula (2) as a second component, wherein a proportion of the second component is 15% by weight to 50% by weight: 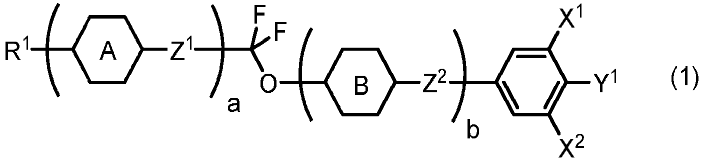 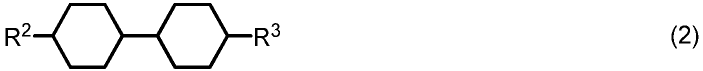 wherein, in formula (1) and formula (2), R¹ is alkyl having 1 to 12 carbons, alkoxy having 1 to 12 carbons or alkenyl having 2 to 12 carbons; R² and R³ are independently alkenyl having 2 to 12 carbons; ring A and ring B are independently 1,4-cyclohexylene, 1,4-cyclohexenylene, 1,4-phenylene, 1,4-phenylene in which at least one hydrogen is replaced by fluorine or chlorine, tetrahydropyran-2,5-diyl, 1,3-dioxane-2,5-diyl, pyrimidine-2,5-diyl, or pyridine-2,5-diyl, and at least one ring A is tetrahydropyran-2,5-diyl or 1,3-dioxane-2,5-diyl; Z¹ and Z² are independently a single bond, ethylene, vinylene, methyleneoxy, carbonyloxy or difluoromethyleneoxy; X¹ and X² are independently hydrogen or fluorine; Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; a is 1, 2, 3 or 4; b is 0, 1, 2 or 3; and a sum of a and b is 4 or less.

2. The liquid crystal composition according to claim 1, containing at least 5 one compound selected from the group of compounds represented by formula (1-1) to formula (1-12) as the first component: 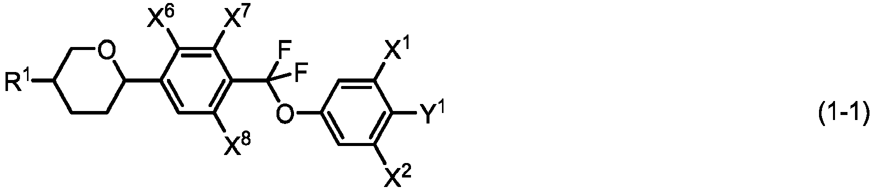 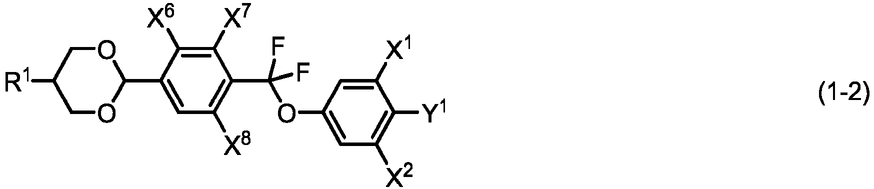 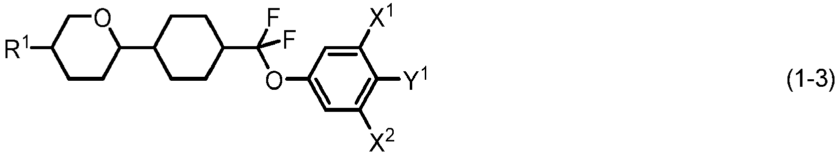 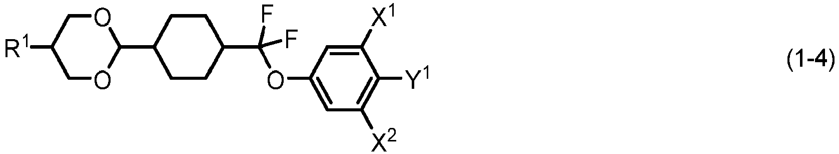 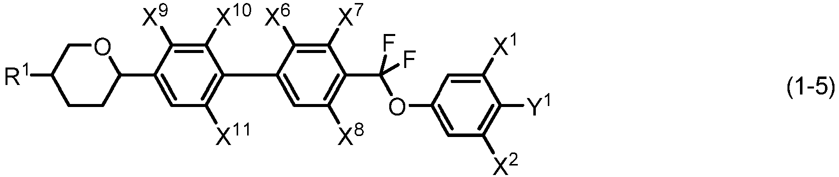 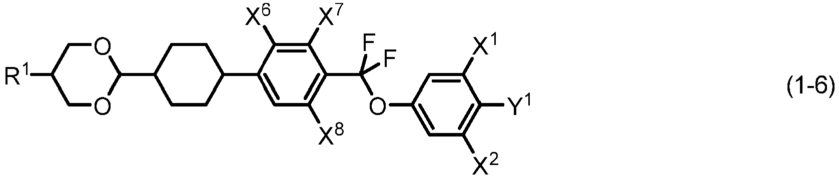 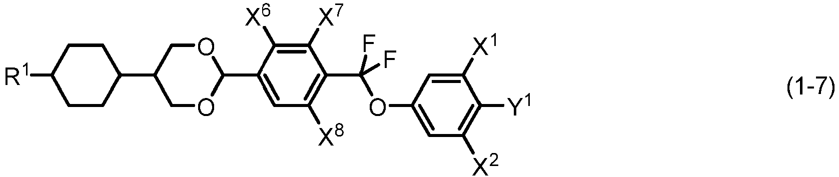 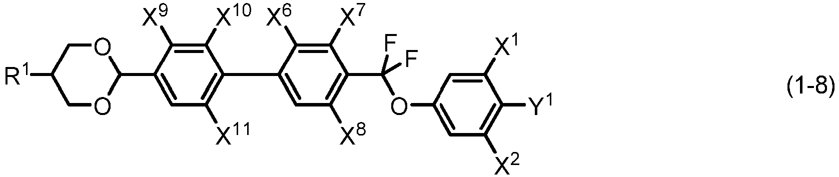 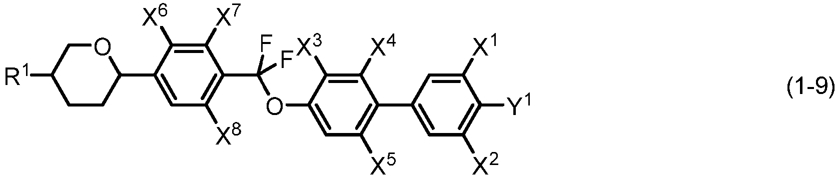 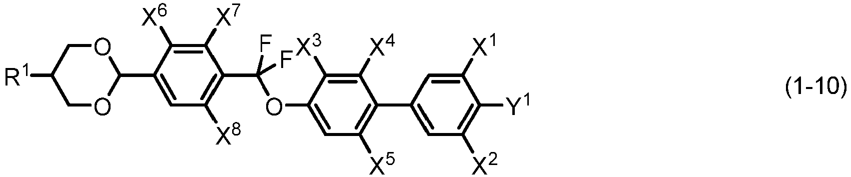 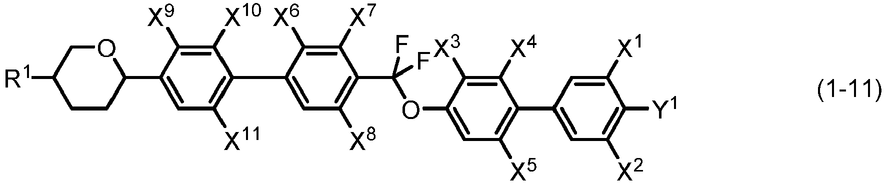 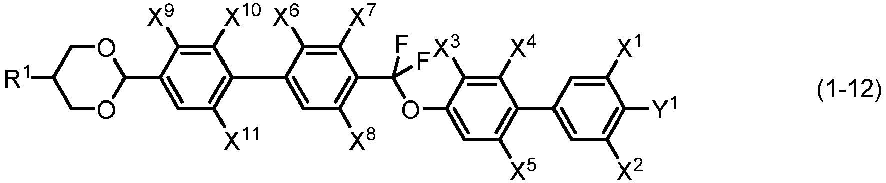 wherein, in formula (1-1) to formula (1-12), R¹ is alkyl having 1 to 12 carbons, alkoxy having 1 to 12 carbons or alkenyl having 2 to 12 carbons; X¹, X², X³, X⁴, X⁵, X⁶, X⁷, X⁸, X⁹, X¹⁰ and X¹¹ are independently hydrogen or fluorine; and Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine.

3. The liquid crystal composition according to claim 1 or 2, wherein a proportion of the first component is in the range of 5% by weight to 40% by weight, based on the weight of the liquid crystal composition.

4. The liquid crystal composition according to any one of claims 1 to 3, containing at least one compound selected from compounds represented by formula (3) as a third component: 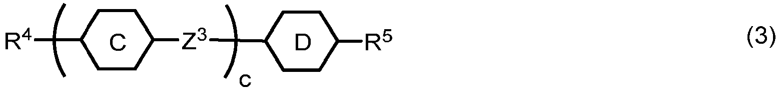 wherein, in formula (3), R⁴ is alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; R⁵ is alkyl having 1 to 12 carbons or alkoxy having 1 to 12 carbons; ring C and ring D are independently 1,4-cyclohexylene, 1,4-phenylene, 2-fluoro-1,4-phenylene or 2,5-difluoro-1,4-phenylene; Z³ is a single bond, ethylene carbonyloxy or methyleneoxy; and c is 1, 2 or 3.

5. The liquid crystal composition according to any one of claims 1 to 4, containing at least one compound selected from the group of compounds represented by formula (3-1) to formula (3-13) as the third component: 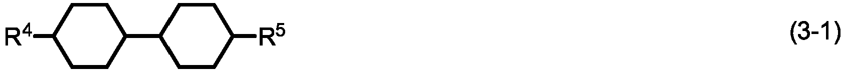 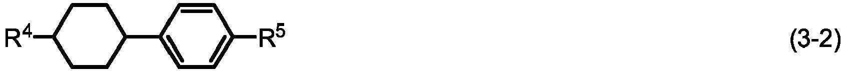 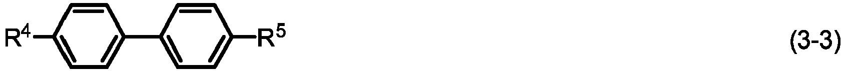 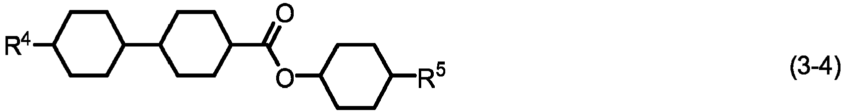 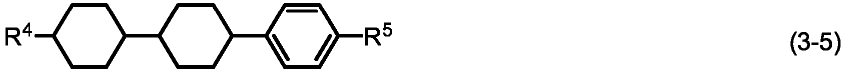 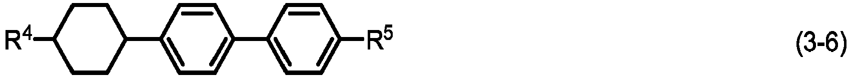 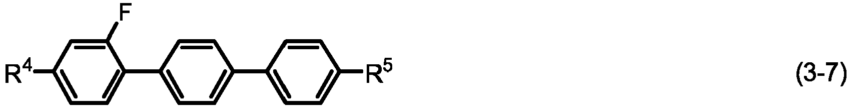 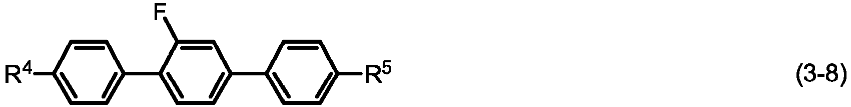 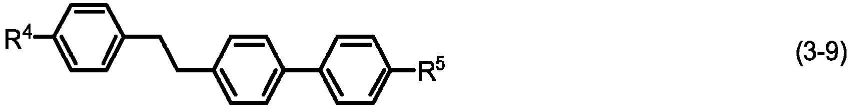 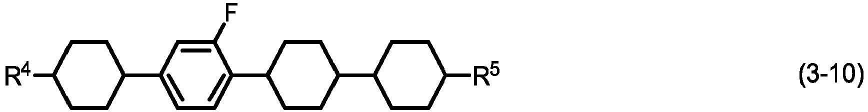 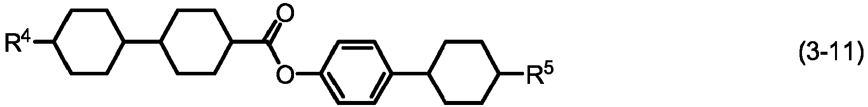 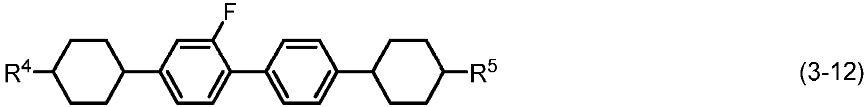 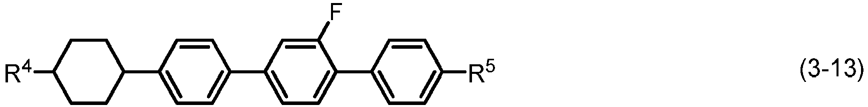 wherein, in formula (3-1) to formula (3-13), R⁴ is alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; and R⁵ is alkyl having 1 to 12 carbons or alkoxy having 1 to 12 carbons.

6. The liquid crystal composition according to claim 4 or 5, wherein a proportion of the third component is in the range of 10% by weight to 80% by weight based on the weight of the liquid crystal composition.

7. The liquid crystal composition according to any one of claims 1 to 6, further containing at least one compound selected from compounds represented by formula (4) as a fourth component: 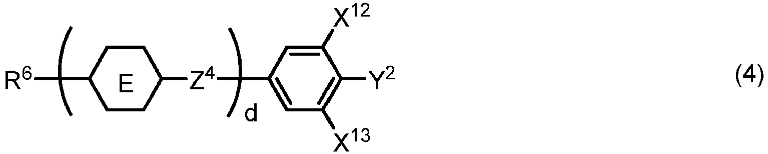 wherein, in formula (4), R⁶ is alkyl having 1 to 12 carbons, alkoxy having 1 to 12 carbons or alkenyl having 2 to 12 carbons; ring E is 1,4-cyclohexylene, 1,4-phenylene, 2-fluoro-1,4-phenylene, 2,3-difluoro-1,4-phenylene, 2,6-difluoro-1,4-phenylene, tetrahydropyran-2,5-diyl, 1,3-dioxane-2,5-diyl or pyrimidine-2,5-diyl; Z⁴ is a single bond, ethylene, carbonyloxy or difluoromethyleneoxy; X¹² and X¹³ are independently hydrogen or fluorine; Y² is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; d is 1, 2, 3 or 4; and in which, when Z⁴ is difluoromethyleneoxy, ring E is 1,4-cyclohexylene, 1,4-phenylene, 2-fluoro-1,4-phenylene, 2,3-difluoro-1,4-phenylene, 2,6-difluoro-1,4-phenylene or pyrimidine-2,5-diyl.

8. The liquid crystal composition according to any one of claims 1 to 7, containing at least one compound selected from the group of compounds represented by formula (4-1) to formula (4-30) as the fourth component: 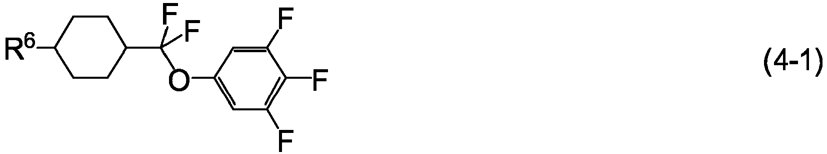 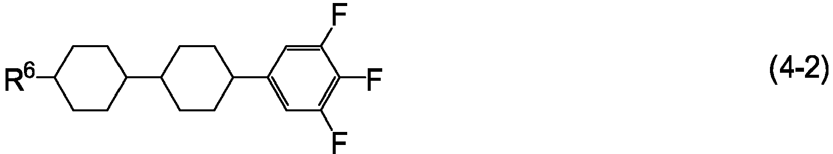 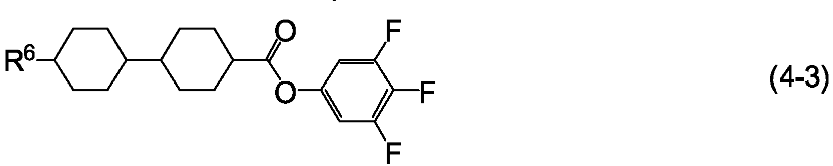 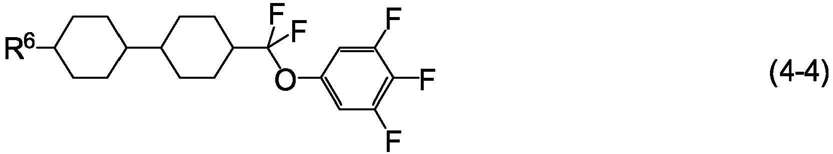 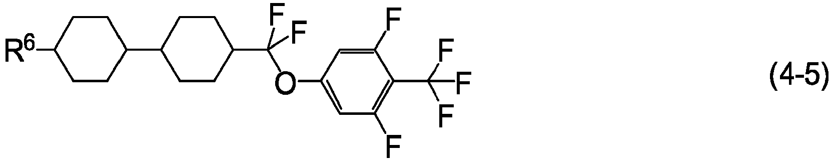 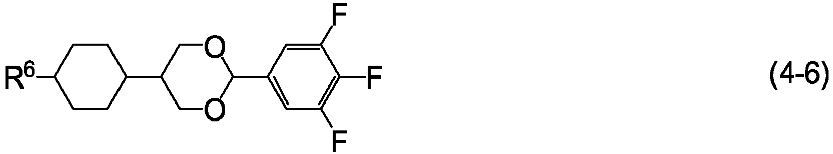 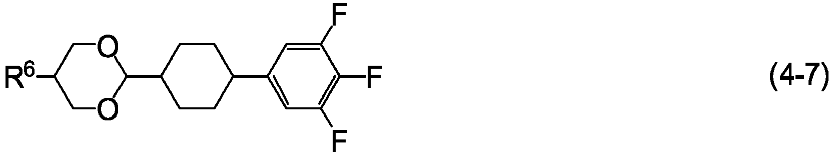 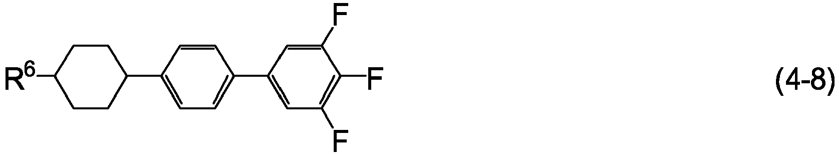 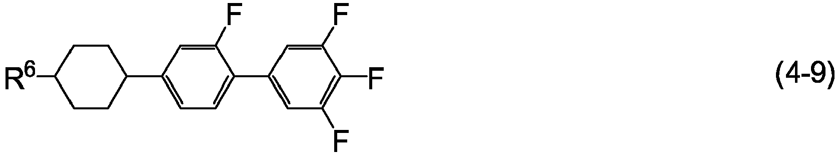 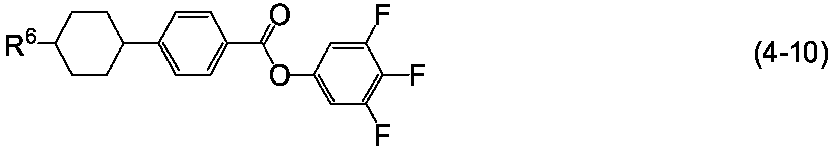 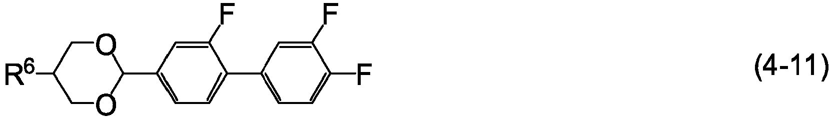 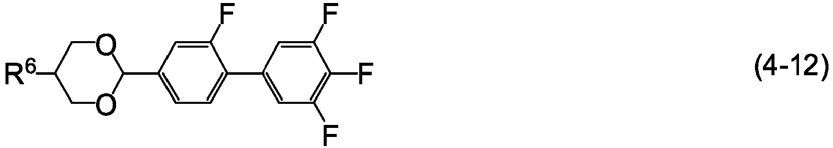 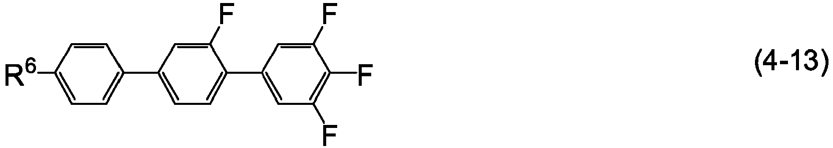 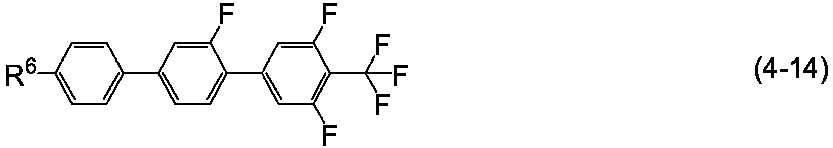 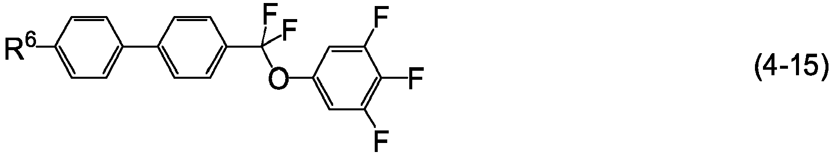 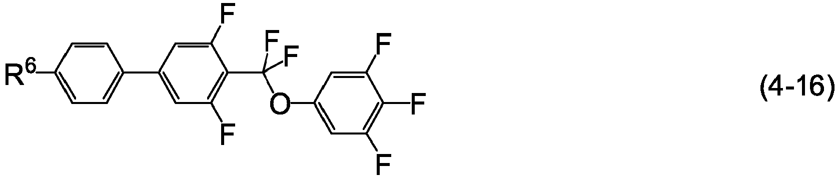 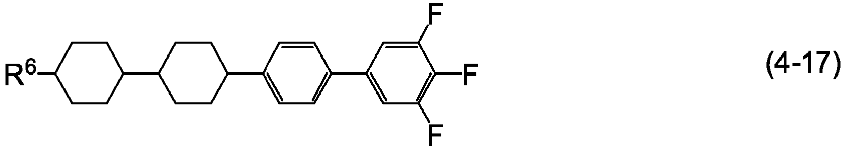 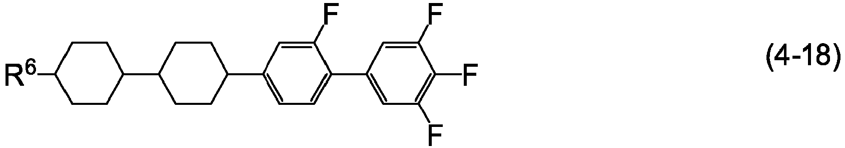 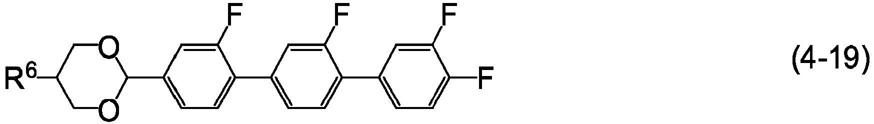 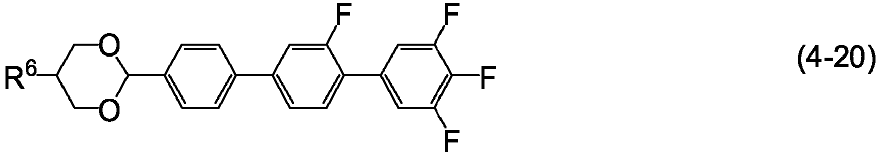 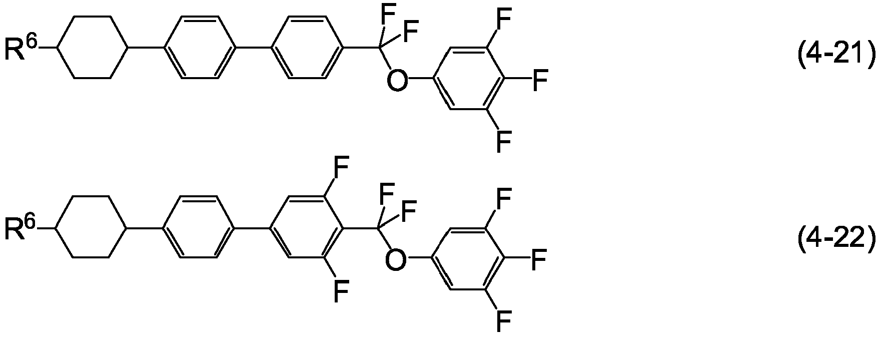 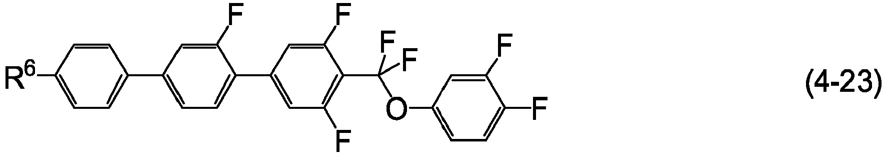 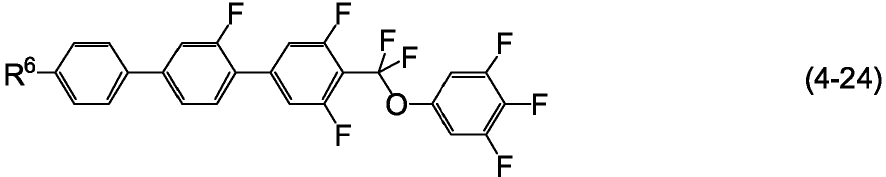 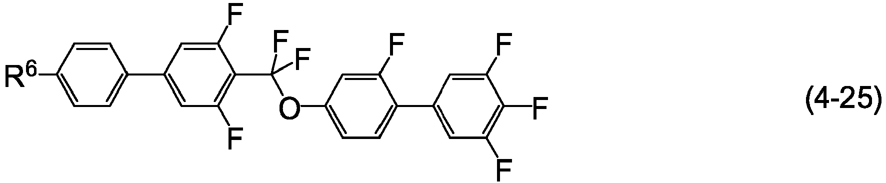 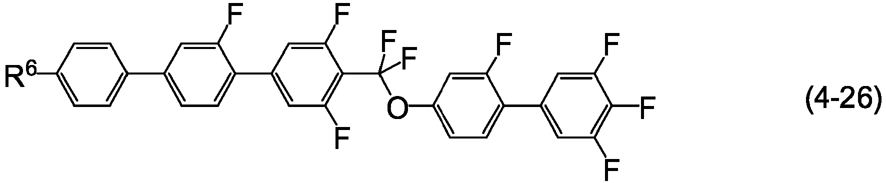 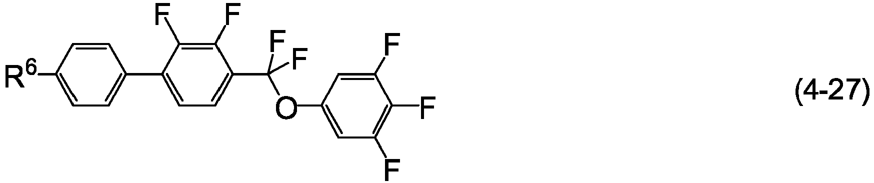 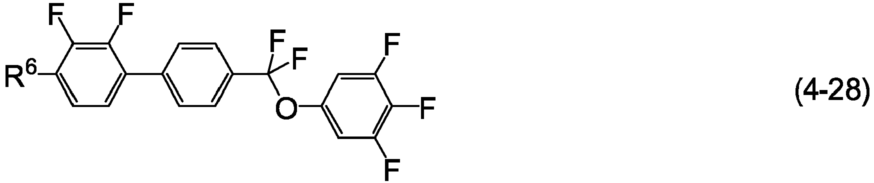 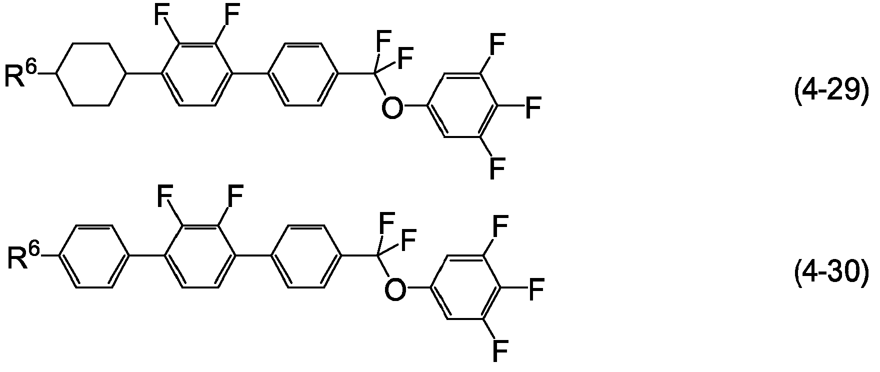 wherein, in formula (4-1) to formula (4-30), R⁶ is alkyl having 1 to 12 carbons, alkoxy having 1 to 12 carbons or alkenyl having 2 to 12 carbons.

9. The liquid crystal composition according to claim 7 or 8, wherein a proportion of the fourth component is in the range of 2% by weight to 45% by weight based on the weight of the liquid crystal composition.

10. The liquid crystal composition according to any one of claims 1 to 9, containing at least one compound selected from compounds represented by formula (5) as a fifth component: 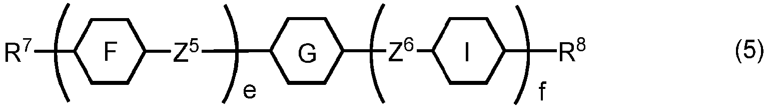 wherein, in formula (5), R⁷ and R⁸ are independently alkyl having 1 to 12 carbons, alkoxy having 1 to 12 carbons, alkenyl having 2 to 12 carbons, or alkenyloxy having 2 to 12 carbons; ring F and ring I are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl, or 7,8-difluorochroman-2,6-diyl; Z⁵ and Z⁶ are independently a single bond, ethylene, carbonyloxy or methyleneoxy; e is 1, 2 or 3, f is 0 or 1; and a sum of e and f is 3 or less.

11. The liquid crystal composition according to any one of claims 1 to 10, containing at least one compound selected from the group of compounds represented by formula (5-1) to formula (5-22) as the fifth component: 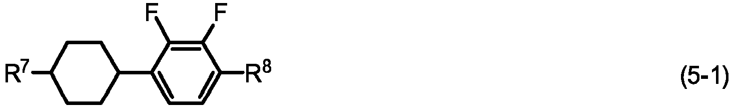 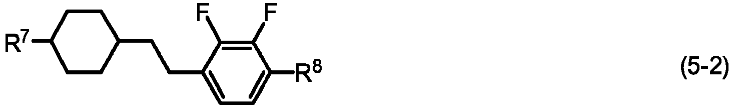 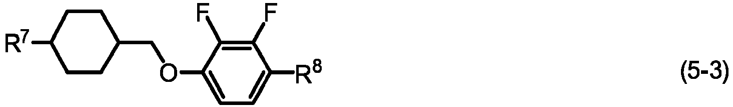 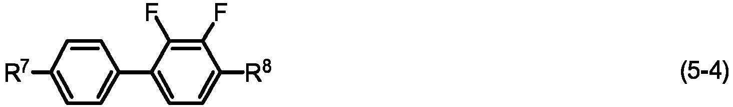 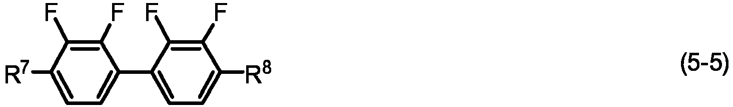 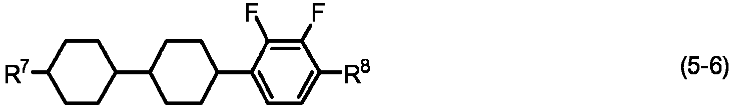 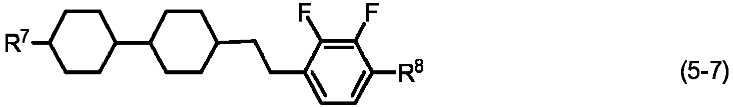 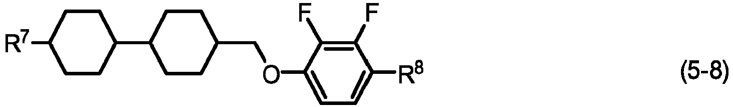 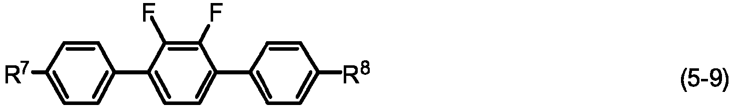 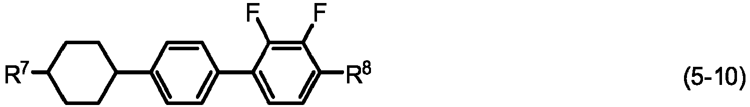 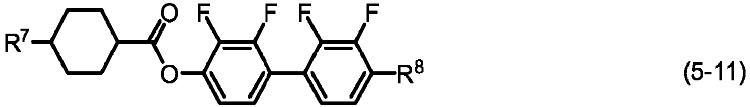 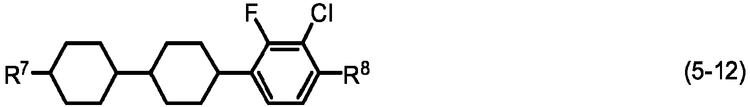 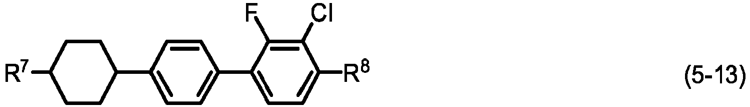 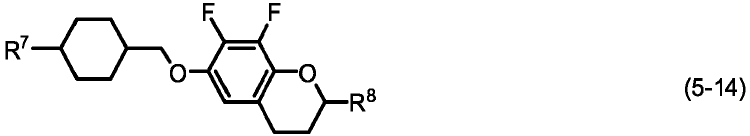 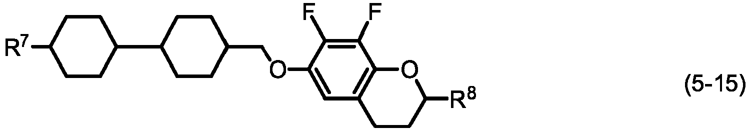 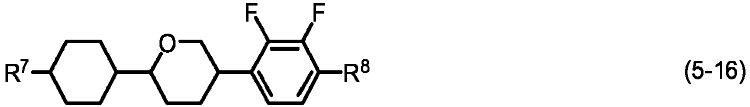 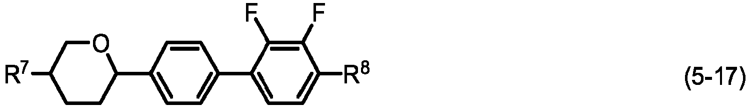 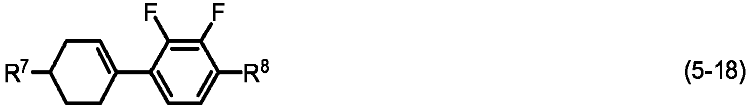 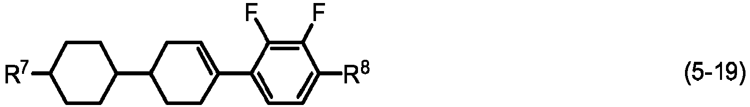 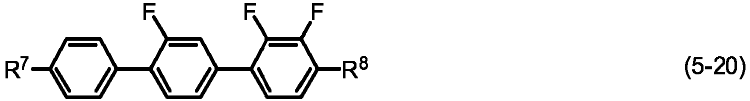 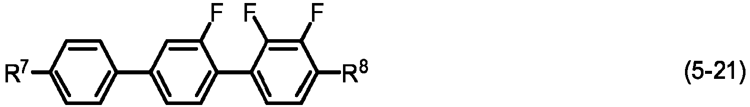 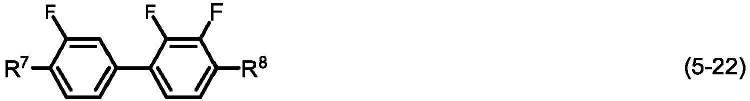 wherein, in formula (5-1) to formula (5-22), R⁷ and R⁸ are independently alkyl having 1 to 12 carbons, alkoxy having 1 to 12 carbons, alkenyl having 2 to 12 carbons or alkenyloxy having 2 to 12 carbons.

12. The liquid crystal composition according to claim 10 or 11, wherein a proportion of the fifth component is in the range of 3% by weight to 30% by weight based on the weight of the liquid crystal composition.

13. A liquid crystal display device, including the liquid crystal composition according to any one of claims 1 to 13.

14. The liquid crystal display device according to claim 14, wherein an operating mode in the liquid crystal display device is a TN mode, an ECB mode, an OCB mode, an IPS mode, an FFS mode or an FPA mode, and a driving mode in the liquid crystal display device is an active matrix mode.

15. Use of the liquid crystal composition according to any one of claims 1 to 13 in a liquid crystal display device.

## Patentansprüche

1. Flüssigkristallzusammensetzung, die eine positive dielektrische Anisotropie aufweist und zumindest eine Verbindung, ausgewählt aus Verbindungen, die durch die Formel (1) dargestellt sind, als eine erste Komponente und zumindest eine Verbindung, ausgewählt aus Verbindungen, die durch die Formel (2) dargestellt sind, als eine zweite Komponente enthält, wobei ein Anteil der zweiten Komponente 15 Gew.-% bis 50 Gew.-% beträgt: 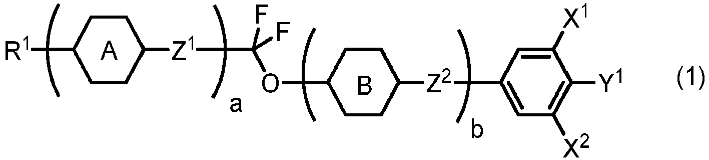 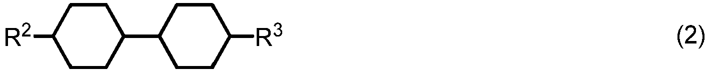 wobei in Formel (1) und Formel (2) R¹ Alkyl mit 1 bis 12 Kohlenstoffen, Alkoxy mit 1 bis 12 Kohlenstoffen oder Alkenyl mit 2 bis 12 Kohlenstoffen ist; R² und R³ unabhängig voneinander Alkenyl mit 2 bis 12 Kohlenstoffen sind; Ring A und Ring B unabhängig voneinander 1,4-Cyclohexylen, 1,4-Cyclohexenylen, 1,4-Phenylen, 1,4-Phenylen, in dem mindestens ein Wasserstoff durch Fluor oder Chlor ersetzt ist, Tetrahydropyran-2,5-diyl, 1,3-Dioxan-2,5-diyl, Pyrimidin-2,5-diyl oder Pyridin-2,5-diyl sind, und mindestens ein Ring A Tetrahydropyran-2,5-diyl oder 1,3-Dioxan-2,5-diyl ist; Z¹ und Z² unabhängig voneinander eine Einfachbindung, Ethylen, Vinylen, Methylenoxy, Carbonyloxy oder Difluormethylenoxy sind; X¹ und X² unabhängig voneinander Wasserstoff oder Fluor sind; Y¹ Fluor, Chlor, Alkyl mit 1 bis 12 Kohlenstoffen, in dem mindestens ein Wasserstoff durch Fluor oder Chlor ersetzt ist, Alkoxy mit 1 bis 12 Kohlenstoffen, in dem mindestens ein Wasserstoff durch Fluor oder Chlor ersetzt ist, oder Alkenyloxy mit 2 bis 12 Kohlenstoffen, in dem mindestens ein Wasserstoff durch Fluor oder Chlor ersetzt ist, ist; a 1, 2, 3 oder 4 ist; b 0, 1, 2 oder 3 ist; und eine Summe aus a und b 4 oder weniger ist.

2. Flüssigkristallzusammensetzung nach Anspruch 1, die zumindest eine Verbindung, ausgewählt aus der Gruppe von durch Formel (1-1) bis (1-12) dargestellten Verbindungen als die erste Komponente enthält: 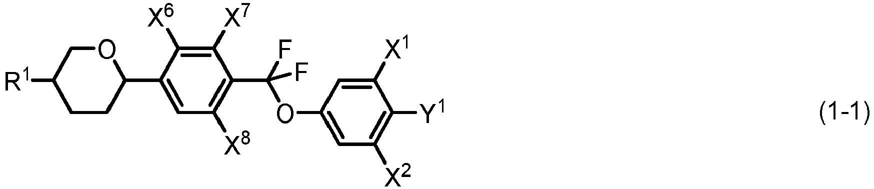 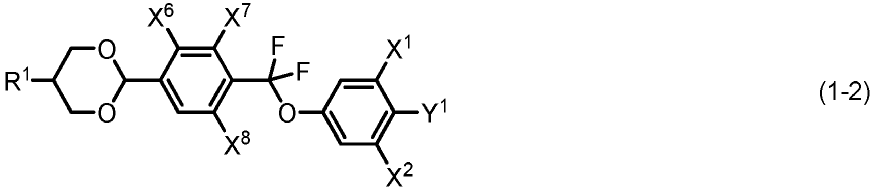 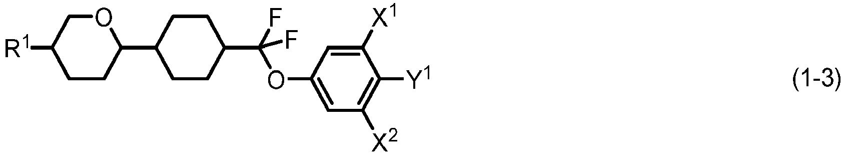 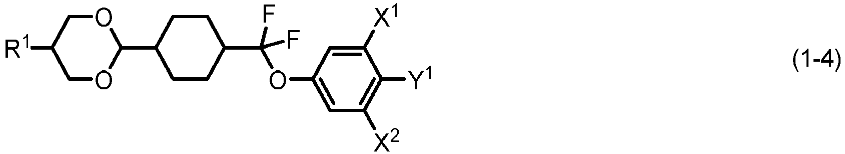 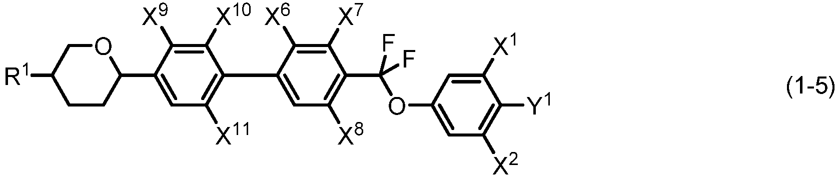 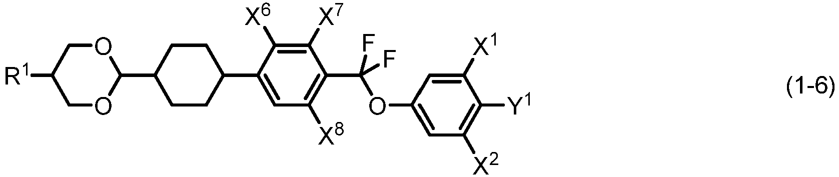 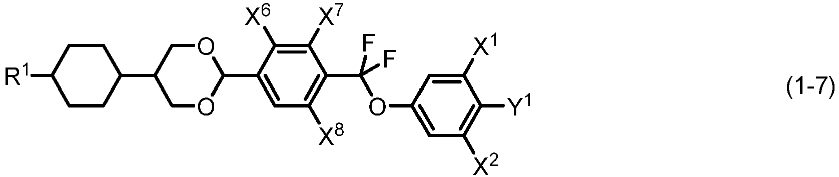 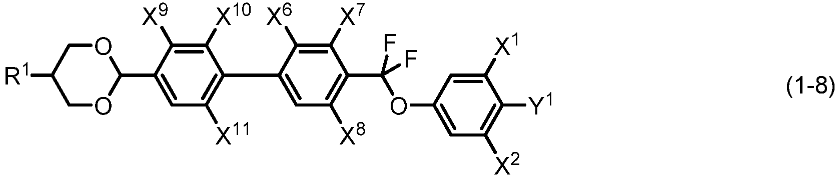 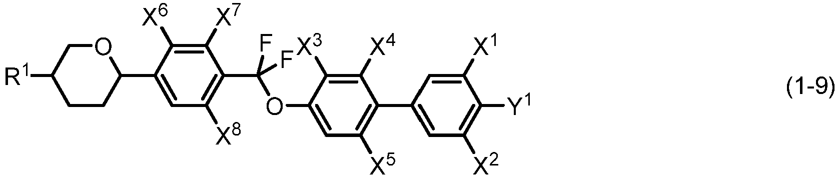 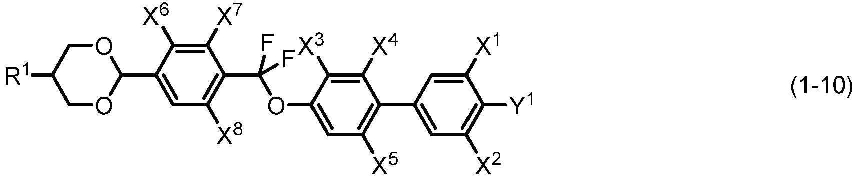 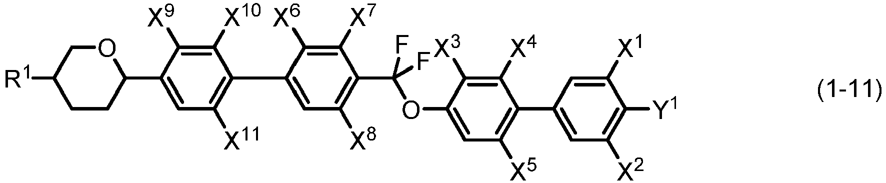 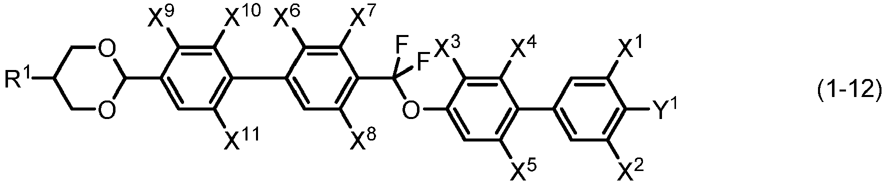 wobei in Formel (1-1) bis Formel (1-12) R¹ Alkyl mit 1 bis 12 Kohlenstoffen, Alkoxy mit 1 bis 12 Kohlenstoffen oder Alkenyl mit 2 bis 12 Kohlenstoffen ist; X¹, X², X³, X⁴, X⁵, X⁶, X⁷, X⁸, X⁹, X¹⁰ und X¹¹ unabhängig voneinander Wasserstoff oder Fluor sind; und Y¹ Fluor, Chlor, Alkyl mit 1 bis 12 Kohlenstoffen, in dem mindestens ein Wasserstoff durch Fluor oder Chlor ersetzt ist, Alkoxy mit 1 bis 12 Kohlenstoffen, in dem mindestens ein Wasserstoff durch Fluor oder Chlor ersetzt ist, oder Alkenyloxy mit 2 bis 12 Kohlenstoffen, in dem mindestens ein Wasserstoff durch Fluor oder Chlor ersetzt ist, ist.

3. Flüssigkristallzusammensetzung nach Anspruch 1 oder 2, wobei ein Anteil der ersten Komponente im Bereich von 5 Gew.-% bis 40 Gew.-% bezogen auf das Gewicht der Flüssigkristallzusammensetzung liegt.

4. Flüssigkristallzusammensetzung nach einem der Ansprüche 1 bis 3, die zumindest eine Verbindung, ausgewählt aus durch die Formel (3) dargestellten Verbindungen als eine dritte Komponente enthält: 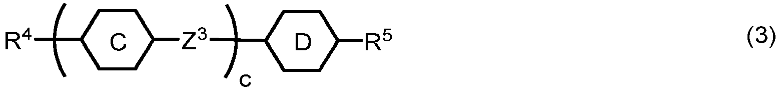 wobei in Formel (3) R⁴ Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in dem zumindest ein Wasserstoff durch Fluor oder Chlor ersetzt ist, ist; R⁵ Alkyl mit 1 bis 12 Kohlenstoffen oder Alkoxy mit 1 bis 12 Kohlenstoffen ist; Ring C und Ring D unabhängig voneinander 1,4-Cyclohexylen, 1,4-Phenylen, 2-Fluor-1,4-phenylen oder 2,5-Difluor-1,4-phenylen sind; Z³ eine Einfachbindung, Ethylencarbonyloxy oder Methylenoxy ist; und c 1, 2 oder 3 ist.

5. Flüssigkristallzusammensetzung nach einem der Ansprüche 1 bis 4, die zumindest eine Verbindung, ausgewählt aus der Gruppe von durch Formel (3-1) bis Formel (3-13) gargestellten Verbindungen als dritte Komponente enthält: 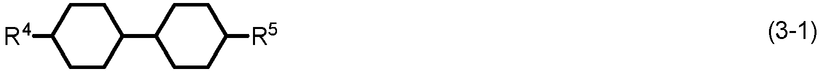 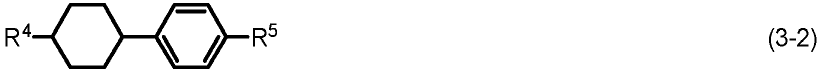 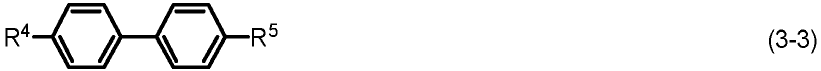 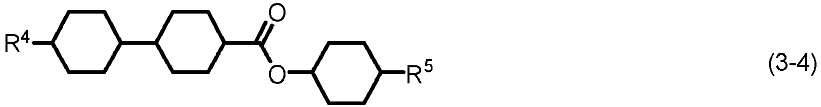 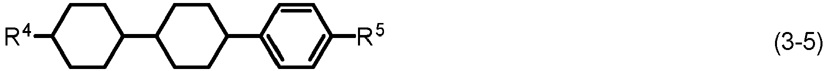 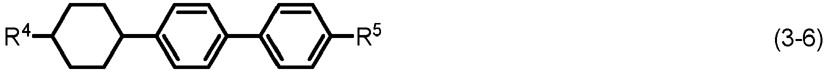 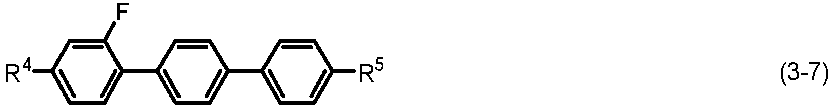 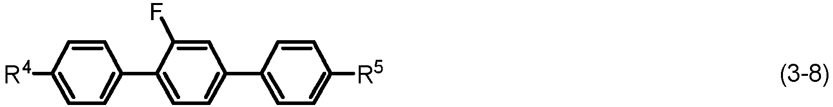 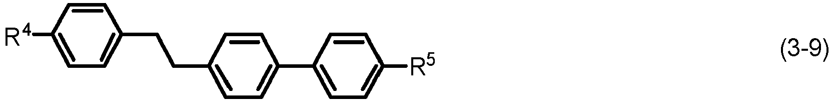 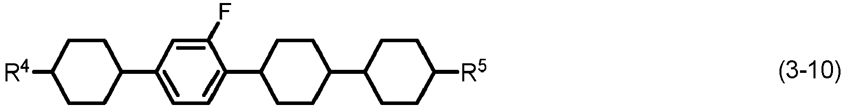 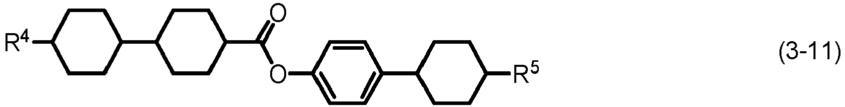 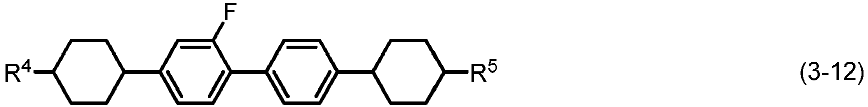 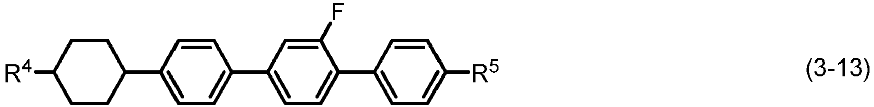 wobei in Formel (3-1) bis Formel (3-13) R⁴ Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in dem zumindest ein Wasserstoff durch Fluor oder Chlor ersetzt ist, ist; und R⁵ Alkyl mit 1 bis 12 Kohlenstoffen oder Alkoxy mit 1 bis 12 Kohlenstoffen ist.

6. Flüssigkristallzusammensetzung nach Anspruch 4 oder 5, wobei ein Anteil der dritten Komponente im Bereich von 10 Gew.-% bis 80 Gew.-%, bezogen auf das Gewicht der Flüssigkristallzusammensetzung, liegt.

7. Flüssigkristallzusammensetzung nach einem der Ansprüche 1 bis 6, die ferner zumindest eine Verbindung ausgewählt aus durch die Formel (4) dargestellten Verbindungen als eine vierte Komponente enthält: 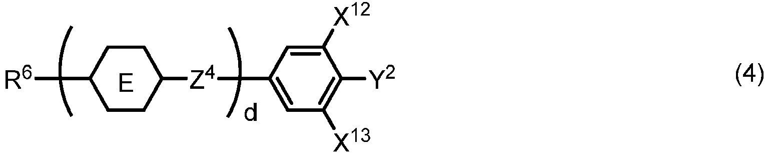 wobei in Formel (4) R⁶ Alkyl mit 1 bis 12 Kohlenstoffen, Alkoxy mit 1 bis 12 Kohlenstoffen oder Alkenyl mit 2 bis 12 Kohlenstoffen ist; der Ring E 1,4-Cyclohexylen, 1,4-Phenylen, 2-Fluor-1,4-phenylen, 2,3-Difluor-1,4-phenylen, 2,6-Difluor-1,4-phenylen, Tetrahydropyran-2,5-diyl, 1,3-Dioxan-2,5-diyl oder Pyrimidin-2,5-diyl ist; Z⁴ eine Einfachbindung, Ethylen, Carbonyloxy oder Difluormethylenoxy ist; X¹² und X¹³ unabhängig voneinander Wasserstoff oder Fluor sind; Y² Fluor, Chlor, Alkyl mit 1 bis 12 Kohlenstoffen, in dem mindestens ein Wasserstoff durch Fluor oder Chlor ersetzt ist, Alkoxy mit 1 bis 12 Kohlenstoffen, in dem mindestens ein Wasserstoff durch Fluor oder Chlor ersetzt ist, oder Alkenyloxy mit 2 bis 12 Kohlenstoffen, in dem mindestens ein Wasserstoff durch Fluor oder Chlor ersetzt ist, ist; d 1, 2, 3 oder 4 ist; und wobei, wenn Z⁴ Difluormethylenoxy ist, der Ring E 1,4-Cyclohexylen, 1,4-Phenylen, 2-Fluor-1,4-phenylen, 2,3-Difluor-1,4-phenylen, 2,6-Difluor-1,4-phenylen oder Pyrimidin-2,5-diyl ist.

8. Flüssigkristallzusammensetzung nach einem der Ansprüche 1 bis 7, die zumindest eine Verbindung, ausgewählt aus der Gruppe von durch die Formel (4-1) bis Formel (4-30) dargestellten Verbindungen als vierte Komponente enthält: 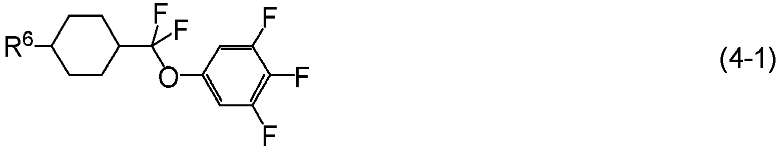 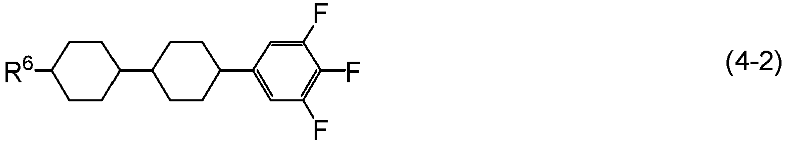 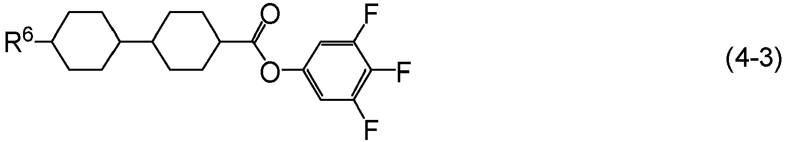 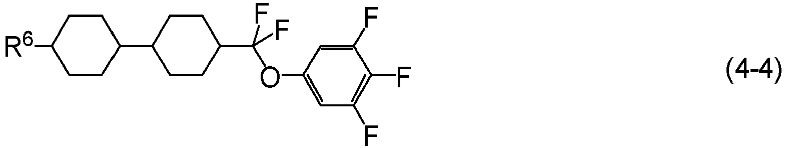 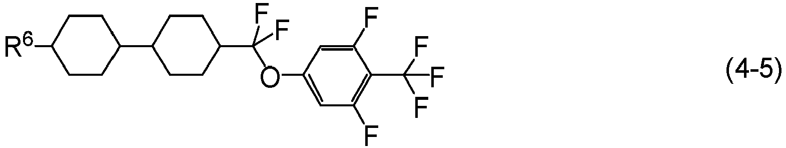 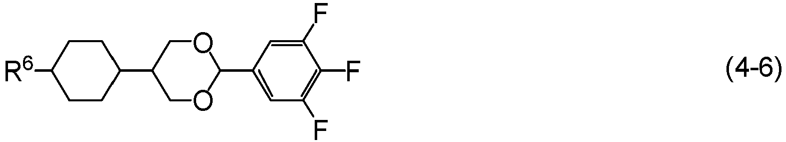 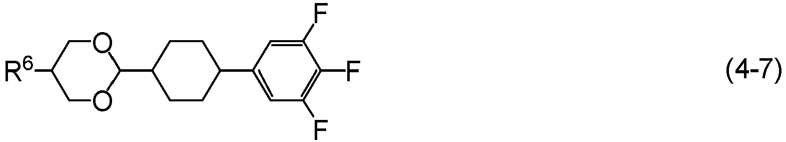 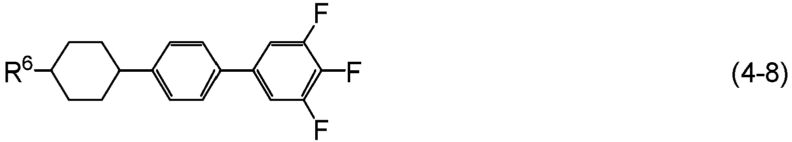 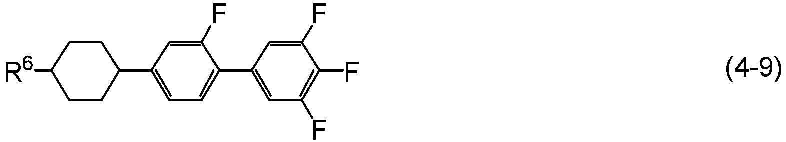 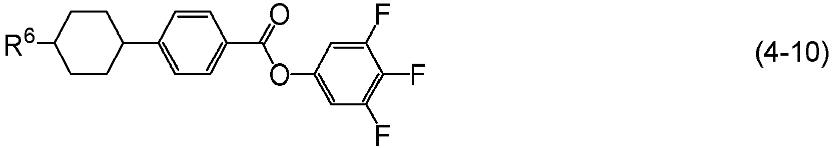 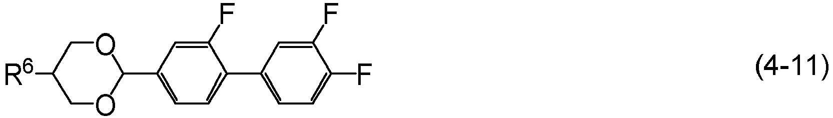 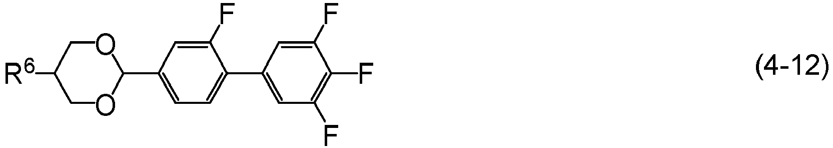 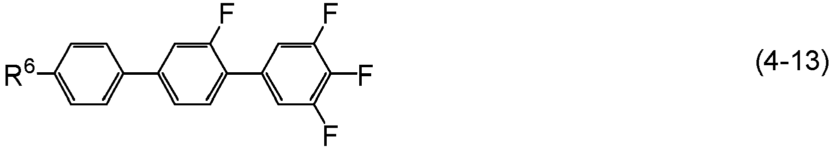 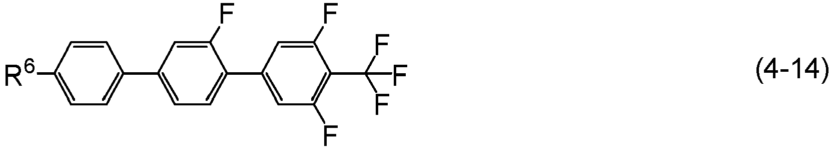 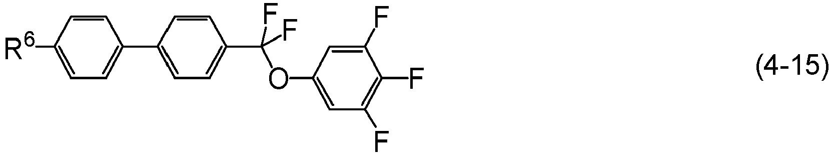 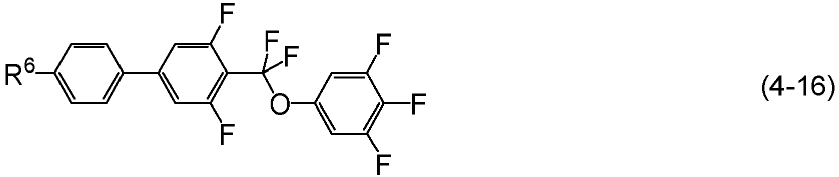 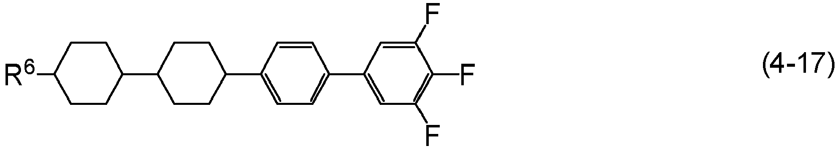 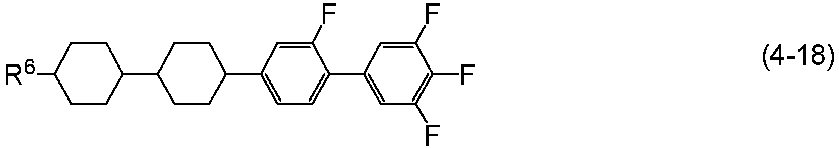 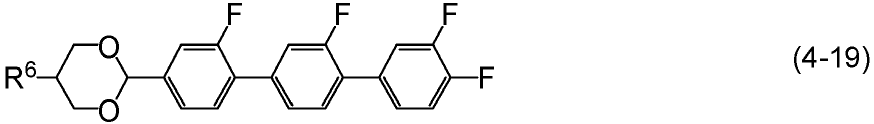 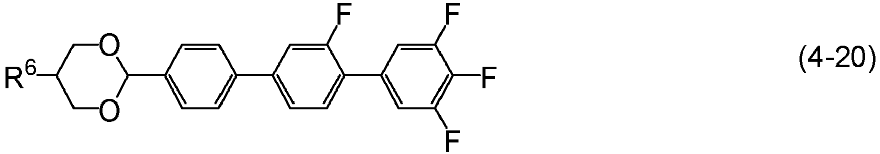 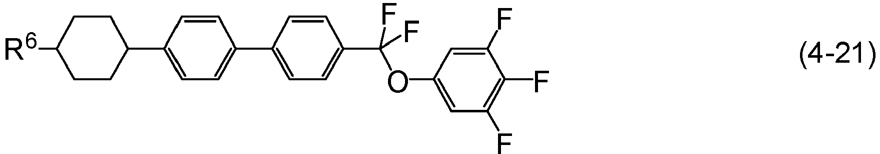 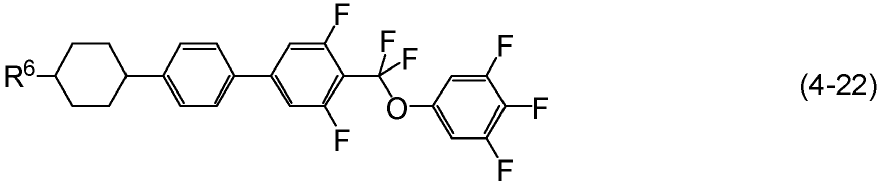 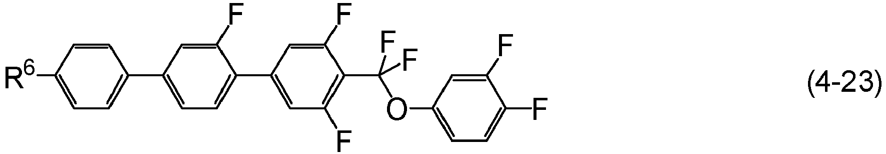 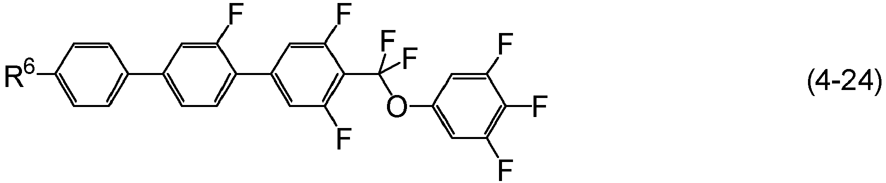 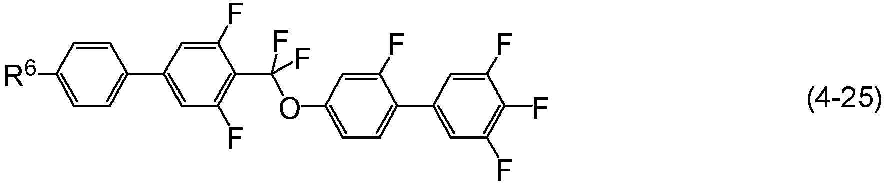 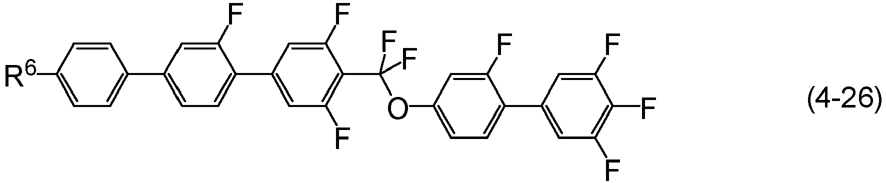 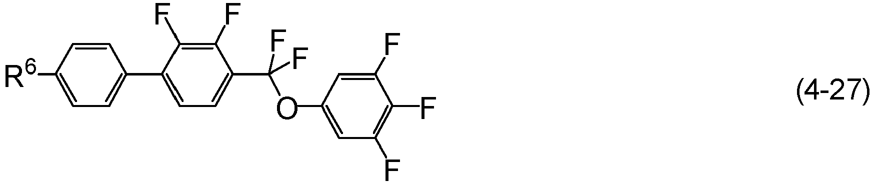 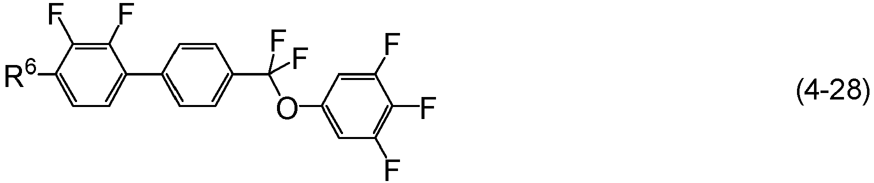 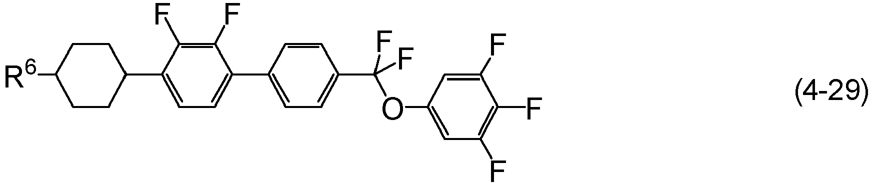 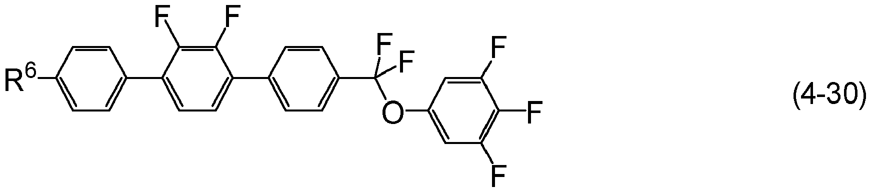 wobei in Formel (4-1) bis Formel (4-30) R⁶ Alkyl mit 1 bis 12 Kohlenstoffen, Alkoxy mit 1 bis 12 Kohlenstoffen oder Alkenyl mit 2 bis 12 Kohlenstoffen ist.

9. Flüssigkristallzusammensetzung nach Anspruch 7 oder 8, wobei ein Anteil der vierten Komponente im Bereich von 2 Gew.-% bis 45 Gew.-%, bezogen auf das Gewicht der Flüssigkristallzusammensetzung, liegt.

10. Flüssigkristallzusammensetzung nach einem der Ansprüche 1 bis 9, die zumindest eine Verbindung ausgewählt aus durch die Formel (5) dargestellten Verbindungen als eine fünfte Komponente enthält: 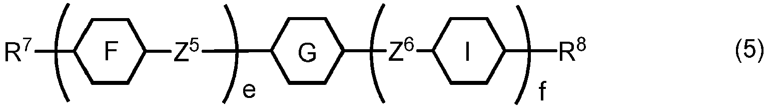 wobei in Formel (5) R⁷ und R⁸ unabhängig voneinander Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen sind; Ring F und Ring I unabhängig voneinander 1,4-Cyclohexylen, 1,4-Cyclohexenylen, 1,4-Phenylen, 1,4-Phenylen, in dem zumindest ein Wasserstoff durch Fluor oder Chlor ersetzt ist, oder Tetrahydropyran-2,5-diyl sind; Ring G ist 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorchroman-2,6-diyl; Z⁵ und Z⁶ sind unabhängig voneinander eine Einfachbindung, Ethylen, Carbonyloxy oder Methylenoxy; e ist 1, 2 oder 3, f ist 0 oder 1; und die Summe aus e und f ist 3 oder weniger.

11. Flüssigkristallzusammensetzung nach einem der Ansprüche 1 bis 10, die zumindest eine Verbindung ausgewählt aus der Gruppe von durch Formel (5-1) bis Formel (5-22) dargestellten Verbindungen als fünfte Komponente enthält: 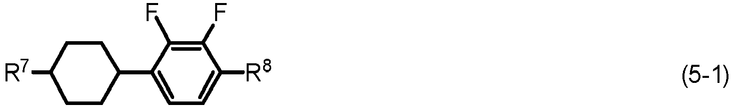 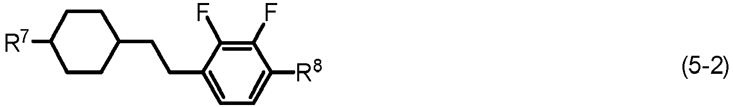 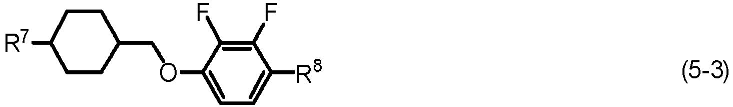 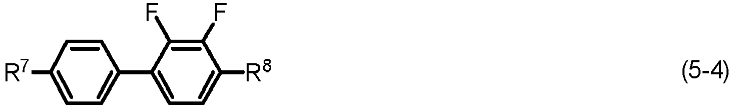 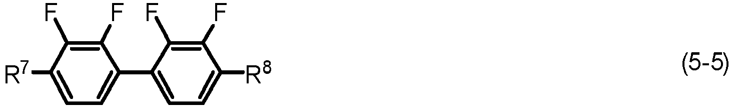 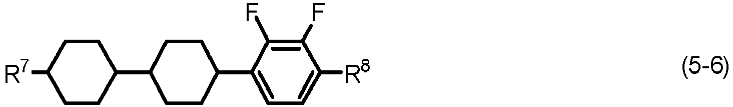 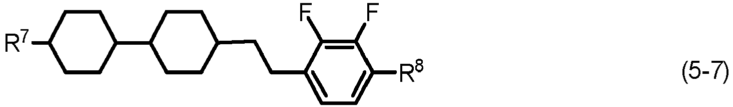 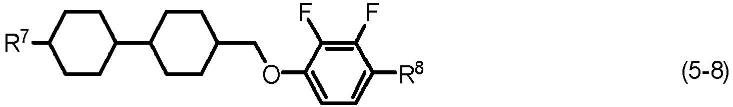 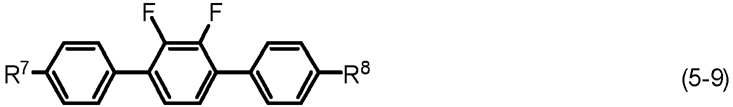 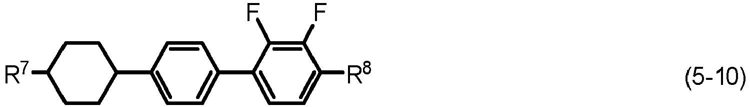 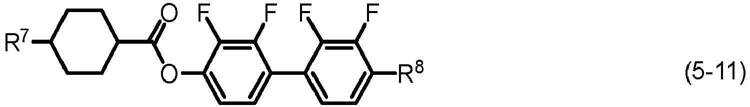 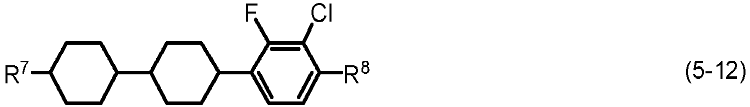 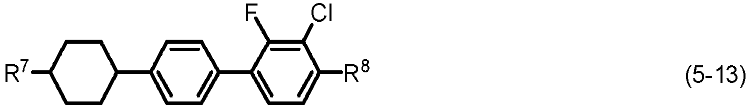 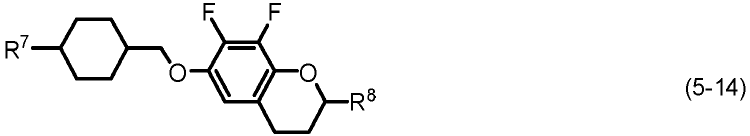 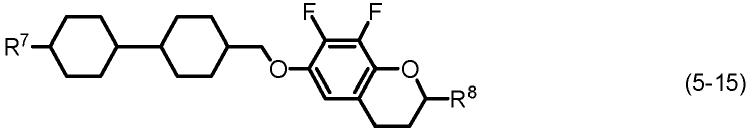 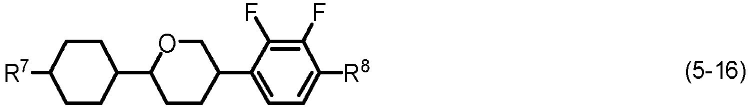 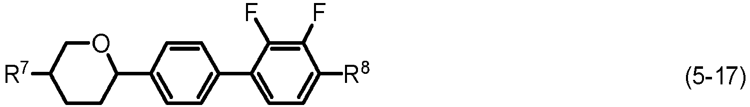 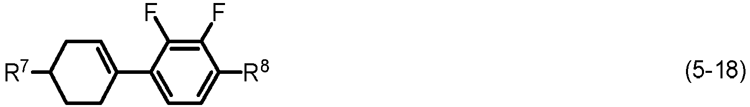 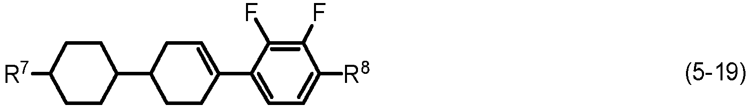 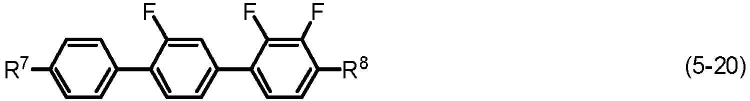 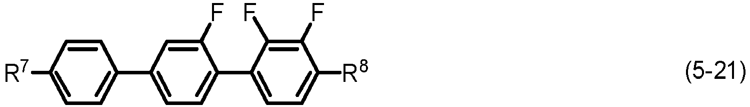 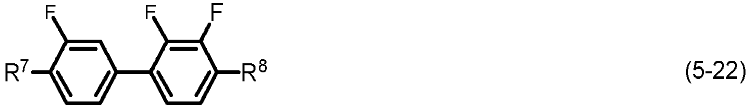 wobei in Formel (5-1) bis Formel (5-22) R⁷ und R⁸ unabhängig voneinander Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen sind.

12. Flüssigkristallzusammensetzung nach Anspruch 10 oder 11, wobei ein Anteil der fünften Komponente im Bereich von 3 Gew.-% bis 30 Gew.-%, bezogen auf das Gewicht der Flüssigkristallzusammensetzung, liegt.

13. Flüssigkristallanzeigevorrichtung, die die Flüssigkristallzusammensetzung nach einem der Ansprüche 1 bis 13 beinhaltet.

14. Flüssigkristallanzeigevorrichtung nach Anspruch 14, wobei eine Betriebsart in der Flüssigkristallanzeigevorrichtung eine TN-Betriebsart, eine ECB-Betriebsart, eine OCB-Betriebsart, eine IPS-Betriebsart, eine FFS-Betriebsart oder eine FPA-Betriebsart ist, und eine Ansteuerungsbetriebsart in der Flüssigkristallanzeigevorrichtung eine Aktivmatrix-Betriebsart ist.

15. Verwendung der Flüssigkristallzusammensetzung nach einem der Ansprüche 1 bis 13 in einer Flüssigkristallanzeigevorrichtung.

## Revendications

1. Composition de cristaux liquides qui a une anisotropie diélectrique positive et qui contient au moins un composé choisi parmi les composés représentés par la formule (1) en tant que premier composant et au moins un composé choisi parmi les composés représentés par la formule (2) en tant que deuxième composant, dans laquelle la proportion du deuxième composant est de 15 % en poids à 50 % en poids : 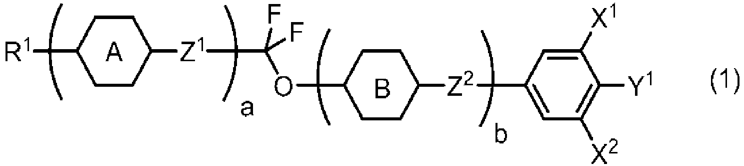 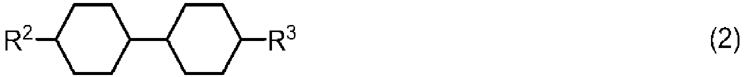 dans laquelle, dans la formule (1) et la formule (2), R¹ est un alkyle ayant 1 à 12 carbones, alcoxy ayant 1 à 12 carbones ou alcényle ayant 2 à 12 carbones ; R² et R³ sont indépendamment un alcényle ayant 2 à 12 carbones ; le cycle A et le cycle B sont indépendamment un 1,4-cyclohexylène, 1,4-cyclohexénylène, 1,4-phénylène, 1,4-phénylène dans lequel au moins un hydrogène est remplacé par un fluor ou chlore, tétrahydropyrane-2,5-diyle, 1,3-dioxane-2,5-diyle, pyrimidine-2,5-diyle, ou pyridine-2,5-diyle, et au moins un cycle A est un tétrahydropyrane-2,5-diyle ou 1,3-dioxane-2,5-diyle ; Z¹ et Z² sont indépendamment une liaison simple ou un éthylène, vinylène, méthylène-oxy, carbonyloxy ou difluorométhylène-oxy ; X¹ et X² sont indépendamment un hydrogène ou un fluor ; Y¹ est un fluor, chlore, alkyle ayant 1 à 12 carbones dans lequel au moins un hydrogène est remplacé par un fluor ou chlore, alcoxy ayant 1 à 12 carbones dans lequel au moins un hydrogène est remplacé par un fluor ou chlore, ou alcényloxy ayant 2 à 12 carbones dans lequel au moins un hydrogène est remplacé par un fluor ou chlore ; a vaut 1, 2, 3 ou 4 ; b vaut 1, 2 ou 3 ; et la somme de a et b vaut 4 ou moins.

2. Composition de cristaux liquides selon la revendication 1, contenant au moins un composé choisi dans le groupe de composés représentés par les formules (1-1) à (1-12) en tant que premier composant : 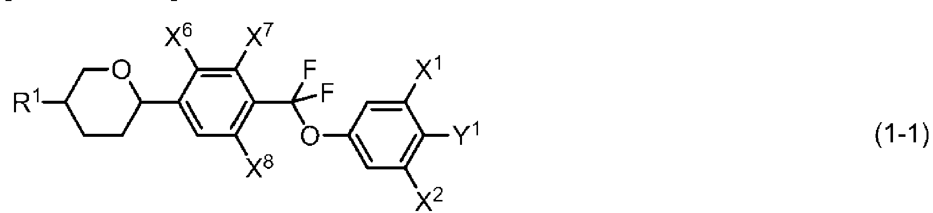 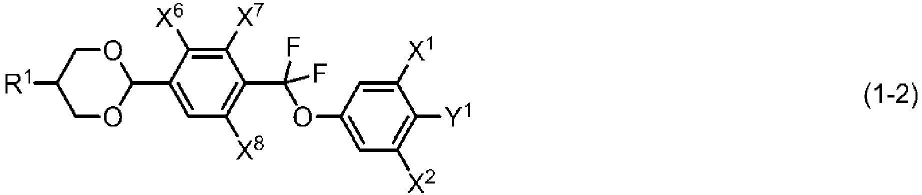 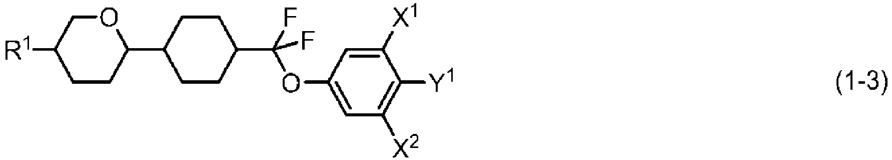 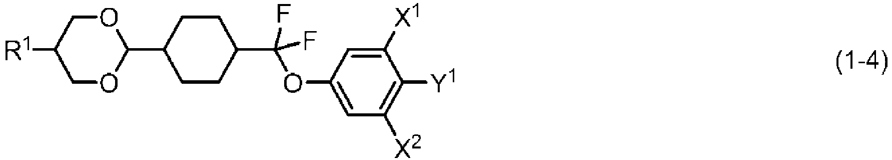 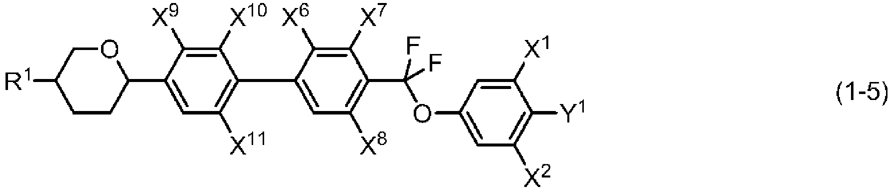 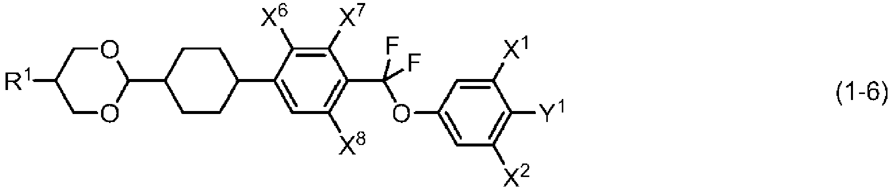 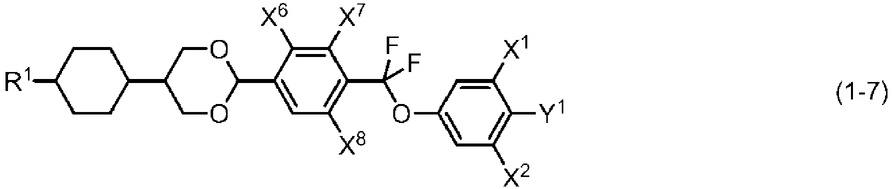 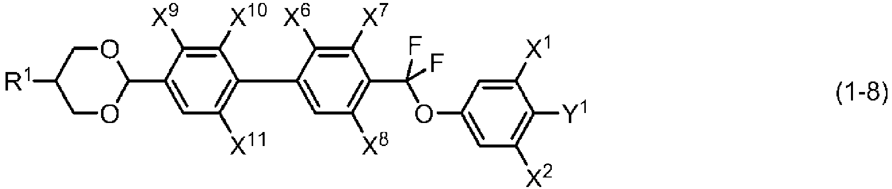 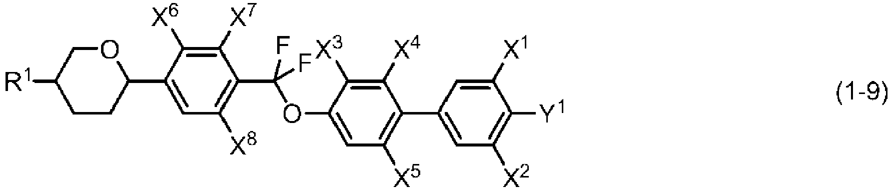 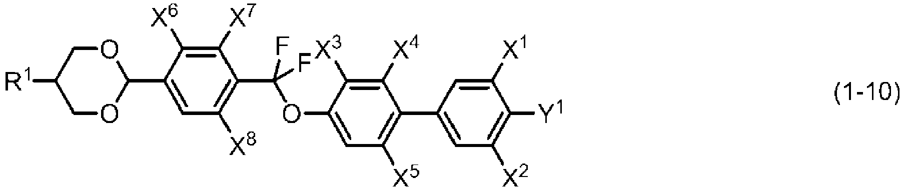 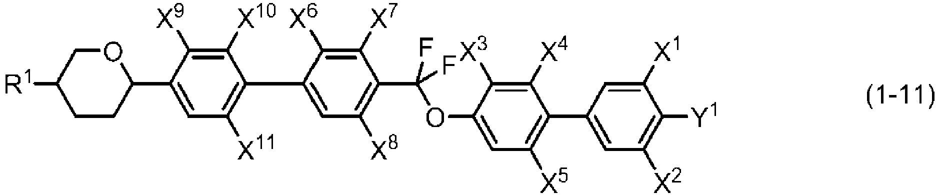 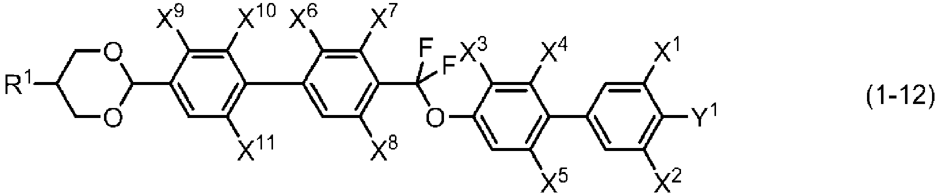 dans laquelle, dans les formules (1-1) à (1-12), R¹ est un alkyle ayant 1 à 12 carbones, alcoxy ayant 1 à 12 carbones ou alcényle ayant 2 à 12 carbones ; X¹, X², X³, X⁴, X⁵, X⁶, X⁷, X⁸, X⁹, X¹⁰ et X¹¹ sont indépendamment un hydrogène ou un fluor ; et Y¹ est un fluor, chlore, alkyle ayant 1 à 12 carbones dans lequel au moins un hydrogène est remplacé par un fluor ou chlore, alcoxy ayant 1 à 12 carbones dans lequel au moins un hydrogène est remplacé par un fluor ou chlore, ou alcényloxy ayant 2 à 12 carbones dans lequel au moins un hydrogène est remplacé par un fluor ou chlore.

3. Composition de cristaux liquides selon la revendication 1 ou 2, dans laquelle la proportion du premier composant est située dans la plage allant de 5 % en poids à 40 % en poids par rapport au poids de la composition de cristaux liquides.

4. Composition de cristaux liquides selon l'une quelconque des revendications 1 à 3, contenant au moins un composé choisi parmi les composés représentés par la formule (3) en tant que troisième composant : 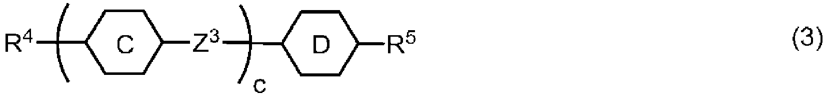 dans laquelle, dans la formule (3), R⁴ est un alkyle ayant 1 à 12 carbones, alcoxy ayant 1 à 12 carbones, alcényle ayant 2 à 12 carbones, ou alcényle ayant 2 à 12 carbones dans lequel au moins un hydrogène est remplacé par un fluor ou chlore ; R⁵ est un alkyle ayant 1 à 12 carbones ou alcoxy ayant 1 à 12 carbones ; le cycle C et le cycle D sont indépendamment un 1,4-cyclohexylène, 1,4-phénylène, 2-fluoro-1,4-phénylène ou 2,5-difluoro-1,4-phénylène ; Z³ est une liaison simple ou un éthylène, carbonyloxy ou méthylène-oxy ; et c vaut 1, 2 ou 3.

5. Composition de cristaux liquides selon l'une quelconque des revendications 1 à 4, contenant au moins un composé choisi dans le groupe de composés représentés par les formules (3-1) à (3-13) en tant que troisième composant : 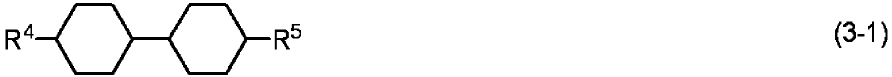 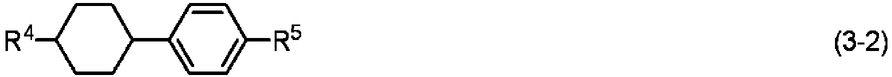 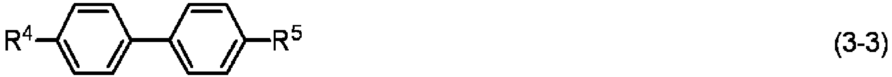 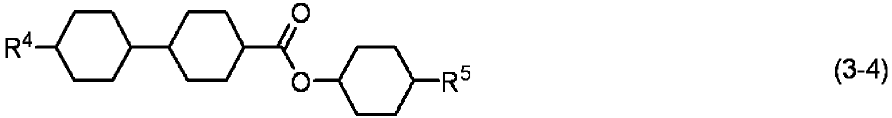 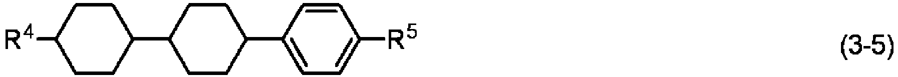 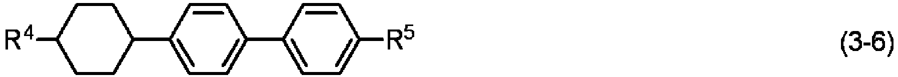 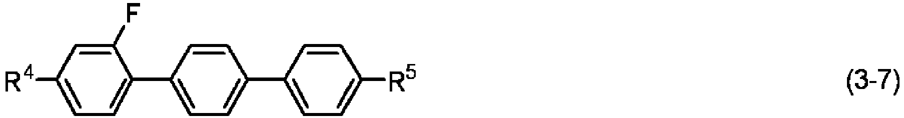 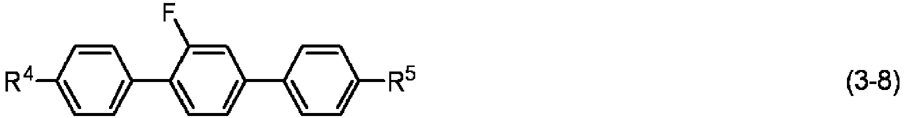 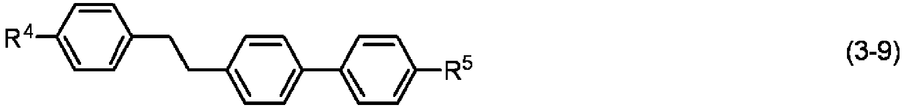 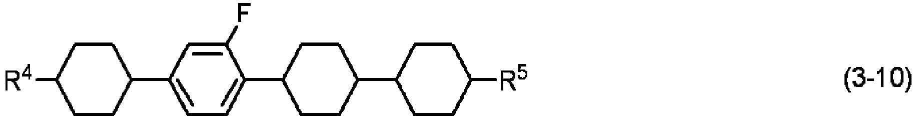 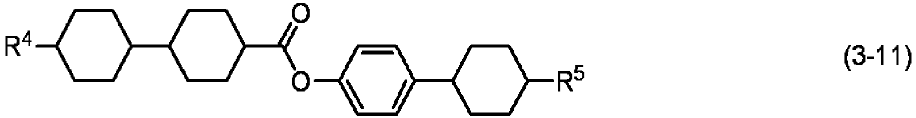 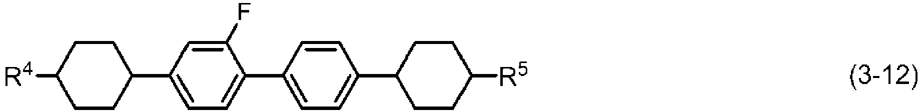 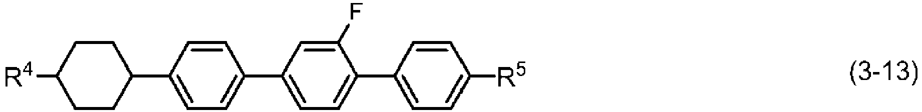 dans laquelle, dans les formules (3-1) à (3-13), R⁴ est un alkyle ayant 1 à 12 carbones, alcoxy ayant 1 à 12 carbones, alcényle ayant 2 à 12 carbones, ou alcényle ayant 2 à 12 carbones dans lequel au moins un hydrogène est remplacé par un fluor ou chlore ; et R⁵ est un alkyle ayant 1 à 12 carbones ou alcoxy ayant 1 à 12 carbones.

6. Composition de cristaux liquides selon la revendication 4 ou 5, dans laquelle la proportion du troisième composant est située dans la plage allant de 10 % en poids à 80 % en poids par rapport au poids de la composition de cristaux liquides.

7. Composition de cristaux liquides selon l'une quelconque des revendications 1 à 6, contenant en outre au moins un composé choisi parmi les composés représentés par la formule (4) en tant que quatrième composant : 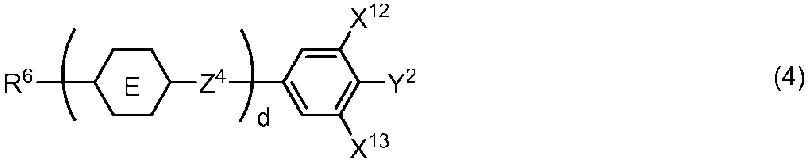 dans laquelle, dans la formule (4), R⁶ est un alkyle ayant 1 à 12 carbones, alcoxy ayant 1 à 12 carbones ou alcényle ayant 2 à 12 carbones ; le cycle E est un 1,4-cyclohexylène, 1,4-phénylène, 2-fluoro-1,4-phénylène, 2,3-difluoro-1,4-phénylène, 2,6-difluoro-1,4-phénylène, tétrahydropyrane-2,5-diyle, 1,3-dioxane-2,5-diyle ou pyrimidine-2,5-diyle ; Z⁴ est une liaison simple, un éthylène, carbonyloxy ou difluorométhylène-oxy ; X¹² et X¹³ sont indépendamment un hydrogène ou un fluor ; Y² est un fluor, chlore, alkyle ayant 1 à 12 carbones dans lequel au moins un hydrogène est remplacé par un fluor ou chlore, alcoxy ayant 1 à 12 carbones dans lequel au moins un hydrogène est remplacé par un fluor ou chlore, ou alcényloxy ayant 2 à 12 carbones dans lequel au moins un hydrogène est remplacé par un fluor ou chlore ; d vaut 1, 2, 3 ou 4 ; et dans laquelle, quand Z⁴ est un difluorométhylène-oxy, le cycle E est un 1,4-cyclohexylène, 1,4-phénylène, 2-fluoro-1,4-phénylène, 2,3-difluoro-1,4-phénylène, 2,6-difluoro-1,4-phénylène ou pyrimidine-2,5-diyle.

8. Composition de cristaux liquides selon l'une quelconque des revendications 1 à 7, contenant au moins un composé choisi dans le groupe de composés représentés par les formules (4-1) à (4-30) en tant que quatrième composant : 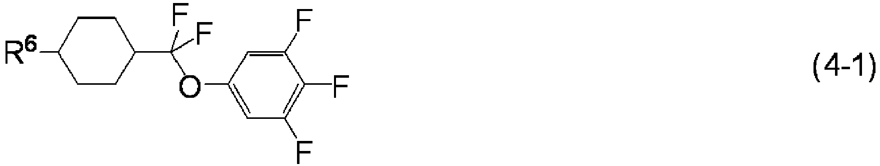 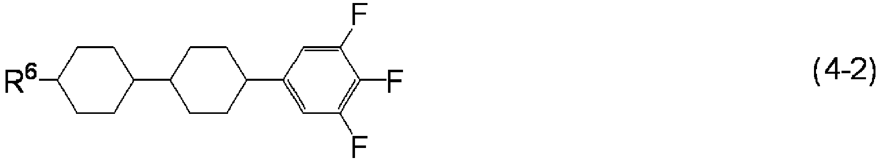 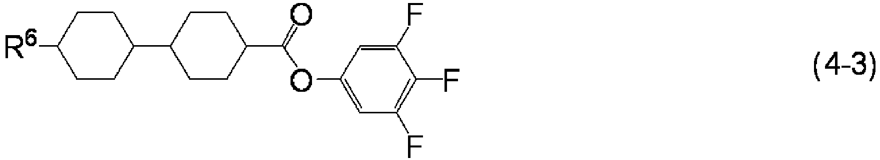 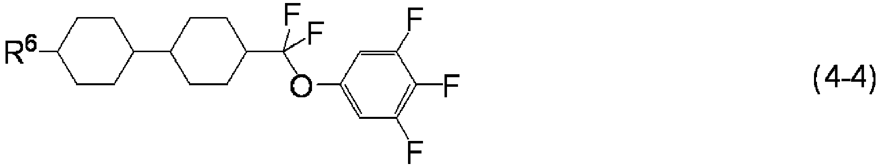 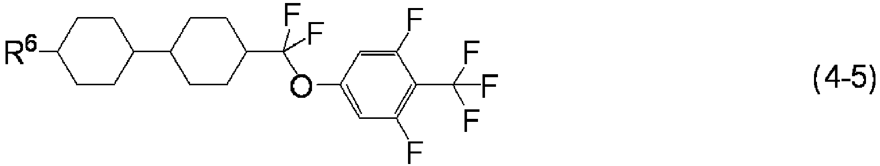 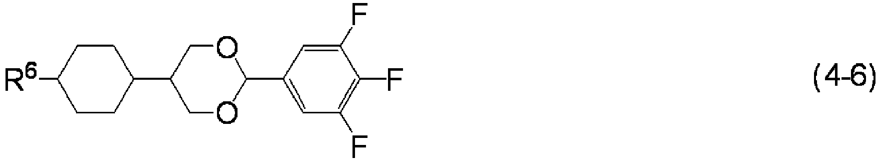 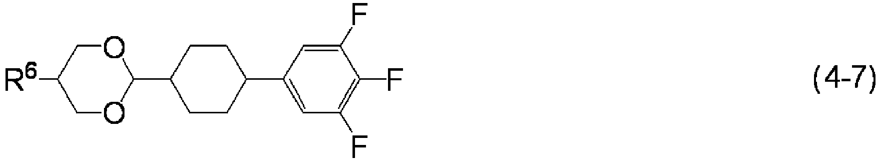 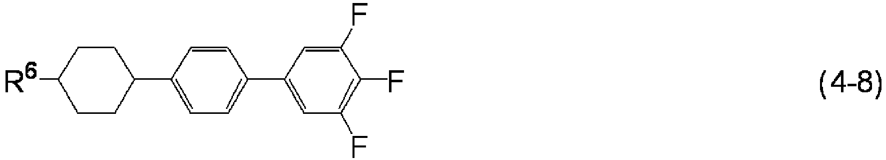 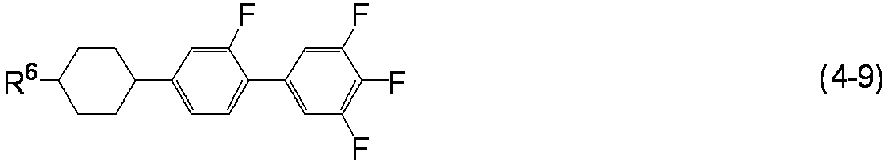 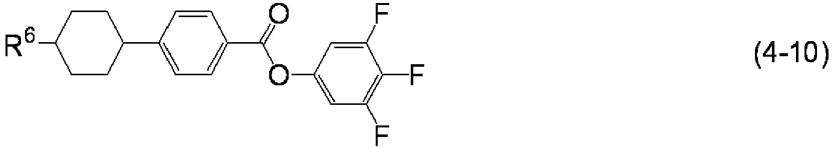 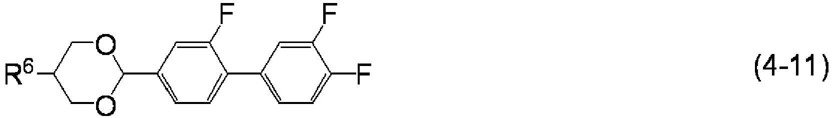 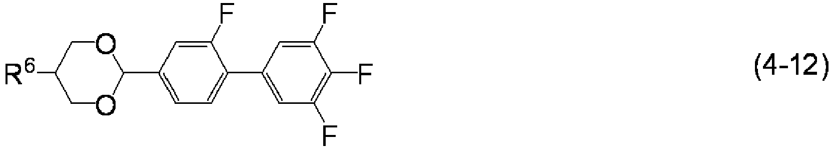 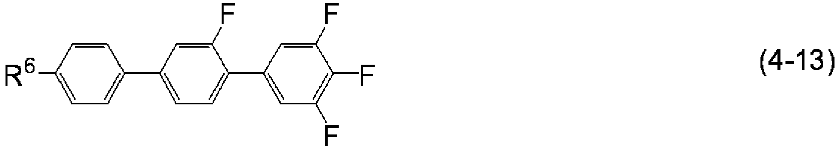 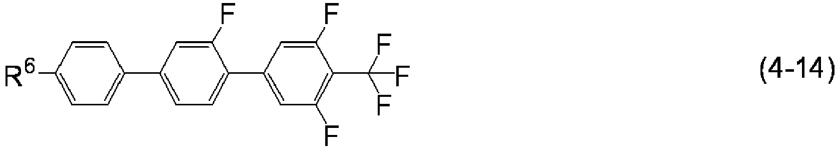 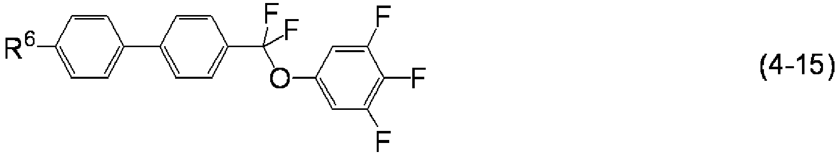 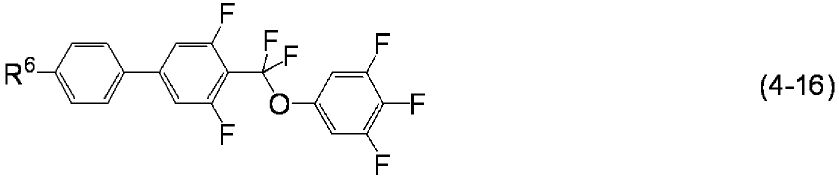 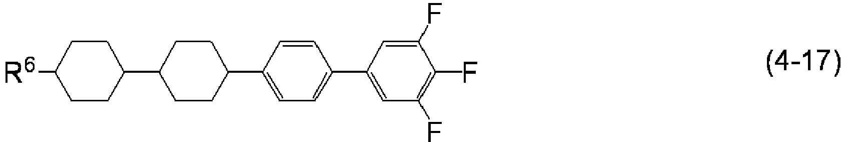 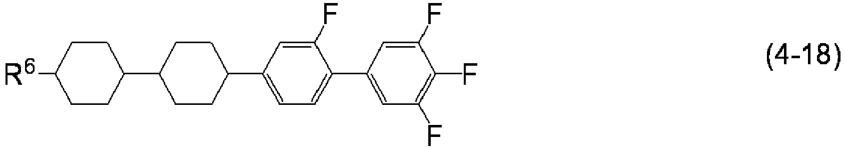 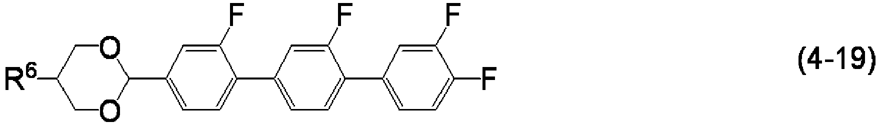 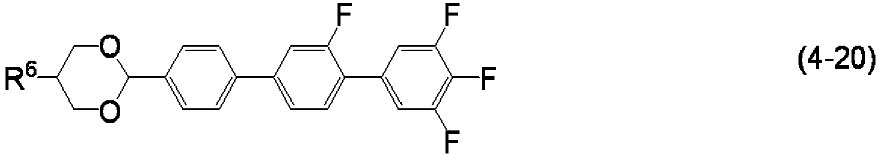 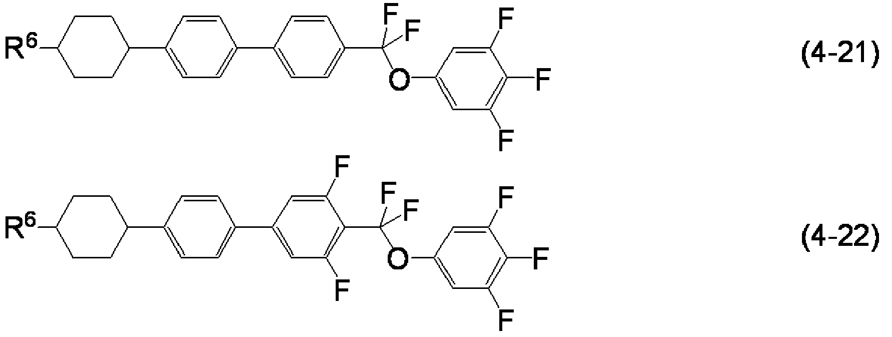 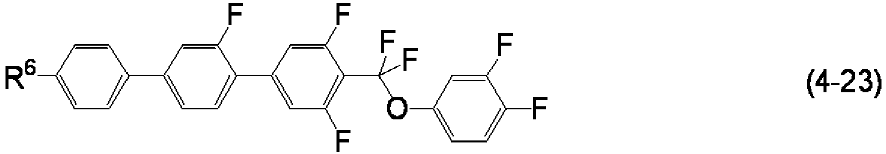 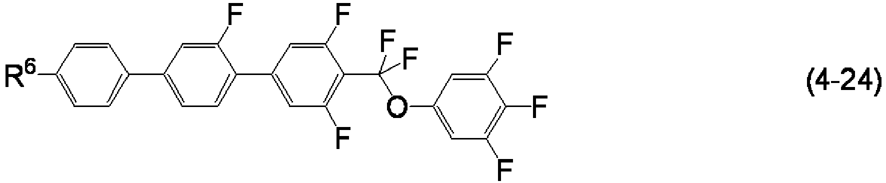 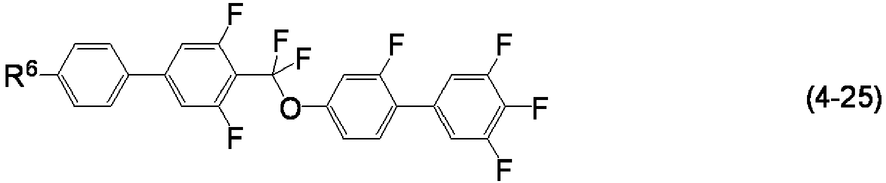 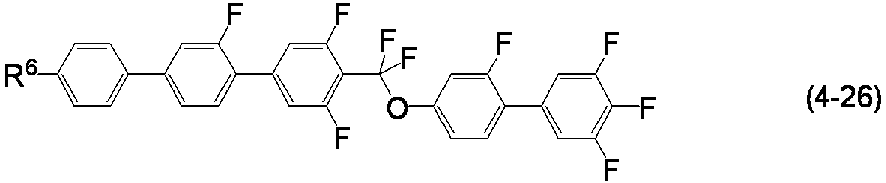 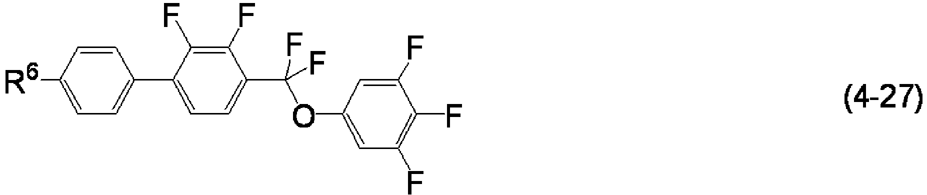 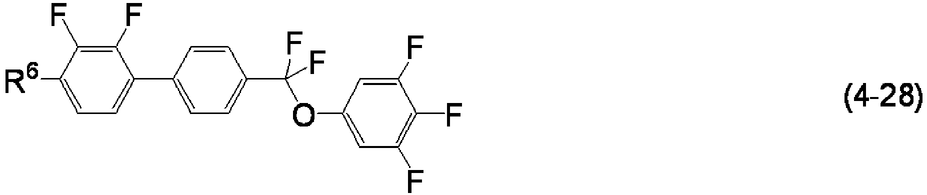 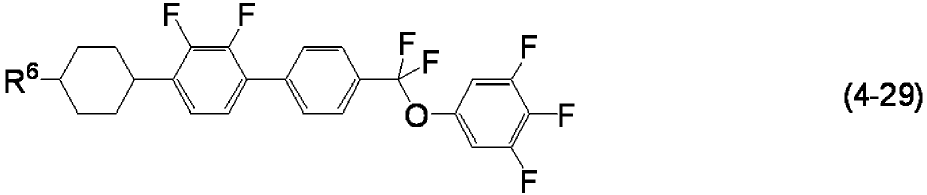 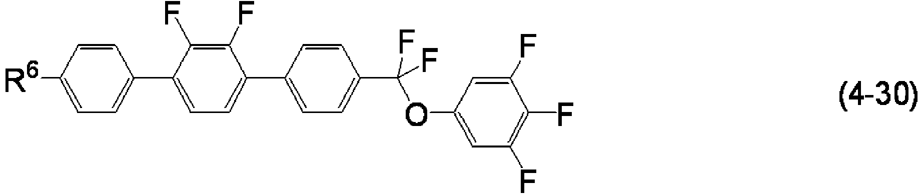 dans laquelle, dans les formules (4-1) à (4-30), R⁶ est un alkyle ayant 1 à 12 carbones, alcoxy ayant 1 à 12 carbones ou alcényle ayant 2 à 12 carbones.

9. Composition de cristaux liquides selon la revendication 7 ou 8, dans laquelle la proportion du quatrième composant est située dans la plage allant de 2 % en poids à 45 % en poids par rapport au poids de la composition de cristaux liquides.

10. Composition de cristaux liquides selon l'une quelconque des revendications 1 à 9, contenant au moins un composé choisi parmi les composés représentés par la formule (5) en tant que cinquième composant : 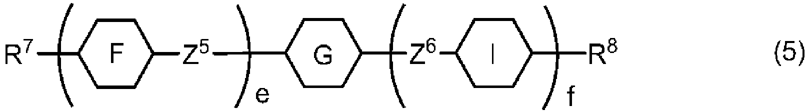 dans laquelle, dans la formule (5), R⁷ et R⁸ sont indépendamment un alkyle ayant 1 à 12 carbones, alcoxy ayant 1 à 12 carbones, alcényle ayant 2 à 12 carbones, ou alcényloxy ayant 2 à 12 carbones ; le cycle F et le cycle I sont indépendamment un 1,4-cyclohexylène, 1,4-cyclohexénylène, 1,4-phénylène, 1,4-phénylène dans lequel au moins un hydrogène est remplacé par un fluor ou chlore, ou tétrahydropyrane-2,5-diyle ; le cycle G est un 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle, ou 7,8-difluorochromane-2,6-diyle ; Z⁵ et Z⁶ sont indépendamment une liaison simple, un éthylène, carbonyloxy ou méthylène-oxy ; e vaut 1, 2 ou 3, f vaut 0 ou 1 ; et la somme de e et f vaut 3 ou moins.

11. Composition de cristaux liquides selon l'une quelconque des revendications 1 à 10, contenant au moins un composé choisi dans le groupe de composés représentés par les formules (5-1) à (5-22) en tant que cinquième composant : 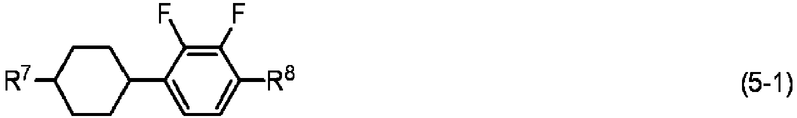 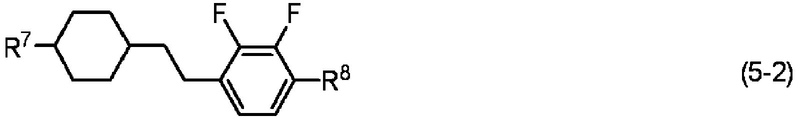 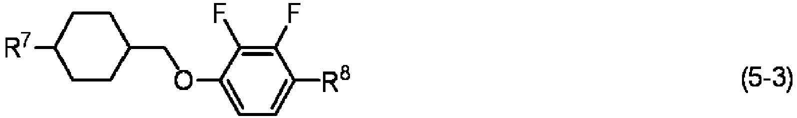 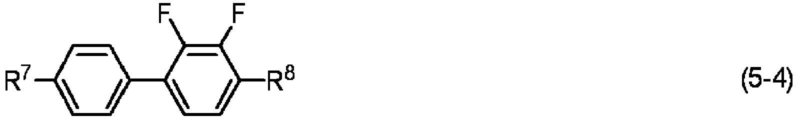 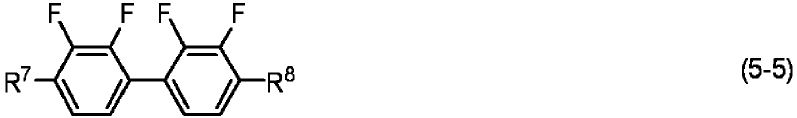 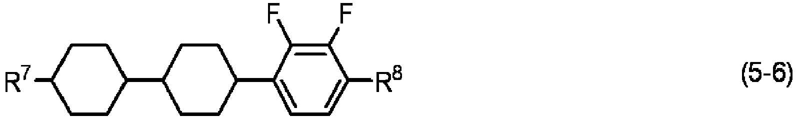 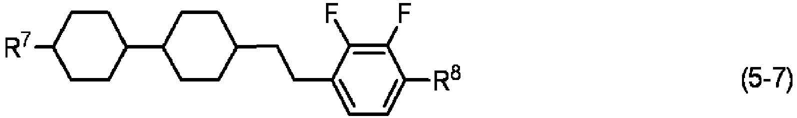 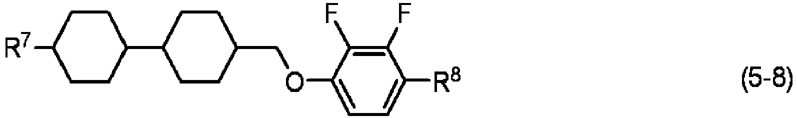 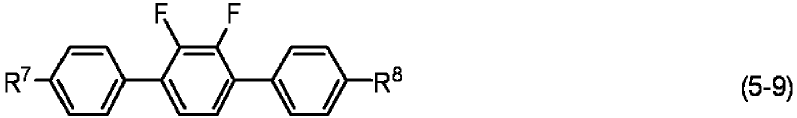 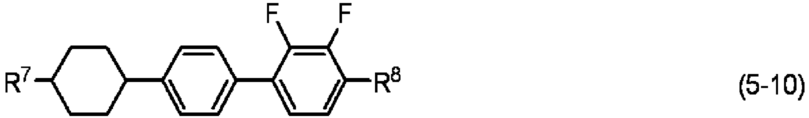 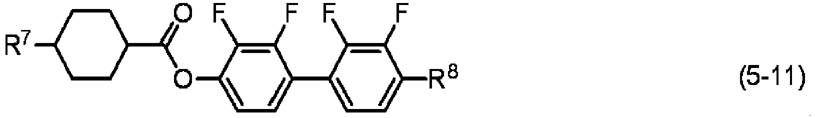 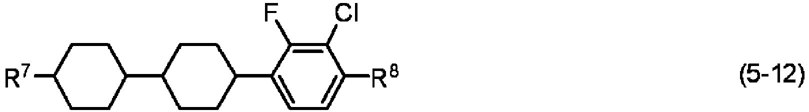 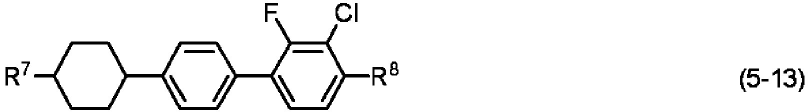 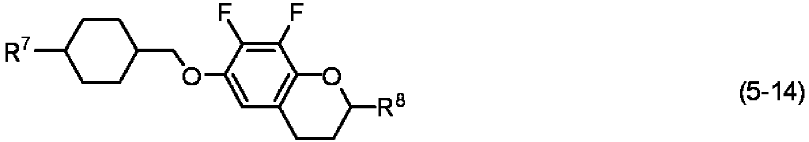 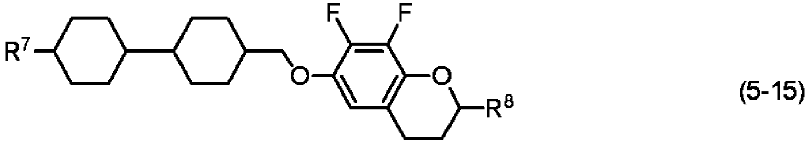 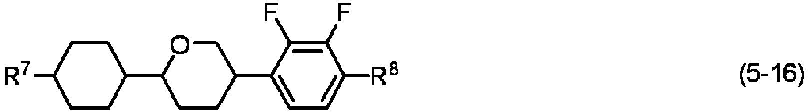 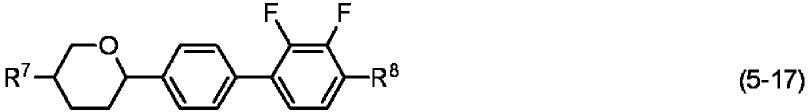 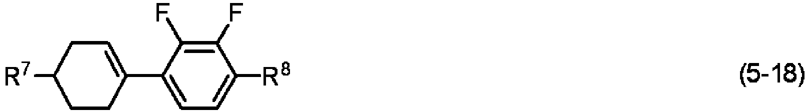 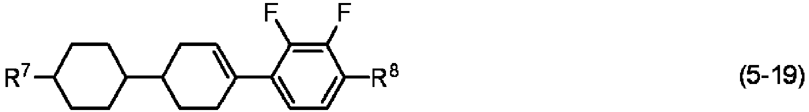 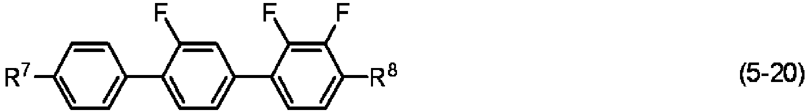 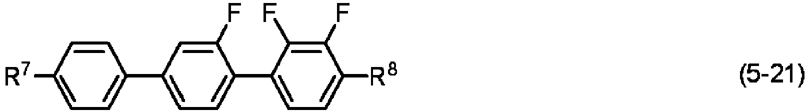 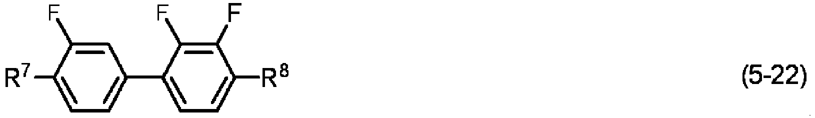 dans laquelle, dans les formules (5-1) à (5-22), R⁷ et R⁸ sont indépendamment un alkyle ayant 1 à 12 carbones, alcoxy ayant 1 à 12 carbones, alcényle ayant 2 à 12 carbones ou alcényloxy ayant 2 à 12 carbones.

12. Composition de cristaux liquides selon la revendication 10 ou 11, dans laquelle la proportion du cinquième composant est située dans la plage allant de 3 % en poids à 30 % en poids par rapport au poids de la composition de cristaux liquides.

13. Dispositif d'affichage à cristaux liquides comprenant la composition de cristaux liquides de l'une quelconque des revendications 1 à 13.

14. Dispositif d'affichage à cristaux liquides selon la revendication 14, dans lequel un mode de fonctionnement dans le dispositif d'affichage à cristaux liquides est un mode TN, un mode ECB, un mode OCB, un mode IPS, un mode FFS ou un mode FPA, et un mode de pilotage dans le dispositif d'affichage à cristaux liquides est un mode à matrice active.

15. Utilisation de la composition de cristaux liquides selon l'une quelconque des revendications 1 à 13 dans un dispositif d'affichage à cristaux liquides.
